(19)

Europäisches Patentamt

European Patent Office

Office européen des brevets

(11) **EP 4 020 015 A1**

(12) **EUROPEAN PATENT APPLICATION**
published in accordance with Art. 153(4) EPC

(43) Date of publication:
**29.06.2022 Bulletin 2022/26**

(21) Application number: **20854092.2**

(22) Date of filing: **21.07.2020**

(51) International Patent Classification (IPC):
*G01S 17/89* (2020.01)      *G01S 17/87* (2020.01)
*G01C 3/06* (2006.01)      *G06T 7/00* (2017.01)

(52) Cooperative Patent Classification (CPC):
**G01C 3/06; G01S 17/87; G01S 17/89; G06T 7/00**

(86) International application number:
**PCT/JP2020/028181**

(87) International publication number:
**WO 2021/033479 (25.02.2021 Gazette 2021/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2019 JP 2019150575**

(71) Applicant: **Panasonic Intellectual Property Management Co., Ltd.**
**Osaka-shi, Osaka 540-6207 (JP)**

(72) Inventors:
• **KATO, Yumiko**
**Osaka-shi, Osaka (JP)**
• **INADA, Yasuhisa**
**Osaka-shi, Osaka (JP)**
• **SUGIO, Toshiyasu**
**Osaka-shi, Osaka (JP)**
• **IGUCHI, Noritaka**
**Osaka-shi, Osaka (JP)**

(74) Representative: **Grünecker Patent- und Rechtsanwälte**
**PartG mbB**
**Leopoldstraße 4**
**80802 München (DE)**

(54) **DISTANCE MEASUREMENT APPARATUS, INFORMATION PROCESSING METHOD, AND INFORMATION PROCESSING DEVICE**

(57)      A distance measurement apparatus comprises a light emitter that emits light toward a scene, a light receiver that includes at least one light-receiving element and detects reflected light from the scene produced by the emission of light with the at least one light-receiving element, and a signal processing circuit that generates and outputs, for each frame, output data including measurement data indicating the positions or distances of a plurality of points in the scene on the basis of a signal outputted by the light receiver. The output data includes reference time data indicating a reference time determined for each frame and time difference data determined for each point, the time difference data indicating the difference from the reference time.

FIG. 4

EP 4 020 015 A1

**Description**

Technical Field

The present disclosure relates to a distance measurement apparatus, an information processing method, and an information processing apparatus.

Background Art

In the related art, various devices that scan a space with light and receive reflected light from an object to measure the distance to the object have been proposed. Distance information for the target scene may be converted into three-dimensional point cloud data and used, for example. Typically, point cloud data is data in which a distribution of points where an object exists in a scene is expressed by three-dimensional coordinates.

PTL 1 and 2 disclose systems that acquire information about the distance to an object by scanning a space with a light beam and detecting reflected light from the object with a light sensor. The systems generate and output information associated with the measurement time of each point in the point cloud data.

PTL 3 and 4 disclose apparatuses that acquire distance information by scanning a space with a light beam and receiving reflected light from the object with an image sensor.

Citation List

Patent Literature

PTL 1: Japanese Unexamined Patent Application Publication No. 2011-170599
PTL 2: Japanese Unexamined Patent Application Publication No. 2009-294128
PTL 3: Japanese Unexamined Patent Application Publication No. 2016-224062
PTL 4: U.S. Patent Application No. 2018/0217258

Summary of Invention

Technical Problem

The present disclosure provides a technology related to the acquisition and processing of distance data or a depth map. For example, one aspect of the present disclosure provides a technology that facilitates the integration of depth map data or point cloud data generated individually by a plurality of apparatuses. Also, another aspect of the present disclosure provides a technology that facilitates the integration of depth map data or point cloud data with other data.

Solution to Problem

A distance measurement apparatus according to one aspect of the present disclosure comprises a light emitter that emits a plurality of light beams toward a scene in different directions and at different timings, a light receiver that includes at least one light-receiving element and detects reflected light from the scene produced by the emission of the light beams with the at least one light-receiving element, and a signal processing circuit that generates and outputs, for each frame, output data including measurement data indicating the positions or distances of a plurality of points in the scene on the basis of a signal outputted by the light receiver. The output data includes reference time data indicating a reference time determined for each frame and time difference data determined for each point, the time difference data indicating the difference from the reference time. The number of light beams emitted in a period in which a single frame of output data is generated may be different for each frame.

An information processing apparatus according to another aspect of the present disclosure comprises a processor configured to: acquire first output data and second output data, the first output data including first measurement data indicating positions or distances of a plurality of points in a scene and also including reference time data indicating a reference time determined for each frame and time difference data determined for each point, the time difference data indicating a difference from the reference time, and the second output data including second measurement data indicating positions or distances of another plurality of points in the scene, with time data attached to the second measurement data for each of the other plurality of points; and generate three-dimensional point cloud data by respectively extracting, from the first output data and the second output data, the first measurement data for one or more points and the second measurement data for one or more points having time data included within a predetermined time range, and combining the extracted data into the same coordinate system.

An information processing apparatus according to yet another aspect of the present disclosure comprises a processor configured to: acquire light reception data detected at different timings by a light receiver including at least one light-receiving element; generate, for each frame, measurement data indicating positions or distances of a plurality of points in a scene on a basis of the light reception data; and generate and output output data including the measurement data, reference time data indicating a reference time determined for each frame, and time difference data determined for each point, the time difference data indicating a difference from the reference time. The number of light beams emitted in a period in which a single frame of output data is generated may be different for each frame.

Note that these general or specific aspects of the present disclosure may also be realized by a system, an apparatus, a method, an integrated circuit, a computer program, a computer-readable recording medium such as a recording disk, or any selective combination thereof. Computer-readable recording media include volatile recording media as well as non-volatile recording media such as Compact Disc - Read-Only Memory (CD-ROM). An apparatus may also include one or more apparatuses. In the case where an apparatus includes two or more apparatuses, the two or more apparatuses may be disposed inside a single piece of equipment or disposed separately in two or more discrete pieces of equipment. In the specification and claims herein, an "apparatus" may not only refer to a single apparatus, but also to a system including a plurality of apparatuses.

Advantageous Effects of Invention

According to an aspect of the present disclosure, the integration of data including depth map data or point cloud data is facilitated.

Additional benefits and advantages of the various embodiments included in the present disclosure will become apparent from the specification and drawings. The benefits and/or advantages may be individually obtained by the various embodiments or the features of a portion of the embodiments disclosed in the specification and drawings, which need not all be provided in order to obtain one or more of such benefits and/or advantages.

Brief Description of Drawings

[Fig. 1] Fig. 1 is a conceptual diagram schematically illustrating an example of a system including a server that monitors the traffic conditions of a road.

[Fig. 2] Fig. 2 is a block diagram illustrating a more detailed example of the configuration of the system illustrated in Fig. 1.

[Fig. 3] Fig. 3 is a diagram illustrating a simplified example of operations by a server, moving bodies, and stationary objects as well as the flow of data.

[Fig. 4] Fig. 4 is a block diagram illustrating a configuration of a distance measurement apparatus according to Embodiment 1.

[Fig. 5] Fig. 5 is a diagram schematically illustrating how a scene targeted for distance measurement is scanned by light beams.

[Fig. 6A] Fig. 6A is a diagram illustrating an example of data recorded to a recording medium.

[Fig. 6B] Fig. 6B is a diagram illustrating an example of data recorded to a recording medium.

[Fig. 6C] Fig. 6C is a diagram illustrating an example of data recorded to a recording medium.

[Fig. 6D] Fig. 6D is a diagram illustrating an example of data recorded to a recording medium.

[Fig. 7A] Fig. 7A is a diagram illustrating an example of a data format of point cloud data.

[Fig. 7B] Fig. 7B is a diagram illustrating another example of a data format of point cloud data.

[Fig. 7C] Fig. 7C is a diagram illustrating an example of a data format of depth map data.

[Fig. 7D] Fig. 7D is a diagram illustrating another example of a data format of depth map data.

[Fig. 8] Fig. 8 is a perspective view schematically illustrating an example of a light emitter.

[Fig. 9] Fig. 9 is a diagram schematically illustrating an example of the cross-sectional structure of a single optical waveguide element and propagated light.

[Fig. 10A] Fig. 10A is a diagram illustrating a cross section of an optical waveguide array that emits light in a direction perpendicular to the emission surface of the optical waveguide array.

[Fig. 10B] Fig. 10B is a diagram illustrating a cross section of an optical waveguide array that emits light in a direction different from the direction perpendicular to the emission surface of the optical waveguide array.

[Fig. 11] Fig. 11 is a perspective view schematically illustrating an optical waveguide array in a three-dimensional space.

[Fig. 12] Fig. 12 is a schematic diagram of an optical waveguide array and a phase shifter array as viewed from the normal direction of the light emission surface.

[Fig. 13] Fig. 13 is a diagram illustrating another example of a beam scanner.

[Fig. 14] Fig. 14 is a diagram illustrating yet another example of the configuration of a beam scanner.

[Fig. 15] Fig. 15 is a diagram illustrating yet another example of the configuration of a beam scanner.

[Fig. 16] Fig. 16 is a diagram illustrating yet another example of a beam scanner.

[Fig. 17A] Fig. 17A is a first diagram for explaining a distance measurement method by indirect ToF.

[Fig. 17B] Fig. 17B is a second diagram for explaining a distance measurement method by indirect ToF.

[Fig. 18A] Fig. 18A is a third diagram for explaining a distance measurement method by indirect ToF.

[Fig. 18B] Fig. 18B is a fourth diagram for explaining a distance measurement method by indirect ToF.

[Fig. 19] Fig. 19 is a flowchart illustrating an example of operations by a distance measurement apparatus.

[Fig. 20A] Fig. 20A is a diagram illustrating an example of a file format of point cloud data.

[Fig. 20B] Fig. 20B is a diagram illustrating another example of point cloud data.

[Fig. 21] Fig. 21 is a flowchart illustrating an example of operations according to a modification of Embodiment 1.

[Fig. 22] Fig. 22 is a diagram illustrating an example of data recorded to a recording medium.

[Fig. 23] Fig. 23 is a diagram illustrating another example of data recorded to a recording medium.

[Fig. 24A] Fig. 24A is a diagram illustrating another example of a data format of point cloud data.

[Fig. 24B] Fig. 24B is a diagram illustrating yet another example of a data format of point cloud data.

[Fig. 24C] Fig. 24C is a diagram illustrating another example of a data format of depth map data.

[Fig. 24D] Fig. 24D is a diagram illustrating yet another example of a data format of depth map data.

[Fig. 25] Fig. 25 is a diagram illustrating an example of a file format of point cloud data.

[Fig. 26] Fig. 26 is a block diagram illustrating a detailed functional configuration of a distance measurement unit in a signal processing circuit according to Embodiment 2.

[Fig. 27] Fig. 27 is a diagram illustrating an example of information recorded in Embodiment 2.

[Fig. 28] Fig. 28 is a diagram illustrating an example of information recorded in Embodiment 2.

[Fig. 29] Fig. 29 is a flowchart illustrating an example of operations by a distance measurement apparatus in Embodiment 2.

[Fig. 30A] Fig. 30A is a diagram illustrating an example of a data format of point cloud data according to Embodiment 2.

[Fig. 30B] Fig. 30B is a diagram illustrating another example of a data format of point cloud data according to Embodiment 2.

[Fig. 30C] Fig. 30C is a diagram illustrating an example of a data format of depth map data according to Embodiment 2.

[Fig. 30D] Fig. 30D is a diagram illustrating another example of a data format of depth map data according to Embodiment 2.

[Fig. 31A] Fig. 31A is a diagram illustrating an example of a file format of output data according to Embodiment 2.

[Fig. 31B] Fig. 31B is a diagram illustrating another example of an output data format according to Embodiment 2.

[Fig. 32] Fig. 32 is a flowchart illustrating details of the operations of step S3110 in Fig. 29.

[Fig. 33] Fig. 33 is a schematic diagram illustrating the relationship between the direction of a light beam, the position of an object, and the incident position of reflected light on the light-receiving surface of an image sensor.

[Fig. 34A] Fig. 34A is a first diagram for explaining a block determination method.

[Fig. 34B] Fig. 34B is a second diagram for explaining a block determination method.

[Fig. 34C] Fig. 34C is a third diagram for explaining a block determination method.

[Fig. 34D] Fig. 34D is a fourth diagram for explaining a block determination method.

[Fig. 35A] Fig. 35A is a fifth diagram for explaining a block determination method.

[Fig. 35B] Fig. 35B is a sixth diagram for explaining a block determination method.

[Fig. 36] Fig. 36 is a block diagram illustrating a configuration of a vehicle control system according to Embodiment 3.

[Fig. 37A] Fig. 37A is a diagram illustrating an example of a data format of an output data sequence according to Embodiment 3.

[Fig. 37B] Fig. 37B is a diagram illustrating another example of a data format of an output data sequence according to Embodiment 3.

Description of Embodiments

In the present disclosure, all or part of the circuits, units, devices, members, or sections, or all or part of the function blocks in the block diagrams, may also be executed by one or multiple electronic circuits, including a semiconductor device, a semiconductor integrated circuit (IC), or a large-scale integration (LSI) chip, for example. An LSI chip or IC may be integrated into a single chip, or may be configured by combining multiple chips. For example, function blocks other than memory elements may be integrated into a single chip. Although referred to as an LSI chip or IC herein, such electronic circuits may also be called a system LSI chip, a very large-scale integration (VLSI) chip, or an ultra-large-scale integration (ULSI) chip, depending on the degree of integration. A field-programmable gate array (FPGA) programmed after fabrication of the LSI chip, or a reconfigurable logic device in which interconnection relationships inside the LSI chip may be reconfigured or in which circuit demarcations inside the LSI chip may be set up, may also be used for the same purpose.

Furthermore, the function or operation of all or part of a circuit, unit, device, member, or section may also be executed by software processing. In this case, the software is recorded onto a non-transitory recording medium, such as one or multiple ROM modules, optical discs, or hard disk drives, and when the software is executed by a processor, the function specified by the software is executed by the processor and peripheral devices. A system or device may also be provided with one or multiple non-transitory recording media on which the software is recorded, a processor, and necessary hardware devices, such as an interface, for example.

<Example of configuration to which embodiments described later may be applied>

Before describing the embodiments of the present disclosure in detail, an example of a configuration to which the embodiments described later may be applied will be described.

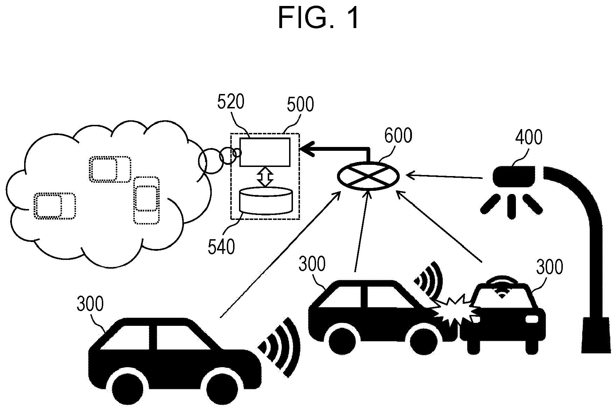

Fig. 1 is a conceptual diagram schematically illustrating an example of a system including a server 500 that monitors the traffic conditions of a road. The server 500 is connected, over a network 600, to a distance measurement apparatus installed onboard moving bodies 300 such as vehicles and also to a distance measurement apparatus attached to a stationary object 400 such as a traffic signal. The stationary object 400 may also be a stationary object other than a traffic signal, including public property or other infrastructure such as lighting equipment, a utility pole, or a guard rail, for example. Each distance measurement apparatus is provided with a light source and a light sensor, and successively generates and outputs sensor data including distance information. The sensor data is data indicating a depth map or a three-dimensional point cloud, for example. In the following description, a three-dimensional point cloud is simply referred to as a "point cloud" unless specifically indicated otherwise. Note that herein, the distance measurement apparatuses provided in the moving bodies 300 and the stationary object 400 are described as distance measurement apparatuses provided with a light source and a light sensor, but some or all of the distance measurement apparatuses may also measure distance by some other method. For example, the distance measurement apparatuses may also measure distance by using radio waves such as millimeter waves, or measure distance by using a two-dimensional image acquired by one or multiple cameras.

The server 500 acquires data indicating the position and attitude of the distance measurement apparatus and sensor data from each moving body 300 and each stationary object 400. The server 500 is provided with a processor 520 and a recording medium 540. The processor 520 successively combines the sensor data acquired from each of the distance measurement apparatuses to generate data indicating the road environment, and records the generated data to the recording medium 540. The processor 520 generates point cloud data expressed in a three-dimensional coordinate system specific to the server 500, for example. Such data may be used for the purpose of investigating the cause of an accident when an accident occurs, for example.

Note that in the above example, the server 500 acquires data indicating the position and attitude of the distance measurement apparatus and sensor data from the moving bodies 300 and the stationary object 400, but the data to be acquired may also be the sensor data only. In this case, for example, the server 500 estimates the position and attitude of each distance measurement apparatus by using the sensor data acquired from each distance measurement apparatus.

Also, in the above example, the point cloud data generated by the server 500 is expressed in a coordinate system specific to the server 500, but the coordinate system of the point cloud data generated by the server 500 does not need to be specific to the server 500. For example, it may be possible to designate the coordinate system of the point cloud to the server 500 from an external source, and the coordinate system of the point cloud data may be aligned with the coordinate system of three-dimensional map data used by the server 500.

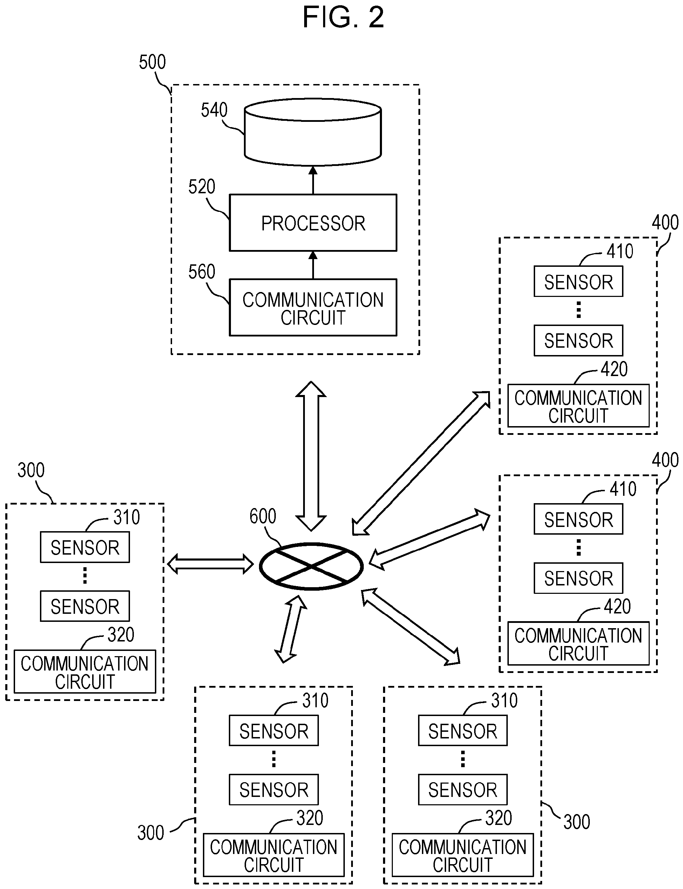

Fig. 2 is a block diagram illustrating a more detailed example of the configuration of the above system. The system in this example includes a plurality of moving bodies 300 and a plurality of stationary objects 400. There may be any number of moving bodies 300 and any number of stationary objects 400.

Each moving body 300 is provided with a plurality of distance measurement sensors 310 disposed at different positions and attitudes, and a communication circuit 320. Similarly, each stationary object 400 is provided with a plurality of distance measurement sensors 410 disposed at different positions and attitudes, and a communication circuit 420. Each of the distance measurement sensors 310 and 410 measures distance and generates sensor data expressing a depth map or a three-dimensional point cloud. The sensor data is transmitted to the server 500 by the communication circuit 320 or 420.

The server 500 is provided with a communication circuit 560 in addition to the processor 520 and the recording medium 540. The processor 520 successively acquires sensor data through the communication circuit 560, and records the sensor data to the recording medium 540. By performing appropriate processing such as time adjustment and coordinate conversion on the acquired sensor data, the processor 520 can generate combined point cloud data for a specific time and a specific place.

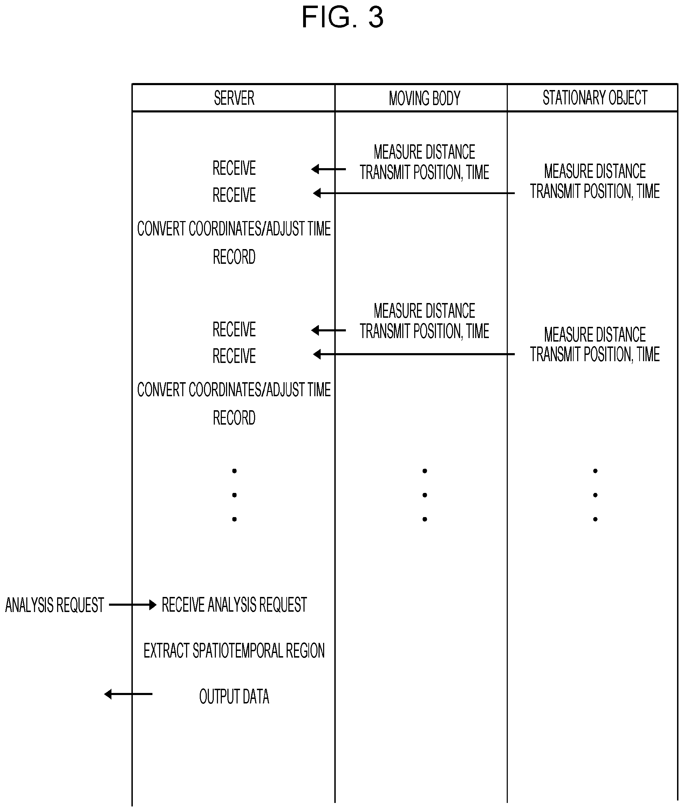

Fig. 3 is a diagram illustrating a simplified example of operations by the server 500, the moving bodies 300, and the stationary objects 400 as well as the flow of data. For simplicity, in Fig. 3 the plurality of moving bodies 300 are collectively represented as a single moving body, and the plurality of stationary objects 400 are collectively represented as a single moving body. Each of the distance measurement sensors 310 and 410 in each of the moving bodies 300 and the stationary objects 400 measures distance repeatedly and successively generates data including the position of an object in a scene and time information. The data is sent to the server 500. The server 500 performs appropriate processing such as time adjustment and coordinate conversion on the acquired data, and records the data to the recording medium 540. Such operations are repeated at fixed intervals, for example.

The server 500 may receive, from an external source, an instruction requesting the analysis of the road environment at a specific date and time and a specific place. In this case, the processor 520 acquires data for the specific date, time, and place from the recording medium 540, and generates and outputs data according to the request. Through such operations, data useful for revealing the cause of an accident can be acquired, for example.

In a system like the above, it is important to accurately record the time when the data at each position was acquired to generate accurate road environment data by combining successively generated sensor data. In particular, ascertaining the accurate position and movement speed of an object at a specific time and a specific place to reveal the cause of a vehicular accident demands three-dimensional position data of the scene of the accident and accurate time information indicating when each piece of position data was acquired.

To acquire information about a distance distribution of a target scene, it is conceivable to use a distance measurement apparatus that scans the scene with a light beam and detects reflected light with a light receiver such as an image sensor. As described later, by applying time of flight (ToF) technology, the distance to an object irradiated by a light beam can be measured. By measuring the distance while scanning the scene with a light beam, depth map data or point cloud data converted from depth map data can be generated. In the present disclosure, a single collection of depth map data or point cloud data may be referred to as a "frame". The above corresponds to a "frame" as a unit of image data outputted from an image sensor in some cases, but is different in other cases. The depth map data or point cloud data is repeatedly generated at a fixed frame rate, for example. It is also possible to output a frame of depth map data or point cloud data in association with a certain time.

For example, an automobile traveling at a speed of 60 kilometers (km) per hour moves approximately 1.66 centimeters (cm) per millisecond (ms). A typical video image has a frame rate of 30 fps, that is, 30 frames per second. In other words, one frame is acquired every 33 ms. A vehicle traveling at 60 km/h moves approximately 55 cm in 33 ms. Consequently, there is a possibility of being unable to clarify the positional relationships among a plurality of moving objects such as vehicles, pedestrians, or bicycles with the time information for a single frame.

A distance measurement sensor that acquires distance information by using an image sensor is used for short-range three-dimensional measurement performed using a flash, for example. On the other hand, a method of emitting a light beam with a narrow beam diameter to detect reflected light from an object also exists. Such a method is suited to the acquisition of long-range distance information exceeding 100 m. With a distance measurement sensor like the above, the difference between the light projection timing and the light reception timing can be used to measure distance.

Herein, as an example, the case of scanning a scene with a light beam of narrow beam diameter and detecting reflected light with an image sensor is assumed. The light beam emitted in the state of a narrow beam diameter only reaches an object positioned in a limited range within the scene. Consequently, the image sensor receives reflected light from only the object positioned in a narrow range every time a single light beam is emitted. In other words, reflected light is received by only the portion of light-receiving elements positioned in the range corresponding to the position of the object from among a plurality of light-receiving elements provided in the image sensor. By performing a scan operation that detects reflected light while successively changing the direction of the light beam, distance information for the entire range detectable by the image sensor can be obtained. With such a configuration, the timing when the light beam is emitted is different depending on the direction. In a configuration in which a single depth map is generated every time a single scan is completed, the timing of light reception is different depending on the portion of the depth map. For example, in the case of a depth map outputted at 30 fps, a difference of up to approximately 30 ms may occur depending on the pixel.

In this way, the times of distance measurement are different depending on the portion of the depth map or the point cloud, even within the same frame. For this reason, in the case where data collected from a plurality of distance measurement sensors is combined on the basis of frame times, there is a possibility that the position information for the same object will be different between sensors, even if data from frames with the same times are used. Because of these discrepancies in the position information, there is a possibility that the position information may not be combined with sufficient accuracy.

On the other hand, a method of recording precise time information for every pixel in depth map data or for every point in point cloud data is also conceivable. With such a method, the problem described above can be avoided. However, attaching precise time information to every pixel in depth map data or every point in point cloud data creates an enormous amount of data, which necessitates an extremely high-speed communication network as well as a high-performance computational processor.

Hereinafter, an overview of embodiments of the present disclosure will be described.

A distance measurement apparatus according to an exemplary embodiment of the present disclosure is provided with a light emitter, a light receiver, and a signal processing circuit. The light emitter emits a plurality of light beams toward a scene in different directions and at different timings. The light receiver includes at least one light-receiving element, and detects reflected light from the scene produced by the emission of each light beam with the at least one light-receiving element. The signal processing circuit generates and outputs, for each frame, output data including measurement data indicating positions or distances of a plurality of points in the scene on a basis of a signal outputted by the light receiver. The output data includes reference time data indicating a reference time determined for each frame and time difference data determined for each point, the time difference data indicating the difference from the reference time. The number of light beams emitted in a period in which a single frame of output data is generated may be different for each frame.

According to the above configuration, the output data for each frame includes reference time data and time difference data determined for each point. The time difference data is smaller in size than the reference time data. For example, the reference time data may include a unit value for each of the hour, minute, second, millisecond, and microsecond. In contrast, the time difference data may only include a value in units of microseconds, for example. If the reference time data is expressed with a data size of 5 bytes for example, the reference time data may be expressed with a data size of 1 byte for example. Note that the reference time data and the time difference data is not limited to units of microseconds, and may also be data in units of nanoseconds or milliseconds, for example. By recording the difference from the reference time for each point in each frame, the size of the output data can be greatly reduced compared to the case of recording a precise time for each point. In some cases, each frame may contain a large number of points ranging from several thousand to several million, for example. If a precise time is attached to each point, the data size will be enormous. By attaching a time difference with a small data size like in the present embodiment, the size of the output data for each frame can be reduced greatly. This arrangement makes it possible to combine data without using an extremely high-speed communication network and a high-performance computational processor.

The time difference data for each point may indicate the difference between the reference time and a time at which a light beam used to acquire the measurement data for the point was emitted or a time at which a light beam was detected. However, the time difference data is not limited to such an example, and may also indicate the difference between the reference time and any time associated with the measurement time of the point.

The light emitter may also be configured to emit a plurality of light beams toward a scene in different directions and at different timings. The light receiver may also include an array of a plurality of light-receiving elements. The light receiver may also be configured to detect reflected light from the scene produced by the emission of each light beam with the plurality of light-receiving elements.

According to the above configuration, more distant distance information can be acquired by scanning the scene with a plurality of light beams.

The output data may also include the data of a plurality of blocks, each of which includes the measurement data of a subset of points from among the plurality of points. The individual time difference data for each block indicating the difference from the reference time may also be recorded as the time difference data for each point in the block.

According to the above configuration, because time difference data is recorded only once for each block, the size of the output data can be reduced further. Blocks are prescribed for respective groups of light-receiving elements that receive reflected light based on light beams emitted in a single direction, for example. In the case where the emission time is different depending on the light beam, the detection time will be different for each group of light-receiving elements receiving the reflected light therefrom. Consequently, in the above configuration, blocks are prescribed for respective groups of light-receiving elements, and a differential time is calculated and recorded for each block. With this arrangement, the data size can be reduced to a fraction of the data size in the case where a differential time is recorded individually for each point.

Note that even in the case where time difference data is recorded for each block, the time difference data may be considered to be determined for each point associated with the block. Consequently, in such a case, the output data is still interpreted as including time difference data determined for each point.

The reference time of each frame may be a time when a first light beam was emitted from among the plurality of light beams emitted to acquire the measurement data for the frame. The reference time is not limited to the above, and may also be set to another time.

The time difference data for each point may also indicate a difference between an emission time of a light beam emitted to acquire measurement data for the point and an emission time of a light beam emitted to acquire the measurement data for another preceding point for which measurement data was acquired.

The light emitter may also be configured to emit the plurality of light beams on a fixed time interval. The reference time of each frame may also be set to an emission time of the light beam emitted first to acquire the measurement data for the frame. The time difference data for each point in the frame may also include data indicating an order of light beams emitted to acquire the measurement data for the point and data indicating the time interval of the plurality of light beams.

According to the above configuration, the time difference data includes data indicating the order of light beams and the emission time interval of the light beams rather than the time difference itself. With such a configuration, the time difference for each point likewise can be expressed with a small data size.

The signal processing circuit may generate depth map data expressing a distance distribution of the plurality of points as the output data. In this case, the output data expresses the distances of the plurality of points in the scene. The distance to each point may be measured by a distance measurement technology such as time of flight (ToF), for example. ToF includes methods such as a direct ToF method and an indirect ToF method. The distance may be measured by either method.

The signal processing circuit may generate point cloud data including information about three-dimensional coordinates of the plurality of points as the output data. In this case, the output data expresses the positions of the plurality of points in the scene as three-dimensional coordinates. The point cloud data may be generated by converting from the above depth map data, for example.

An information processing method according to another embodiment of the present disclosure includes the following steps.

- Acquire first output data and second output data, the first output data including first measurement data indicating positions or distances of a plurality of points in a scene and also including reference time data indicating a reference time determined for each frame and time difference data determined for each point, the time difference data indicating a difference from the reference time, and the second output data including second measurement data indicating positions or distances of another plurality of points in the scene, with time data attached to the second measurement data for each of the other plurality of points.
- Generate three-dimensional point cloud data by respectively extracting, from the first output data and the second output data, the first measurement data for one or more points and the second measurement data for one or more points having time data included within a predetermined time range, and combining the extracted data into the same coordinate system.

According to the above method, three-dimensional point cloud data can be generated by combining the independently generated first output data and second output data. Because at least the first output data includes the above time difference data, the data can be combined more efficiently.

An information processing apparatus according to yet another embodiment of the present disclosure comprises a processor. The processor executes the following steps.

- Acquire first output data and second output data, the first output data including first measurement data indicating positions or distances of a plurality of points in a scene and also including reference time data indicating a reference time determined for each frame and time difference data determined for each point, the time difference data indicating a difference from the reference time, and the second output data including second measurement data indicating positions or distances of another plurality of points in the scene, with time data attached to the second measurement data for each of the other plurality of points.
- Generate three-dimensional point cloud data by respectively extracting, from the first output data and the second output data, the first measurement data for one or more points and the second measurement data for one or more points having time data included within a predetermined time range, and combining the extracted data into the same coordinate system.

An information processing apparatus according to yet another embodiment of the present disclosure comprises a processor. The processor executes the following steps.

- Acquire light reception data detected at different timings by a light receiver including at least one light-receiving element.
- Generate, for each frame, measurement data indicating positions or distances of a plurality of points in a scene on a basis of the light reception data.
- Generate and output output data including the measurement data, reference time data indicating a reference time determined for each frame, and time difference data determined for each point, the time difference data indicating a difference from the reference time. The number of light beams emitted in a period in which a single frame of output data is generated may be different for each frame.

Hereinafter, embodiments of the present disclosure will be described more specifically. Note that the embodiments described hereinafter all illustrate general or specific examples. Features such as numerical values, shapes, structural elements, placement and connection states of structural elements, steps, and the ordering of steps indicated in the following embodiments are merely examples, and are not intended to limit the present disclosure. In addition, among the structural elements in the following embodiments, structural elements that are not described in the independent claim indicating the broadest concept are described as arbitrary or optional structural elements. Also, each diagram is a schematic diagram, and does not necessarily illustrate a strict representation. Furthermore, in the drawings, structural elements that are substantially the same are denoted with the same signs, and duplicate description of such structural elements may be reduced or omitted in some cases.

<Embodiment 1>

A distance measurement apparatus according to Embodiment 1 will be described. In the present embodiment, a beam scanner capable of varying the emission direction of a light beam is used as a light emitter. Also, an image sensor in which a plurality of light-receiving elements are arranged two-dimensionally is used as a light receiver. In addition to the above, the distance measurement apparatus is provided with a signal processing circuit that processes signals outputted from the image sensor and a control circuit that controls overall operations by the distance measurement apparatus. The signal processing circuit generates and outputs, for each frame, output data including measurement data indicating positions or distances of a plurality of points in a scene on the basis of a signal outputted by the image sensor. The signal processing circuit attaches reference time data indicating a reference time determined for each frame and time difference data determined for every point in each frame to the measurement data, and outputs the measurement data. Such a configuration makes it possible to greatly reduce the size of the output data compared to the case where precise time data is attached to each point. Hereinafter, an example of the configuration and operations of the distance measurement apparatus according to the present embodiment will be described in detail.

[1-1. Configuration]

[1-1-1. Configuration of distance measurement apparatus]

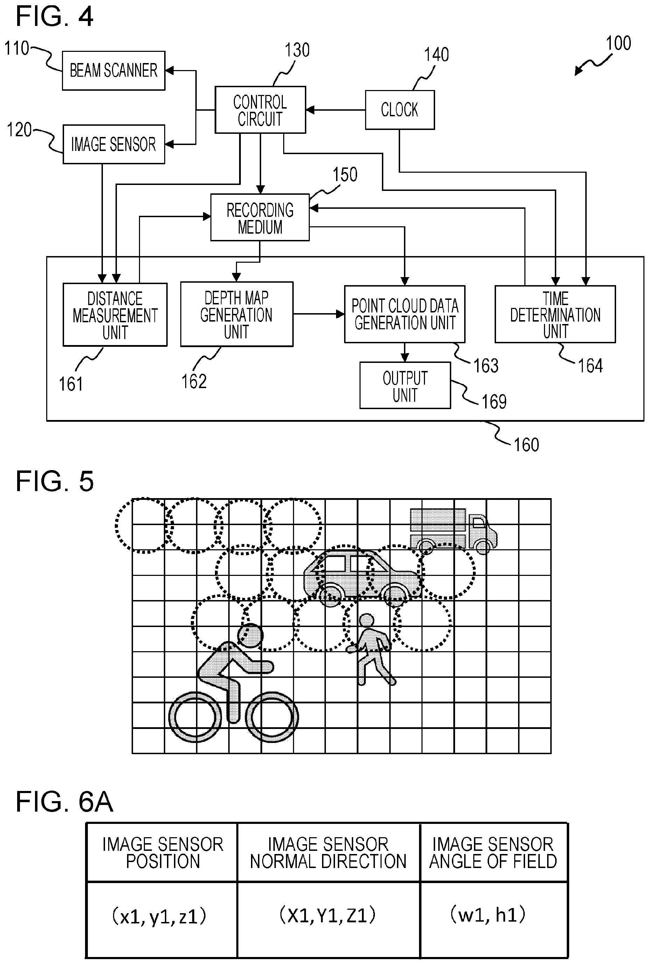

Fig. 4 is a block diagram illustrating a configuration of a distance measurement apparatus 100 according to Embodiment 1. As illustrated in Fig. 4, the distance measurement apparatus 100 is provided with a beam scanner 110, an image sensor 120, a control circuit 130, a clock 140, a recording medium 150, and a signal processing circuit 160. The signal processing circuit 160 includes a distance measurement unit 161, a depth map generation unit 162, a point cloud data generation unit 163, a time determination unit 164, and an output unit 169.

The beam scanner 110 is a type of light emitter that emits a light beam. The beam scanner 110 includes a laser light source, for example. The beam scanner 110 emits a light beam in a designated direction in response to an instruction from the control circuit 130. In one example, the beam scanner 110 repeats an operation of scanning a target scene with a light beam. In another example, the beam scanner 110 performs an operation of scanning a specific region in a target scene in response to a predetermined trigger. The beam scanner 110 executes a single scan within a predetermined length of time. This length of time may be referred to as the "frame time". The beam scanner 110 successively emits a plurality of light beams in different directions within the frame time. The frame time of each frame and the number of emitted light beams are not necessarily the same, and may be different for each frame in some cases.

The image sensor 120 is a type of light receiver, and is provided with an array of a plurality of light-receiving elements arranged two-dimensionally on a light-receiving surface. An optical component such as a lens that forms an image on the light-receiving surface of the image sensor 120 may also be provided. The image sensor 120 receives reflected light from an object positioned on the path of an emitted light beam. Each light-receiving element is a photoelectric transducer such as a photodiode, and stores a quantity of charge according to the intensity of the received light. In the following description, the light-receiving elements may be referred to as "pixels". In response to an instruction from the control circuit 130, the image sensor 120 causes each light-receiving element to store charge, and outputs an electrical signal corresponding to the quantity of stored charge. Only a portion of all light-receiving elements receives the reflected light of a single light beam. Light beams are emitted repeatedly in different directions, and every time a light beam is emitted, reflected light is detected by a different group of light-receiving elements. The pattern and order of the light beam emission directions are preset. By detecting the reflected light beams produced due to the emission of a preset series of light beams, the image sensor 120 generates the data of a single frame. In the present embodiment, the image sensor 120 outputs data for all pixels as the data of a single frame at the stage when the scanning by light beams is completed for an entire scene detectable by the image sensor 120. The image sensor 120 outputs 30 frames per second, for example. This frame rate is merely an example, and the frame rate is set appropriately according to the application.

Note that in the present embodiment, data is outputted at the stage when the scanning by light beams is completed for an entire scene detectable by the image sensor 120, but the image sensor 120 may also output data obtained by emitting a light beam in a direction corresponding to the region of a portion of the pixels. In this case, the image sensor 120 may output the data obtained from all pixels or output only the data obtained from the portion of the pixels.

The control circuit 130 may be achieved by an electronic circuit including a processor, such as a microcontroller unit (MCU) for example. The control circuit 130 determines the emission timing and emission direction of light beams by the beam scanner 110, as well as the exposure timing of the image sensor 120. The control circuit 130 outputs a projection control signal and an exposure control signal to the beam scanner 110 and the image sensor 120, respectively, in accordance with the determined timings. The projection control signal is generated such that light beams are emitted successively in predetermined directions and in a predetermined order.

Fig. 5 is a diagram schematically illustrating how a scene targeted for distance measurement is scanned by light beams. In Fig. 5, the spots of a plurality of light beams are illustrated as dotted-line circles, but the number of light beams emitted at the same time may be any number equal to or greater than 1.

In the present embodiment, light beams are successively emitted to comprehensively irradiate a two-dimensional plane parallel to the light-receiving surface of the image sensor 120. The control circuit 130 records information indicating the projection direction and projection timing of the light beams to the recording medium 150. Note that the scanning by light beams may be configured in any way. The gridlines in Fig. 5 represent the pixels of the image sensor 120. Note that the pixels of the image sensor 120 are actually finer, but are illustrated more roughly than the actual pixels in Fig. 5 for legibility. The same also applies to the drawings referenced hereinafter.

The clock 140 is a circuit that outputs precise time information necessary for the control of the beam scan. The clock 140 measures time with nanosecond or microsecond precision for example, and outputs information about the time. The clock 140 may be achieved by an integrated circuit such as a real-time clock, for example. The clock 140 may also be synchronized with a time server. For the synchronization, a protocol such as the Network Time Protocol (NTP) or the Precision Time Protocol (PTP) may be used, for example. Alternatively, GPS information may be used to synchronize the time based on the time of a server as a reference. Note that the method of time synchronization is not limited to the above, and any method may be used. Through time synchronization, the distance measurement apparatus 100 acting as a client can acquire accurate time information.

The control circuit 130 records the precise time (in units of nanoseconds or microseconds, for example) measured by the clock 140 at the timing of the emission of each light beam by the beam scanner 110 to the recording medium 150. The control circuit 130 may also record the time at which reflected light of each light beam is detected by a light-receiving element to the recording medium 150.

The signal processing circuit 160 is an electronic circuit including a processor such as a CPU and/or a GPU, for example. The functions of the distance measurement unit 161, the depth map generation unit 162, the point cloud data generation unit 163, the time determination unit 164, and the output unit 169 in the signal processing circuit 160 may be achieved by having the processor of the signal processing circuit 160 execute a program stored in the recording medium 150, for example. In this case, the processor functions as distance measurement unit 161, the depth map generation unit 162, the point cloud data generation unit 163, the time determination unit 164, and the output unit 169. Each of these function units may also be achieved by special-purpose hardware. Note that the control circuit 130 and the signal processing circuit 160 may also be achieved by a single circuit. For example, a single MCU may include the functions of both the control circuit 130 and the signal processing circuit 160. The recording medium 150 may also be included in the circuit.

The time determination unit 164 in the signal processing circuit 160 determines a reference time for each frame, and records the determined reference time to the recording medium 150. The reference time may be set to the time when the first of a plurality of light beams emitted to acquire the measurement data for the frame is emitted, for example. The time determination unit 164 records the difference between the time when each light beam emitted to acquire the measurement data for each pixel was emitted and the reference time of the frame to the recording medium 150. Note that the reference time is not limited to the emission time of the first light beam. For example, a time such as the emission time of the last light beam or the average of the light beam emission times may also be set as the reference time. Alternatively, a time such as the time when any light beam is received by the image sensor 120 or an average of the reception times may be set as the reference time.

The recording medium 150 may be memory such as ROM or RAM, for example. The recording medium 150 records various data generated by the control circuit 130 and the signal processing circuit 160. Furthermore, the recording medium 150 may also store computer programs executed by the control circuit 130 and the signal processing circuit 160.

The recording medium 150 records data indicating the projection direction and projection timing of the light beams outputted from the control circuit 130 and data indicating the emission timing of each light beam. Additionally, the recording medium 150 also records various data generated by the signal processing circuit 160. For example, the recording medium 150 records distance data for each pixel calculated by the distance measurement unit 161. In the present embodiment, data indicating the reference time of each frame and data indicating the time difference for each pixel, which are determined by the time determination unit 164, are also recorded to the recording medium 150.

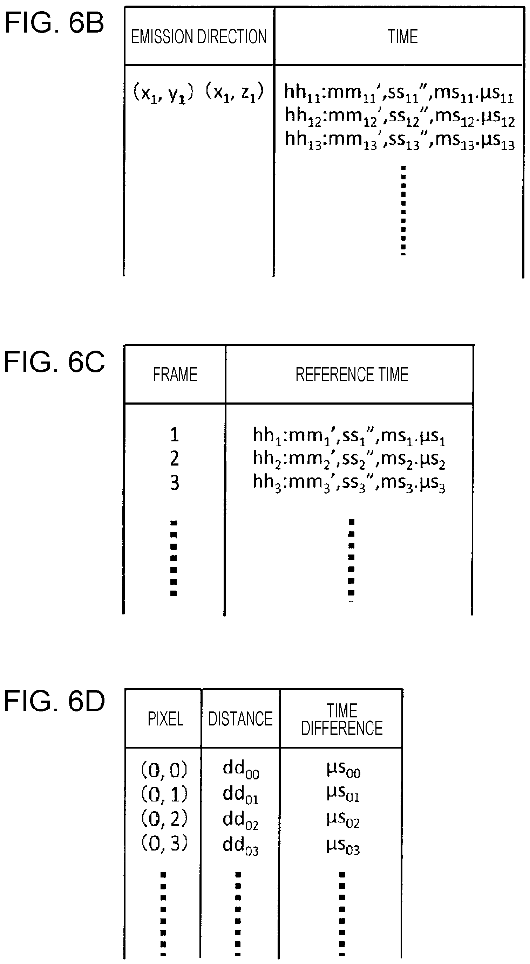

Figs. 6A to 6D illustrate examples of data recorded to the recording medium 150. Fig. 6A illustrates data shared among a plurality of frames. Fig. 6B illustrates data indicating the emission direction and the emission time recorded for each light beam. Fig. 6C illustrates data indicating the reference time recorded for each frame. Fig. 6D illustrates distance data and time difference data recorded for each pixel.

As illustrated in Fig. 6A, the data shared among a plurality of frames includes data indicating the position of the image sensor 120 inside a vehicle, the normal direction of the light-receiving surface of the image sensor 120, and the angle of field. The position of the image sensor 120 inside a vehicle may be expressed in a three-dimensional coordinate system taking the center of the vehicle as the origin, for example. The normal direction of the light-receiving surface of the image sensor 120 may be expressed by the components of a normal vector expressed in the three-dimensional coordinate system, for example. The angle of field may be expressed by an angle in the horizontal plane and an angle in the vertical plane, for example.

As illustrated in Fig. 6B, data indicating the emission direction and the emission time is recorded for each light beam. In this example, a coordinate system is used in which the center position of one of the plurality of light-receiving elements arranged on the light-receiving surface of the image sensor 120 is taken as the origin, the direction corresponding to the horizontal direction of the image is the x axis, the direction corresponding to the vertical direction of the image is the y axis, and the direction perpendicular to the light-receiving surface and pointing toward the scene is the z axis. The emission direction of a light beam may be described by unit vectors indicating the directions obtained by projecting the direction of the center of the light beam onto the xy plane and the xz plane, respectively. However, the representation of the emission direction of a light beam is not limited to the illustrated format, and may be any representation. In the example of Fig. 6B, a plurality of light beams are emitted successively in the same direction, and signals are stored repeatedly by the light-receiving elements of the image sensor 120. With this arrangement, even if the amount of light from a single light beam is insufficient, the signals can be accumulated to obtain sufficient detection sensitivity. In this example, when light beams have been emitted a preset number of times in the same direction, a plurality of light beams are emitted similarly in another direction. By repeating such operations, the scanning of a scene with light beams is achieved. Each light beam may be emitted as a pulse. The emission time of each light beam may be set to the start time or the end time of the emission of the light beam, or to a value such as the average of the start and end times, for example. In the example illustrated in Fig. 6B, the time data includes a value for each of the hour, minute, second, millisecond, and microsecond. The time data may also include a nanosecond value, for example. The time data for each light beam is referenced by the signal processing circuit 160 to determine the reference time illustrated in Fig. 6C and the time difference illustrated in Fig. 6D.

As illustrated in Fig. 6C, reference time data is recorded for each frame. The reference time may be set to the emission time of the first light beam used to acquire the measurement data for the frame, for example. The reference time may also be another time. For example, the average of the emission times of a plurality of light beams used to acquire the measurement data for the frame may also be set as the reference time. Alternatively, the time when reflected light produced by the first light beam is received by the image sensor 120 or the average of the times when reflected light from a plurality of light beams is received may be set as the reference time. Otherwise, any information that can be used to specify or estimate the measurement time of position data or distance data measured by the emission of a light beam, such as the average of the emission time and the reception time, or an emission time indicated in an instruction to the beam scanner 110, may also be used as the reference time. In the example illustrated in Fig. 6C, the reference time data includes a numerical value for each of the hour, minute, second, millisecond, and microsecond.

As illustrated in Fig. 6D, data indicating the measured distance and the time difference is recorded for each pixel. The distance and the time difference are calculated by the signal processing circuit 160 according to the method described later. The time difference of each pixel is a value indicating the difference between the time when the measurement data for the pixel was acquired and the reference time. In the example of Fig. 6D, the time difference data only includes a value in units of microseconds.

Depending on the application, the reference time and the time difference data may also include more precise time information such as nanoseconds, for example.

Next, the functions of the signal processing circuit 160 will be described in further detail.

The distance measurement unit 161 acquires a signal, outputted from the image sensor 120, indicating the quantity of charge stored by each pixel in response to the reception of light in each exposure period. On the basis of the signal, the distance measurement unit 161 calculates the distance to a certain object at a position corresponding to each pixel, and records distance data for each pixel to the recording medium 150. The distance data may be recorded in the format illustrated in Fig. 6D, for example.

The depth map generation unit 162 generates depth map data indicating a distance distribution of a plurality of points in the scene on the basis of the measured distance data for each pixel. More specifically, the depth map generation unit 162 generates depth map data including data indicating the reference time of each frame and data indicating the distance and time difference for each pixel. The depth map generation unit 162 may also generate a depth map by converting measured distance values into brightness information and/or color information.

The point cloud data generation unit 163 converts the generated depth map data into point cloud data in a three-dimensional coordinate space taking a predetermined point as the origin. With this arrangement, point cloud data including information about the three-dimensional coordinates of a plurality of points in the scene is generated. The origin may be set to a predetermined position such as a center position of the vehicle in which the distance measurement apparatus 100 is installed, for example. The point cloud data generation unit 163 generates point cloud data in which the reference time, the coordinates of each point, and the time difference of each point are associated for each frame. The same value as the time difference associated with the pixel of the depth map from which the point was converted is set as the time difference of each point. Here, in the case where a light-receiving element that did not receive reflected light from a light beam exists, the data for the points corresponding to the light-receiving element is not included in the outputted point cloud data.

The output unit 169 outputs depth map data including data indicating the reference time of each frame and the time difference for each pixel and/or point cloud data including data indicating the reference time of each frame and the time difference for each point. The depth map data or the point cloud data may be recorded to the recording medium 150, for example. In the following description, the depth map data and the point cloud data may be referred to collectively as the "output data". The output data may be transmitted to another information processing apparatus through a communication channel not illustrated, for example.

A processor of another information processing apparatus receiving the data outputted from the distance measurement apparatus 100 can calculate the time of each point expressed by the depth map data or the point cloud data according to the formula Time = reference time + time difference

Note that both depth map data and three-dimensional point cloud data may be generated, or only one type of data may be generated. In the present embodiment, the important point is that the output data including at least one of depth map data and three-dimensional point cloud data contains data indicating the reference time of each frame and data indicating the time difference for each of a plurality of points in the scene. This arrangement makes it possible to reduce the load imposed by data integration on the other information processing apparatus acquiring the output data.

Note that the time data attached to the output data may also be expressed in units of time different from the units of time of the time data outputted by the clock 140. For example, the time data outputted by the clock 140 may be expressed in units of time on the order of microseconds or nanoseconds, whereas the time data attached to the output data may be sufficiently precise when expressed in units of time on the order of milliseconds. In such case, the control circuit 130 and the signal processing circuit 160 may convert and record the time data outputted by the clock 140 as time data expressed in the units of time demanded by the reference time and the time difference. Here, the units of time demanded by the reference time and the time difference may be predetermined or set according to an external instruction. Additionally, the output data may also include time unit data indicating the units of time of the reference time and the time difference. In this case, the time unit data may be stored in a header region or the like attached to the output data, for example.

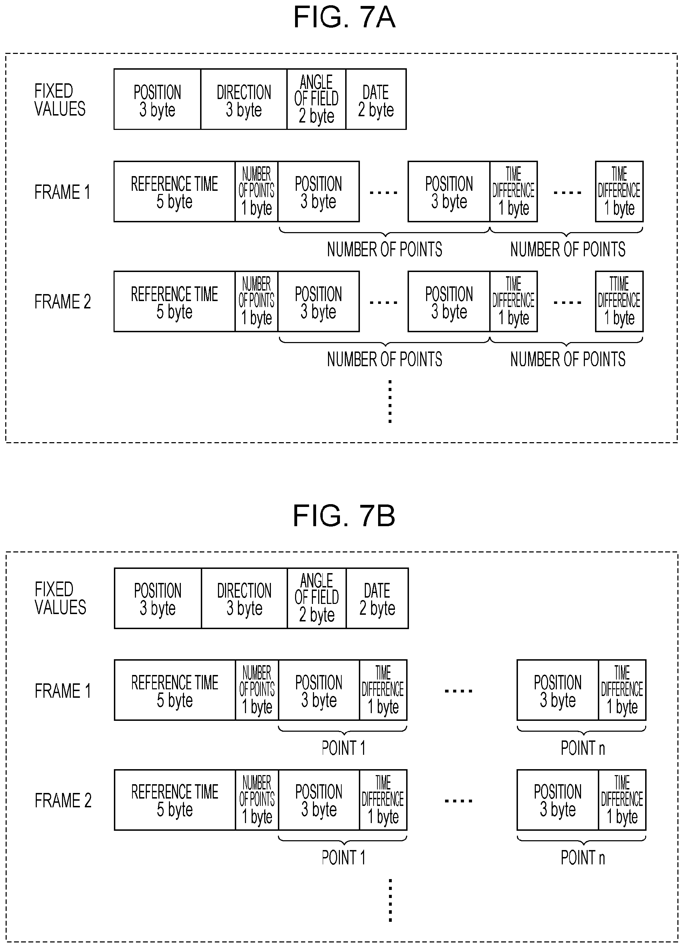

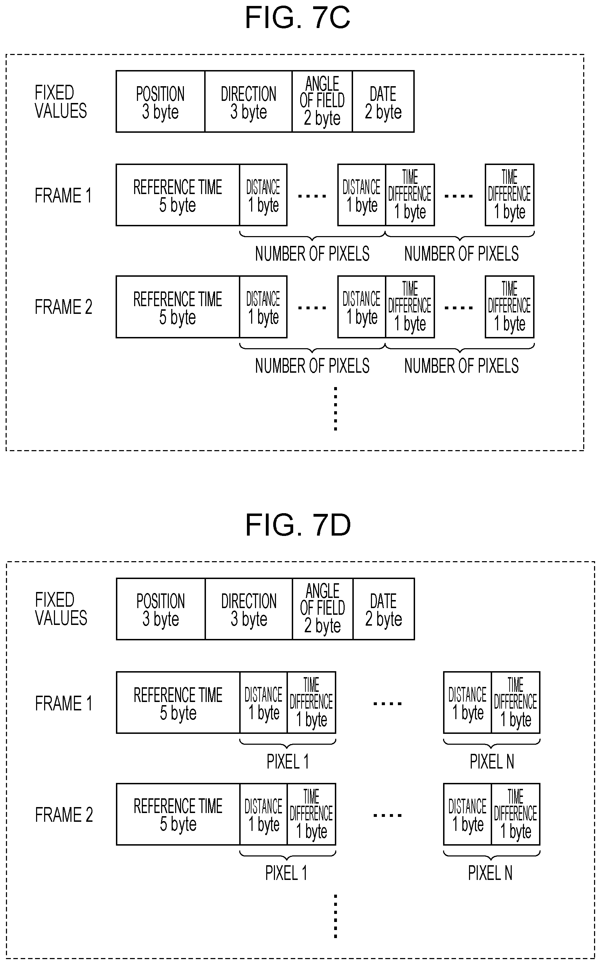

Figs. 7A to 7D illustrate an example of the output data format. Figs. 7A and 7B respectively illustrate two different data formats of point cloud data outputted from the signal processing circuit 160. Figs. 7C and 7D respectively illustrate two different data formats of depth map data outputted from the signal processing circuit 160. In all of the examples from Fig. 7A to Fig. 7D, fixed values which are data shared among a plurality of frames and data that is different for each frame are outputted.

The fixed values may be outputted in a header attached to the output data, for example. The fixed values may also be outputted at a frequency of once for every predetermined plurality of frames.

The fixed values may include values indicating the position of the image sensor 120 inside a vehicle, the normal direction of the light-receiving surface of the image sensor 120, the angle of field of the image sensor 120, and the date. The position of the image sensor 120 may be expressed by a 3-byte value expressed in a three-dimensional coordinate system taking the center of the vehicle as the origin, for example. The normal direction of the light-receiving surface may be expressed by a 3-byte value expressed in the above three-dimensional coordinate system, for example.

The angle of field may be expressed by a 2-byte value, for example. The date includes information about the year, month, and day, and may be expressed by a 2-byte value, for example.

In the example of the point cloud data illustrated in Fig. 7A, the data for each frame includes data respectively indicating the reference time of the frame, the number of points in the frame, the position of each point, and the time difference of each point. The reference time may be expressed in 5 bytes, for example. The number of points in the frame may be expressed in 1 byte, for example. The position of each point may be three-dimensional coordinate values and may be expressed in 3 bytes, for example. In this example, the data indicating the reference time and the number of points are outputted, and thereafter, data indicating the position is outputted a number of times equal to the number of points, followed by data indicating the time difference a number of times equal to the number of points and in the same order of the points.

In the example of the point cloud data illustrated in Fig. 7B, the data indicating the position and the time difference of each point in the output data of each frame is arranged differently from the example of Fig. 7A. In the example of Fig.

7B, data indicating the reference time and the number of points are outputted, followed by pairs of data indicating the position and the time difference of each point a number of times equal to the number of points. Otherwise, the arrangement is the same as the example of Fig. 7A.

The format of the point cloud data is not limited to the formats illustrated in Figs. 7A and 7B, and may be any format. The point cloud data according to the present embodiment does not include data for points corresponding to the light-receiving elements that did not receive the reflected light of a light beam from among the light-receiving elements of the image sensor 120.

In the example of the depth map data illustrated in Fig. 7C, the data of each frame includes data respectively indicating the reference time of the frame, the distance measured for each pixel, and the time difference of each pixel. The distance may be expressed in 1 byte, for example. In this example, the data indicating the reference time is outputted, and thereafter, the data indicating the distance is outputted a number of times equal to the number of pixels in the order in which the pixels of the image sensor 120 are arranged, followed by the data indicating the time difference a number of times equal to the number of pixels and in the same order of the pixels. Here, for pixels where the reflected light of a light beam was not received, the distance has not been measured, and therefore a measurement time is not specified. Consequently, for such pixels, the value of the distance may be set to 0 or infinity for example, and the time difference may be set to 0 for example. The fixed values are the same as the fixed values in the point cloud data described above.

In the example of the depth map data illustrated in Fig. 7D, the data indicating the distance and the time difference of each pixel in the data of each frame is arranged differently from the example of Fig. 7C. In the example of Fig. 7D, data indicating the reference time is outputted, followed by pairs of data indicating the distance and the time difference a number of times equal to the number of pixels successively in a predetermined pixel order. Otherwise, the arrangement is the same as the example of Fig. 7C.

The format of the depth map data is not limited to the formats illustrated in Figs. 7C and 7D, and may be any format. In the example of Figs. 7C and 7D, the number of pixels is treated as a known value, and data indicating the number of pixels is not included in the output data. Data indicating the number of pixels may be included in the output data as a fixed value.

In the examples of Figs. 7A to 7D, data indicating the data is included in the output data as a fixed value. The data indicating the date may also be included in the data for each frame. For example, the data indicating the reference time may also include date information. In the case where the data indicating the reference time includes date information, the data of a frame can be associated with a date easily, even in cases where the date changes during measurement performed around midnight, for example.

[1-1-2. Configuration of beam scanner 110]

Next, an example of the configuration of the beam scanner 110 will be described. The beam scanner 110 is a light emitter capable of varying the emission direction of a light beam according to control by the control circuit 130. The beam scanner 110 uses successive light beams to irradiate a partial region inside a scene targeted for distance measurement. To achieve the above function, the beam scanner 110 is provided with a function of varying the emission direction of a light beam. For example, the beam scanner 110 may be provided with a light-emitting element such as a laser and at least one actuated mirror such as a MEMS mirror, for example. Light emitted from the light-emitting element is reflected by the actuated mirror and pointed toward a predetermined region inside the scene targeted for distance measurement. By driving the actuated mirror, the control circuit 130 can vary the emission direction of the light beam.

A light emitter capable of varying the emission direction of light with a structure different than a light emitter including an actuated mirror may also be used. For example, a light emitter using a reflection waveguide as disclosed in Patent Literature 4 may be used. Alternatively, a light emitter that uses an antenna array to vary the direction of the light of the entire array by adjusting the phase of light outputted from each antenna may be used.

Hereinafter, an example of the configuration of the beam scanner 110 will be described.

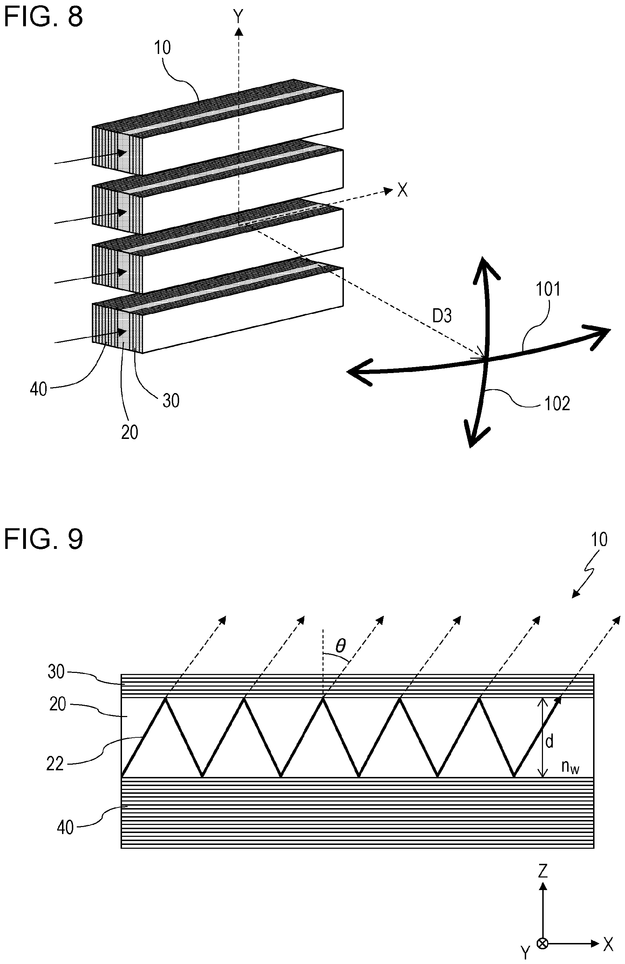

Fig. 8 is a perspective view schematically illustrating an example of a light emitter that may be used as the beam scanner 110. The light emitter is provided with an optical waveguide array including a plurality of optical waveguide elements 10. Each of the plurality of optical waveguide elements 10 has an elongated shape in a first direction (the X direction in Fig. 8). The plurality of optical waveguide elements 10 are arranged regularly in a second direction (the Y direction in Fig. 8) intersecting the first direction. The plurality of optical waveguide elements 10 cause light to propagate in the first direction while also causing light to be emitted in a third direction D3 intersecting a virtual plane parallel to the first and second directions.

Each of the plurality of optical waveguide elements 10 includes a first mirror 30 and a second mirror 40 facing each other, and an optical waveguide layer 20 positioned between the mirror 30 and the mirror 40. The mirror 30 and the mirror 40 each have a reflecting surface intersecting the third direction D3 at the interface with the optical waveguide layer 20. The mirror 30, the mirror 40, and the optical waveguide layer 20 have elongated shapes in the first direction.

The reflecting surface of the first mirror 30 and the reflecting surface of the second mirror 40 face each other substantially in parallel. Of the two mirrors 30 and 40, at least the first mirror 30 has a property of transmitting a portion of the light propagating through the optical waveguide layer 20.

In other words, the first mirror 30 has a higher light transmittance with respect to such light than the second mirror 40. Consequently, a portion of the light propagating through the optical waveguide layer 20 is emitted externally from the first mirror 30. Such mirrors 30 and 40 may be multilayer mirrors formed using multiple layers of a dielectric material, for example.

By adjusting the phase of the light inputted into each of the optical waveguide elements 10 and additionally adjusting the refractive index or the thickness of the optical waveguide layer 20 or adjusting the wavelength of the light inputted into the optical waveguide layer 20 of the optical waveguide elements 10, it is possible to emit light in any direction.

Fig. 9 is a diagram schematically illustrating an example of the cross-sectional structure of a single optical waveguide element 10 and propagated light. In Fig. 9, the direction perpendicular to the X and Y directions illustrated in Fig. 8 is designated the Z direction, and a cross section parallel to the XZ plane of an optical waveguide element 10 is illustrated schematically. In the optical waveguide element 10, the pair of mirrors 30 and 40 are disposed with the optical waveguide layer 20 sandwiched in between. Light 22 introduced from one end of the optical waveguide layer 20 in the X direction propagates through the optical waveguide layer 20 while being repeatedly reflected by the first mirror 30 provided on the upper surface and the second mirror 40 provided on the lower surface of the optical waveguide layer 20. The light transmittance of the first mirror 30 is higher than the light transmittance of the second mirror 40. For this reason, a portion of the light can be outputted mainly from the first mirror 30.

In an ordinary optical waveguide such as optical fiber, light propagates through the optical waveguide while repeatedly undergoing total reflection. In contrast, in the optical waveguide element 10 according to the present embodiment, light propagates while being repeatedly reflected by the mirrors 30 and 40 disposed above and below the optical waveguide layer 20. For this reason, there are no constraints on the propagation angle of the light. Here, the propagation angle of the light refers to the angle of incidence with respect to the interface between the mirror 30 or 40 and the optical waveguide layer 20. Light incident at angles close to perpendicular with respect to the mirror 30 or the mirror 40 can also be propagated. In other words, light incident on the interface at an angle smaller than the critical angle of total reflection can also be propagated. For this reason, the group velocity of light in the propagation direction of the like is greatly lowered compared to the speed of light in free space. With this arrangement, the optical waveguide element 10 has a property whereby the propagation conditions of light vary greatly depending on the wavelength of the light, the thickness of the optical waveguide layer 20, and the refractive index of the optical waveguide layer 20. Such an optical waveguide is referred to as a "reflection waveguide" or a "slow light waveguide".

The angle of emergence θ of light emitted in air from the optical waveguide element 10 is expressed by the following Expression (1).

[Math. 1]

$$\sin\theta = \sqrt{n_{\mathrm{w}}^2 - \left(\frac{m\lambda}{2d}\right)^2} \qquad (1)$$

As Expression (1) demonstrates, the emission direction of light can be changed by changing any of the wavelength λ of the light in air, the refractive index $n_{\mathrm{w}}$ of the optical waveguide layer 20, or the thickness d of the optical waveguide layer 20.

For example, in the case where $n_{\mathrm{w}}$ = 2, d = 387 nm, λ = 1550 nm, and m = 1, the angle of emergence is 0°. If the refractive index is changed to $n_{\mathrm{w}}$ = 2.2 from the above state, the angle of emergence changes to approximately 66°. On the other hand, if the thickness is changed to d = 420 nm without changing the refractive index, the angle of emergence changes to approximately 51°. If the wavelength is changed to λ = 1500 nm without changing the refractive index or the thickness, the angle of emergence changes to approximately 30°. In this way, the emission direction of light can be changed by changing any of the wavelength λ of the light, the refractive index $n_{\mathrm{w}}$ of the optical waveguide layer 20, or the thickness d of the optical waveguide layer 20.

The wavelength λ of light may be included in the wavelength band from 400 nm to 1100 nm (from visible light to near-infrared) with which a high detection sensitivity is obtained in a typical image sensor that detects light by absorbing light with silicon (Si), for example. In another example, the wavelength λ may be included in the near-infrared wavelength band from 1260 nm to 1625 nm, which has relatively low transmission loss in optical fiber or an Si optical waveguide. Note that these wavelength ranges are examples. The wavelength band of light to be used is not limited to the wavelength band of visible light or infrared light, and may also be the wavelength band of ultraviolet light, for example.

The light emitter may be provided with a first adjustment element that varies at least one of the refractive index of the optical waveguide layer 20, the thickness of the optical waveguide layer 20, or the wavelength in each optical waveguide element 10. With this arrangement, the direction of emitted light can be prepared.

To adjust the refractive index of at least a portion of the optical waveguide layer 20, the optical waveguide layer 20 may include a liquid crystal material or an electro-optic material. The optical waveguide layer 20 may be sandwiched by a pair of electrodes. By applying a voltage to the pair of electrodes, the refractive index of the optical waveguide layer 20 can be varied.

To adjust the thickness of the optical waveguide layer 20, at least one actuator may be connected to at least one of the first mirror 30 or the second mirror 40, for example. By varying the distance between the first mirror 30 and the second mirror 40 with the at least one actuator, the thickness of the optical waveguide layer 20 can be varied. If the optical waveguide layer 20 is formed using a liquid, the thickness of the optical waveguide layer 20 may be varied easily.

In the optical waveguide array in which the plurality of optical waveguide elements 10 are arranged in one direction, the light emission direction changes due to the interference of light emitted from each of the plurality of optical waveguide elements 10. By adjusting the phase of the light supplied to each optical waveguide element 10, the light emission direction can be varied. Hereinafter, the above principle will be described.

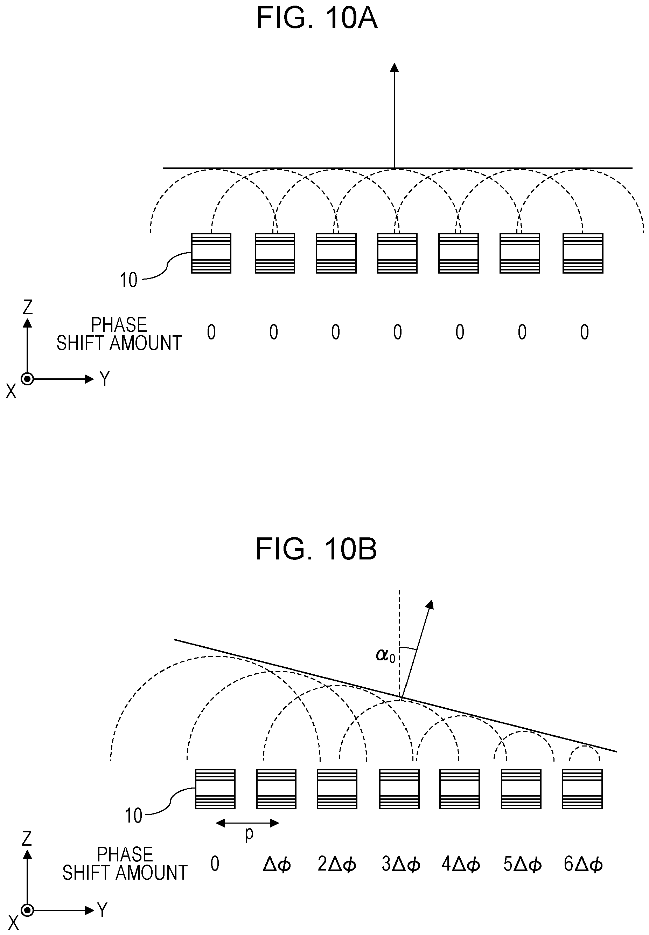

Fig. 10A is a diagram illustrating a cross section of an optical waveguide array that emits light in a direction perpendicular to the emission surface of the optical waveguide array. In Fig. 10A, a phase shift magnitude of the light propagating through each optical waveguide element 10 is also described. Here, the phase shift magnitude is a value based on the phase shift of light propagating through the optical waveguide element 10 at the left end. The optical waveguide array according to the present embodiment includes a plurality of optical waveguide elements 10 arranged at equal intervals. In Fig. 10A, the dashed arcs illustrate the wavefront of the light emitted from each optical waveguide element 10. The straight line illustrates the wavefront formed by the interference of light. The arrow illustrates the direction of the light emitted from the optical waveguide array (that is, the direction of the wavenumber vector). In the example of Fig. 10A, the phases of the light propagating through the optical waveguide layer 20 in each optical waveguide element 10 are all the same. In this case, light is emitted in a direction (Z direction) perpendicular to both the arrangement direction (Y direction) of the plurality of optical waveguide elements 10 and the extension direction (X direction) of the optical waveguide layer 20.

Fig. 10B is a diagram illustrating a cross section of an optical waveguide array that emits light in a direction different from the direction perpendicular to the emission surface of the optical waveguide array. In the example illustrated in Fig. 10B, the phases of the light propagating through the optical waveguide layer 20 in the plurality of optical waveguide elements 10 differ by a fixed magnitude ($\Delta\varphi$) in the arrangement direction. In this case, light is emitted in a direction different from the Z direction. By varying $\Delta\varphi$, the Y-direction component of the wavenumber vector of the light can be varied. Provided that p is the center-to-center distance between two adjacent optical waveguide elements 10, the angle of emergence $\alpha_0$ of the light is expressed by the following Expression (2).
[Math. 2]

$$\sin\alpha_0 = \frac{\Delta\phi\lambda}{2\pi p} \qquad (2)$$

When the number of optical waveguide elements 10 is N, the spread angle $\Delta\alpha$ of the angle of emergence of the light is expressed by the following Expression (3).
[Math. 3]

$$\Delta\alpha = \frac{2\lambda}{Np\cos\alpha_0} \qquad (3)$$

Consequently, the greater the number of optical waveguide elements 10, the more the spread angle $\Delta\alpha$ can be decreased.

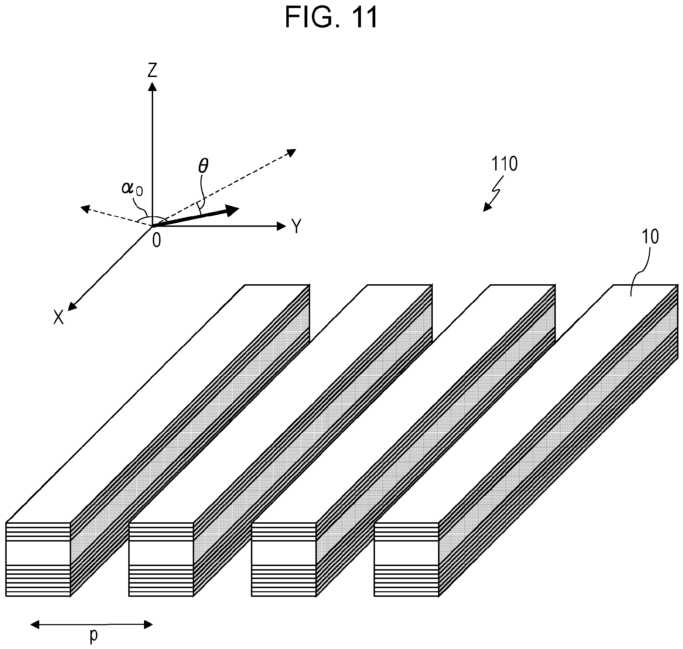

Fig. 11 is a perspective view schematically illustrating the optical waveguide array in a three-dimensional space. The bold arrow illustrated in Fig. 11 indicates the direction of light emitted from the light emitter. Also, $\theta$ is the angle obtained between the light emission direction and the YZ plane. The angle $\theta$ satisfies Expression (2). Also, $\alpha_0$ is the angle obtained between the light emission direction and the XZ plane. The angle $\alpha_0$ satisfies Expression (3).

To control the phase of the light emitted from each of the optical waveguide elements 10, a phase shifter that shifts the phase of the light may be provided upstream before the light is introduced into the optical waveguide elements 10, for example. The light emitter may be provided with a plurality of phase shifters respectively connected to the plurality of optical waveguide elements 10, and a second adjustment element that adjusts the phase of the light propagating through each phase shifter. Each phase shifter includes an optical waveguide coupled to the optical waveguide layer 20 in a corresponding one of the plurality of optical waveguide elements 10 directly, or through another optical waveguide.

The second adjustment element varies the direction of light emitted from the plurality of optical waveguide elements 10 (that is, the third direction D3) by respectively varying the differences in the phase of the light propagating to the plurality of optical waveguide elements 10 from the plurality of phase shifters. In the following description, the arranged plurality of phase shifters may be referred to as the "phase shifter array", similarly to the optical waveguide array.

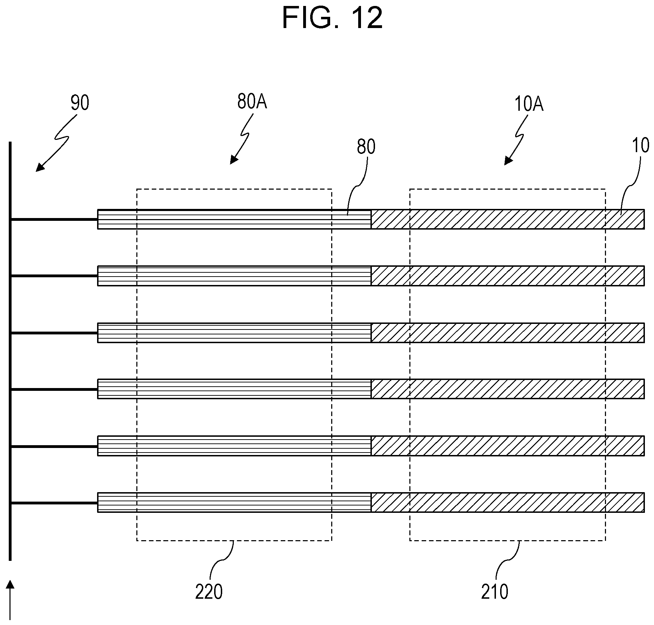

Fig. 12 is a schematic diagram of an optical waveguide array 10A and a phase shifter array 80A as viewed from the normal direction (Z direction) of the light emission surface. In the example illustrated in Fig. 12, all phase shifters 80 have the same propagation characteristics, and all optical waveguide elements 10 have the same propagation characteristics. Each of the phase shifters 80 and each of the optical waveguide elements 10 may be the same length or different lengths. In the case where the phase shifters 80 are of equal length, the phase shift magnitude of each can be adjusted by the driving voltage, for example. Also, by adopting a structure in which the length of each of the phase shifters 80 is varied in equal steps, the phase shift of the equal steps can also be applied at the same driving voltage. Furthermore, the light emitter is additionally provided with an optical splitter 90 that splits light into the plurality of phase shifters 80, a first driving circuit 210 that drives each optical waveguide element 10, and a second driving circuit 220 that drives each phase shifter 80. The straight arrow in Fig. 12 illustrates the input of light. By independently controlling the first driving circuit 210 and the second driving circuit 220 provided separately, the light emission direction can be varied two-dimensionally. In this example, the first driving circuit 210 functions as one element of the first adjustment element, and the second driving circuit 220 functions as one element of the second adjustment element.

The first driving circuit 210 varies the angle of the light emitted from the optical waveguide layer 20 in each optical waveguide element 10 by varying at least one of the refractive index or the thickness of the optical waveguide layer 20. The second driving circuit 220 varies the phase of the light propagating internally through an optical waveguide 20a in each phase shifter 80 by varying the refractive index of the optical waveguide 20a. The optical splitter 90 may be configured by an optical waveguide through which light propagates by total reflection, or may be configured by a reflection waveguide similar to the optical waveguide elements 10.

Note that light may be respectively introduced into the phase shifters 80 after controlling the phase of each beam of light in the optical splitter 90. For the phase control, a passive phase control structure that controls the phase by adjusting the length of the optical waveguides leading to the phase shifters 80 can be used, for example. Alternatively, a phase shifter controllable by an electrical signal and having functions similar to the phase shifters 80 may be used. According to such a method, the phase may be adjusted before the light is introduced into the phase shifters 80 such that light of equal phase is supplied to all of the phase shifters 80, for example. With such adjustment, the control of each phase shifter 80 by the second driving circuit 220 can be simplified.

Details such as the operating principle and the operation method of the above light emitter are disclosed in PTL 4. The entire disclosure of PTL 4 is incorporated herein by reference.

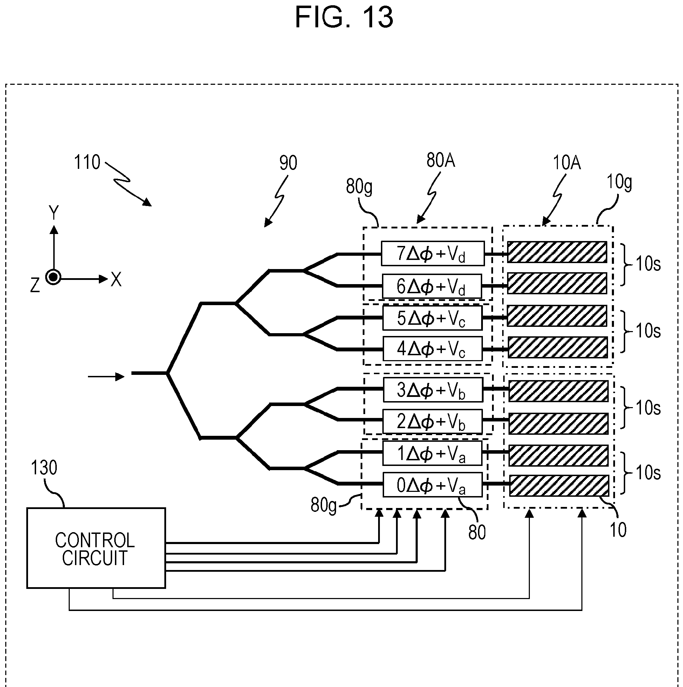

Fig. 13 is a diagram illustrating another example of the beam scanner 110. The beam scanner 110 in this example is provided with an optical waveguide array 10A and a phase shifter array 80A connected to the optical waveguide array 10A. The optical waveguide array 10A includes a plurality of optical waveguide groups 10g arranged in the Y direction. Each optical waveguide group 10g includes one or more optical waveguide elements 10. The phase shifter array 80A includes a plurality of phase shifter groups 80g arranged in the Y direction. Each phase shifter group 80g includes one or more phase shifters 80. In this example, the grouping of the phase shifter groups 80g differs from the grouping of the optical waveguide groups 10g. More specifically, two phase shifter groups 80g are connected to one optical waveguide group 10g.

The phase shift magnitude of each phase shifter 80 is controlled individually by the control circuit 130. The phase shift magnitude of each phase shifter 80 is controlled to be the sum of a first phase shift magnitude corresponding to the order of arrangement (an integer multiple of $\Delta\varphi$) and a second phase shift magnitude different for each phase shifter group 80g (one of Va, Vb, Vc, or Vd). By varying the second phase shift magnitude for each phase shifter group 80g, the Y component of the emission direction of the light beam and the spread angle of the spot size in the Y direction are controlled.

On the other hand, the control circuit 130 determines the value of the applied voltage individually for each optical waveguide group 10g. By controlling the voltage applied to each optical waveguide group 10g, the X component of the emission direction of the light beam is controlled. The emission direction of light is determined according to the combination of the phase shifter group 80g and the optical waveguide group 10g. In the example of Fig. 13, light is emitted in the same direction from a group 10s of two adjacent optical waveguide elements 10 connected to one phase shifter group 80g. If the luminous flux emitted from one optical waveguide group 10g is treated as a single light beam, two light beams can be emitted at the same time in the example of Fig. 13. The number of beams can be increased further by increasing the numbers of optical waveguide elements 10 and phase shifters 80.

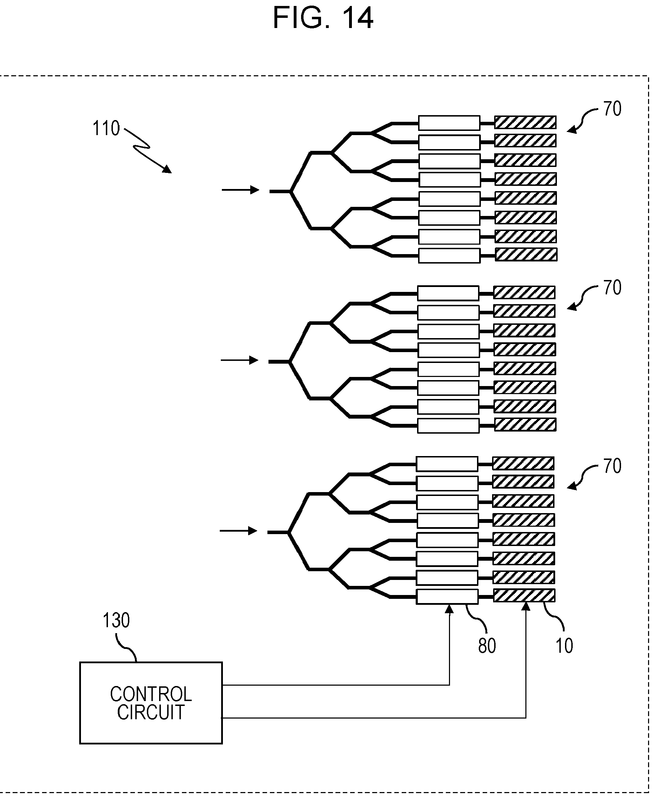

Fig. 14 is a diagram illustrating another example of the configuration of the beam scanner 110. The beam scanner 110 in this example is provided with a plurality of light emitters 70, each of which emits a light beam in a different direction. In this example, a plurality of phase shifters 80 and a plurality of optical waveguide elements 10 are mounted on a single chip. The control circuit 130 controls the voltage applied to each phase shifter 80 and each optical waveguide element 10 in each light emitter 70. With this arrangement, the control circuit 130 controls the direction of the light beam emitted from each light emitter 70. In this example, the beam scanner 110 is provided with three light emitters 70, but a greater number of light emitters 70 may also be provided.

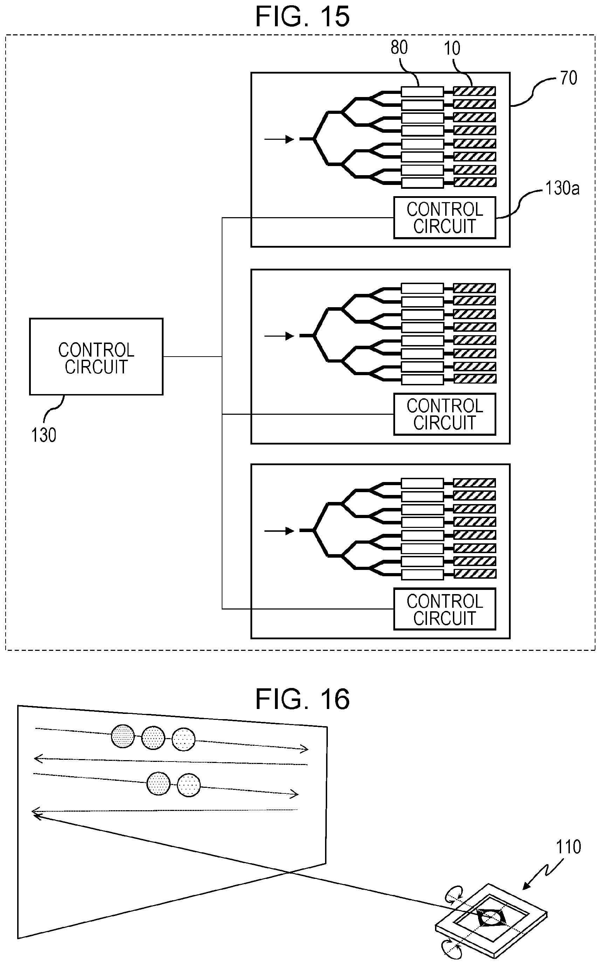

Fig. 15 is a diagram illustrating another example of the configuration of the beam scanner 110. The beam scanner 110 in this example is provided with a plurality of light emitters 70, each of which is mounted on a different chip. The plurality of light emitters 70 emit light beams in different directions. Each light emitter 70 is provided with a control circuit 130a that determines a voltage to be applied to a plurality of phase shifters 80 and a plurality of optical waveguide elements 10. The control circuit 130a in each light emitter 70 is controlled by an external control circuit 130. In this example as well, the beam scanner 110 is provided with three light emitters 70, but a greater number of light emitters 70 may also be provided.

Fig. 16 is a diagram illustrating yet another example of the beam scanner 110. In this example, the beam scanner 110 is provided with a light-emitting element such as a laser and at least one movable mirror such as a MEMS mirror. Light emitted from the light-emitting element is reflected by the movable mirror and directed toward a predetermined region inside a target region (displayed as a rectangle in Fig. 16). By driving the movable mirror, the control circuit 130 varies the direction of the light emitted from the beam scanner 110. With this arrangement, the target region can be scanned with light as indicated by the dotted-line arrows in Fig. 16 for example.

[1-1-3. Configuration of image sensor 120]

Next, an example of the configuration of the image sensor 120 will be described. The image sensor 120 is provided with a plurality of light-receiving elements arranged two-dimensionally on a light-receiving surface. An optical component not illustrated may also be provided facing the light-receiving surface of the image sensor 120. The optical component may include at least one lens, for example. The optical component may also include another optical element such as a prism or a mirror. The optical component may be designed such that light diffused from a single point on an object in a scene is condensed onto a single point on the light-receiving surface of the image sensor 120.

The image sensor 120 may be a charge-coupled device (CCD) sensor, a complementary metal-oxide-semiconductor (CMOS) sensor, or an infrared array sensor, for example. Each light-receiving element includes a photoelectric transducer such as a photodiode for example and one or more charge storage units. Charge produced by photoelectric conversion is stored in the charge storage unit(s) for the duration of an exposure period. The charge stored in the charge storage unit(s) is outputted after the exposure period ends. With this arrangement, each light-receiving element outputs an electrical signal corresponding to the amount of light received during the exposure period. The electrical signal may be referred to as "light reception data". The image sensor 120 may be a monochrome image sensor or a color image sensor. For example, a color image sensor including an R/G/B, R/G/B/IR, or R/G/B/W filter may be used. The image sensor 120 is not limited to the wavelength range of visible light, and may also have detection sensitivity in a wavelength range such as ultraviolet, near-infrared, mid-infrared, or farinfrared. The image sensor 120 may also be a sensor utilizing a single-photon avalanche diode (SPAD). The image sensor 200 may be provided with the mechanism of an electronic shutter capable of reading out the signals from all exposed pixels at once, otherwise known as a global shutter. The electronic shutter may also be a rolling shutter, which performs exposure line by line, or an area shutter, which performs exposure in only a partial area in coordination with the range being irradiated by a light beam.

[1-1-4. Example of distance measurement method]

In the present embodiment, the signal processing circuit 160 measures the distance to an object according to a distance measurement method called indirect ToF. Hereinafter, an example of a typical distance measurement method using indirect ToF will be described. Note that the distance measurement method is not limited to indirect ToF, and a distance measurement method using direct ToF may also be used.

ToF is a method of measuring the distance from a device to an object by measuring the time of flight taken for light emitted from a light source to be reflected by the object and return to a photodetector near the light source. A method of measuring the time of flight directly is called direct ToF. A method of providing a plurality of exposure periods and calculating the time of flight from the energy distribution of the reflected light in each exposure period is called indirect ToF.

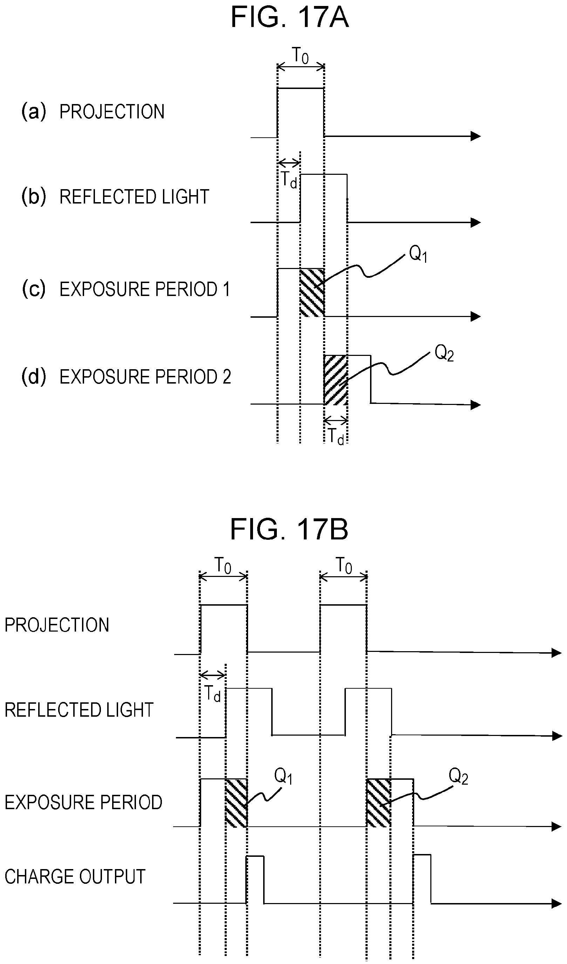

Fig. 17A is a diagram illustrating an example of the light projection timing, the arrival timing of reflected light, and two exposure timings in indirect ToF. The horizontal axis represents time. The rectangular portions indicate the respective periods of the light projection, the arrival of reflected light, and the two exposures. In this example, a case in which a single light beam is emitted and a light-receiving element receiving reflected light produced by the light beam is exposed twice successively is described for simplicity. In Fig. 17A, (a) illustrates the timing at which light is emitted from a light source. Here, TO is the pulse width of the light beam used for distance measurement. In Fig. 17A, (b) illustrates the period in which the light beam that has been emitted from the light source and reflected by an object arrives at the image sensor. Here, Td is the time of flight of the light beam. In the example of Fig. 17A, reflected light arrives at the image sensor in a time Td shorter than the duration TO of the light pulse. In Fig. 17A, (c) illustrates a first exposure period of the image sensor. In this example, exposure is started at the same time as the start of light projection, and exposure is ended at the same time as the end of light projection. In the first exposure period, the early-returning portion of the reflected light is photoelectrically converted, and the charge generated thereby is stored. Here, Q1 represents the energy of the light photoelectrically converted in the first exposure period. The energy Q1 is proportional to the quantity of charged stored in the first exposure period. In Fig. 17A, (d) illustrates a second exposure period of the image sensor. In this example, the second exposure period is started at the same time as the end of light projection, and is ended at the time point when the same time as the pulse width TO of the light beam, or in other words the same time as the first exposure period, elapses. Here, Q2 represents the energy of the light photoelectrically converted in the second exposure period. The energy Q2 is proportional to the quantity of charged stored in the second exposure period. In the second exposure period, the portion of the reflected light arriving after the end of the first exposure period is received. Because the length of the first exposure period is equal to the pulse width TO of the light beam, the duration of the reflected light received in the second exposure period is equal to the time of flight Td.

At this point, let Cfd1 be the integrated quantity of charge stored in the light-receiving element in the first exposure period, let Cfd2 be the integrated quantity of charge stored in the light-receiving element in the second exposure period, let Iph be the photoelectric current, and let N be the number of charge transfer clock cycles. The output voltage of the light-receiving element in the first exposure period is expressed by Vout1 as follows.

$$\text{Vout1} = Q1 / \text{Cfd1} = N \times \text{Iph} \times (T0 - Td) / \text{Cfd1}$$

The output voltage of the light-receiving element in the second exposure period is expressed by Vout2 as follows.

$$\text{Vout2} = Q2 / \text{Cfd2} = N \times \text{Iph} \times Td / \text{Cfd2}$$

In the example of Fig. 17A, the duration of the first exposure period is equal to the duration of the second exposure period, and therefore Cfd1 = Cfd2. Consequently, Td can be expressed by the following formula.

$$Td = \{\text{Vout2} / (\text{Vout1} + \text{Vout2})\} \times T0$$

Provided that C is the speed of light (approximately $3 \times 10^8$ m/s), the distance L between the device and the object is expressed by the following formula.

$$L = 1 / 2 \times C \times Td = 1 / 2 \times C \times \{\text{Vout2} / (\text{Vout1} + \text{Vout2})\} \times T0$$

Because the image sensor actually outputs charge stored in the exposure periods, in some cases it may not be possible to perform two exposures consecutively in time. In such cases, the method illustrated in Fig. 17B may be used, for example.

Fig. 17B is a diagram schematically illustrating the timings of light projection, exposure, and charge output in the case where two consecutive exposure periods cannot be provided. In the example of Fig. 17B, first, the image sensor starts exposure at the same time as when the light source starts light projection, and the image sensor ends exposure at the same time as when the light source ends light projection. This exposure period corresponds to the exposure period 1 in Fig. 17A. The image sensor outputs the charge stored in the exposure period immediately after exposure. The quantity of charge corresponds to the energy Q1 of the received light. Next, the light source starts light projection again, and ends the light projection when the same time TO as the first exposure elapses. The image sensor starts exposure at the same time as when the light source ends light projection, and ends the exposure when the same length of time as the first exposure period elapses. This exposure period corresponds to the exposure period 2 in Fig. 17A. The image sensor outputs the charge stored in the exposure period immediately after exposure. The quantity of charge corresponds to the energy Q2 of the received light.

In this way, in the example of Fig. 17B, to acquire the above signals for distance measurement, the light source projects light twice and the image sensor performs exposure at different timings with respect to each of the light projections. With this arrangement, a voltage can be acquired for each exposure period, even in the case where two exposure periods cannot be provided consecutively in time. In this way, with an image sensor that outputs the charge from each exposure period, light is projected under the same conditions a number of times equal to the number of preset exposure periods to acquire information about the charge stored in each of the plurality of set exposure periods.

Note that in actual distance measurement, the image sensor may receive not only light that is emitted from the light source and reflected by an object, but also background light, namely sunlight or light from an external source such as nearby lighting equipment. Accordingly, an exposure period for measuring the stored charge due to background light being incident on the image sensor in a state with no light beam being emitted is generally provided. By subtracting the quantity of charge measured in the background exposure period from the quantity of charge measured when the reflected light of a light beam is received, the quantity of charge in the case of receiving only the reflected light of a light beam can be calculated. In the present embodiment, a description of the operations related to background light is omitted for simplicity.

The above example focuses on only a single light beam for simplicity, but a plurality of light beams may also be emitted successively. Hereinafter, an example of light detection operations in the case where two light beams are emitted successively will be described.

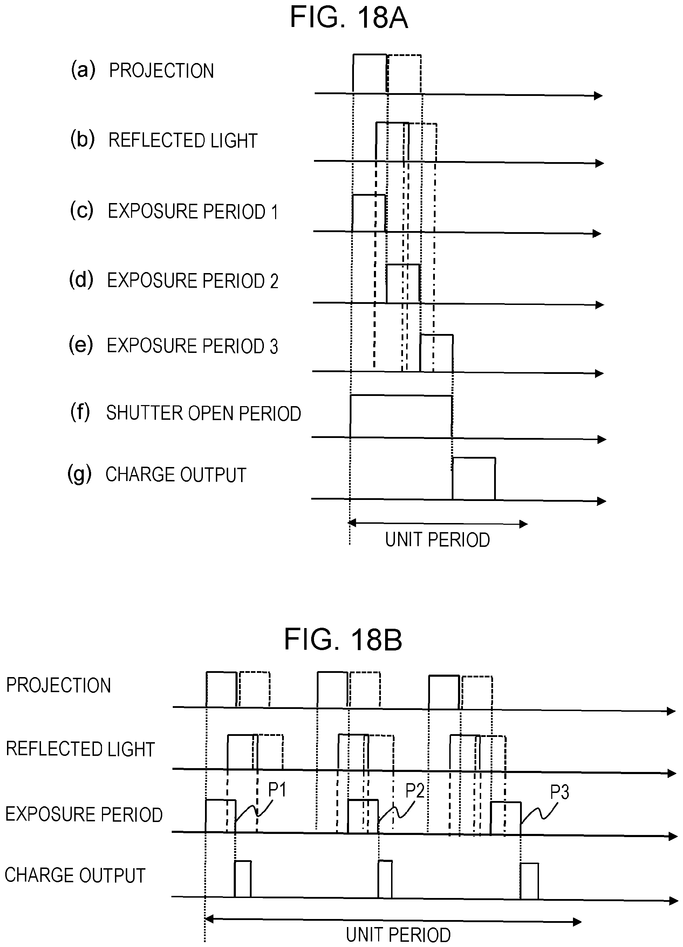

Fig. 18A is a diagram illustrating a first example of light detection in the case where two light beams are emitted successively in different directions in each unit period. The horizontal axis represents time. In this example, exposure is performed three times successively within a unit period.

In Fig. 18A, (a) illustrates the timings at which the two light beams are emitted from the beam scanner 110. In Fig. 18A, (b) illustrates the timings at which reflected light produced by the two light beams emitted from the beam scanner 110 being diffused by an object arrive at the image sensor 120. In this example, when the projection of the first light beam indicated by the solid line ends, the projection of the second light beam indicated by the dashed line is started immediately. The reflected light of these light beams arrives at the image sensor slightly later than the projection timing of each light beam. The first light beam and the second light beam have different emission directions, and the reflected light from these light beams is incident on two different light-receiving elements or two different light-receiving element groups in the image sensor. In Fig. 18A, (c) to (e) illustrate first to third exposure periods, respectively. In this example, the first exposure period is started at the same time as the start of projection of the first light beam, and is ended at the same time as the end of light projection. The second exposure period is started at the same time as the start of projection of the second light beam, and is ended at the same time as the end of light projection. The third exposure period is started at the same time as the end of projection of the second light beam, and is ended when the same time as the duration of the pulse of the second light beam elapses. In Fig. 18A, (f) illustrates the shutter open period of the image sensor.

In Fig. 18A, (g) illustrates the period of charge output from each light-receiving element.

In this example, each light-receiving element of the image sensor independently stores charge generated by photoelectric conversion in the three exposure periods. The charges stored in each charge storage period are read out at the same time. To achieve the above operation, each light-receiving element is provided with three or more charge storage units. The storage of charge in these charge storage units is switched by a switch, for example. The length of each exposure period is set to a time shorter than the shutter open period. The image sensor starts exposure by opening the shutter at the start time point of the projection of the first light beam. The shutter remains open throughout a period in which there is a possibility of receiving reflected light. When the period in which reflected light produced by the last light beam may be received ends, that is, when the third exposure period ends, the image sensor closes the shutter and ends exposure. When the shutter open period ends, the image sensor performs signal readout. At this time, signals corresponding to the respective quantities of charge in the first to third charge storage periods are read out for each pixel. The read-out signals are sent to the signal processing circuit 160 as light reception data. On the basis of the light reception data, the signal processing circuit 160 can calculate the distance for light-receiving elements that have received reflected light according to the method described with reference to Fig. 17A.

According to the example in Fig. 18A, a plurality of charge storage units are necessary for each light-receiving element, but the charges stored in the plurality of charge storage units can be outputted all at once. Consequently, iterations of light projection and exposure can be performed in a short time.

Fig. 18B is a diagram illustrating a second example of light detection in the case where two light beams are emitted successively in different directions in each unit period. In the example of Fig. 18B, like the example of Fig. 17B, charge is outputted every time an exposure period ends. In a single unit period, the emission, exposure, and charge output with respect to a first light beam and a second light beam are repeated for three sets. In the first set, the exposure of each light-receiving element is started at the same time as the start of the projection of the first light beam, and the exposure is ended at the same time as the end of the projection of the first light beam. This exposure period P1 corresponds to the exposure period 1 illustrated in Fig. 18A. When the exposure period P1 ends, the charge stored in each light-receiving element is read out. In the second set, the exposure of each light-receiving element is started at the same time as the end of the projection of the first light beam, that is, at the same time as the start of the projection of the second light beam, and the exposure is ended at the same time as the end of the projection of the second light beam. This exposure period P2 corresponds to the exposure period 2 illustrated in Fig. 18A. When the exposure period P2 ends, the charge stored in each light-receiving element is read out. In the third set, the exposure of each light-receiving element is started at the same time as the end of the projection of the second light beam, and the exposure is ended when a length of time corresponding to the pulse width of each light beam elapses. This exposure period P3 corresponds to the exposure period 3 illustrated in Fig. 18A. When the exposure period P1 ends, the charge stored in each light-receiving element is read out. In this example, the series of operations including the successive projection of a plurality of light beams, the exposure, and the readout of light reception data is repeated three times in each unit period. With this arrangement, light reception data corresponding to the quantity of charge in each exposure period can be acquired for each light-receiving element, similarly to the example in Fig. 17B. With this arrangement, the distance can be calculated according to the computations described above.

According to the example in Fig. 18B, it is sufficient for each light-receiving element to include a single charge storage unit, and therefore the structure of the image sensor can be simplified.

Note that in the examples of Figs. 18A and 18B, three exposure periods are set in each unit period, but the number of exposure periods per unit period may also be two or fewer, or four or more. For example, in the case of using a light source capable of emitting light beams in a plurality of directions simultaneously, there may be two exposure periods per unit period. In this case, the distance can be calculated according to the method described with reference to Fig. 17A or 17B.

Alternatively, in the case of applying a distance calculation method using direct ToF described later, there may be one exposure period per unit period. Furthermore, the number of light beams emitted per unit period is not limited to two, and may also be three or more. The timings of light projection and light reception may be adjusted according to properties such as a setting related to the distance range of the plurality of light beams.

[1-2. Operations]

Next, operations by the distance measurement apparatus 100 will be described.

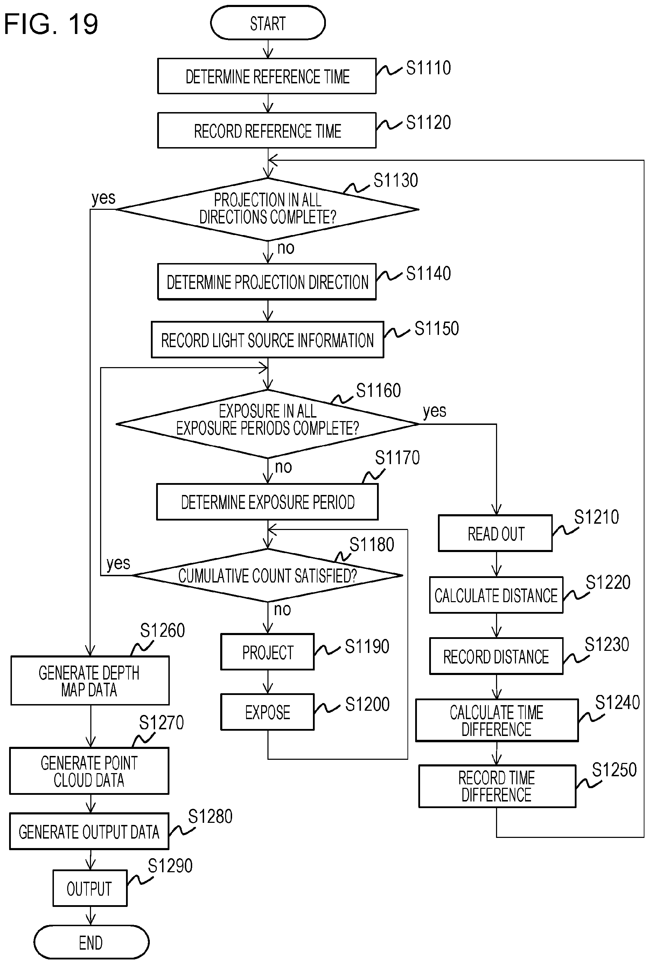

Fig. 19 is a flowchart illustrating an example of operations by the distance measurement apparatus 100. The distance measurement apparatus 100 generates depth map data and point cloud data for a single frame by executing the operations from step S1110 to step S1290 illustrated in Fig. 19. In the case of generating data for multiple frames successively, the distance measurement apparatus 100 repeats the operations from step S1100 to step S1290 illustrated in Fig. 19. Hereinafter, the operation in each step will be described.

(Step S1110)

When starting distance measurement of a target scene for a new frame, first, the control circuit 130 sends a command causing the time determination unit 164 of the signal processing circuit 160 to determine the reference time of the frame. The time determination unit 164 receives the command and determines the time acquired from the clock 140 as the reference time.

(Step S1120)

The time determination unit 164 records the determined reference time to the recording medium 150. As illustrated in Fig. 6C for example, the reference time may be recorded in the form of a table prescribing correspondence relationships between frames and reference times.

(Step S1130)

The control circuit 130 determines whether or not a direction in which a light beam has not been projected exists among predetermined light beam directions. In the case where light projection has been completed for all of the predetermined directions, that is, in the case of "yes" in step S1130, the flow proceeds to step S1260. In the case where a direction in which a light beam has not been projected exists among the predetermined directions, that is, in the case of "no" in step S1130, the flow proceeds to step S1140.

(Step S1140)

The control circuit 130 determines the direction in which a light beam has not been projected from among the predetermined light beam directions.

(Step S1150)

The control circuit 130 records information indicating the light beam direction determined in step S1150 to the recording medium 150.

(Step S1160)

The control circuit 130 determines whether the exposure of the image sensor 120 has been completed for all of two or more predetermined exposure periods in the direction determined in step S1150. In the case of a "yes" determination, the flow proceeds to step S1210. In the case of a "no" determination, the flow proceeds to step S1170.

(Step S1170)

The control circuit 130 selects one of the exposure periods in which exposure has not been performed from among the two or more predetermined exposure periods. Each exposure period has the same duration as the duration of a light pulse emitted by the beam scanner 110, for example. A first exposure period is started at the same time as the start of light projection, and is ended at the same time as the end of light projection. A second exposure period is started at the same time as the end of light projection by the beam scanner 110, and is ended when the same time as the duration of the light pulse elapses. In the case where a third exposure period is set, the third exposure period is started at the timing of the end of the second exposure period, and is ended when the same time as the duration of the light pulse elapses.

(Step S1180)

The control circuit 130 determines whether or not the light projection by the beam scanner 110 in the light beam direction determined in step S1140 satisfies a predetermined count of the number of times light is to be projected in the same direction. In the case of a "yes" determination, the flow returns to step S1400. In the case of a "no" determination, the flow proceeds to step S1190.

(Step S1190)

The control circuit 130 causes the beam scanner 110 to emit a light beam in the direction determined in step S1140. The emitted light beam may be a light having a square pulse, for example. The duration of the pulse may be approximately 100 ns, for example. The control circuit 130 records the direction and time of the emitted light beam to the recording medium 150. For example, the emission direction and time of the light beam are recorded in association with each other, as illustrated in Fig. 6B. The time recorded here may be the start time of the end time of the pulse of the light beam, for example.

(Step S1200)

The control circuit 130 causes the image sensor 120 to execute exposure in the exposure period determined in step S1170. The exposure period is one of the first to third exposure periods described above, for example. After step S1200, the flow returns to step S1180.

(Step S1210)

The control circuit 130 causes the image sensor 120 to output, for all pixels, a signal corresponding to the quantity of charge stored in each exposure period. The signal is sent to the distance measurement unit 161 of the signal processing circuit 160.

(Step S1220)

The distance measurement unit 161 calculates the distances for the pixels having a value in any of the one or more exposure periods from among the pixels from which the charge was read out from the image sensor 120 in step S1210. The distance calculation may be executed according to the method described with reference to Figs. 17A to 18B, for example.

(Step S1230)

The distance measurement unit 161 records the distance of each pixel calculated in step S1220 to the recording medium 150. For example, data associating the coordinates and the distance of each pixel as illustrated in Fig. 6D may be recorded.

(Step S1240)

The time determination unit 164 calculates the time difference of each pixel on the basis of the time data of each light beam recorded in the recording medium 150. For example, the time determination unit 164 determines the difference between the emission time of a light beam emitted to measure the distance of a certain pixel and the reference time as the time difference. In the case where a plurality of light beams are emitted successively to measure the distance of the pixel like in the present embodiment, the difference between the first light beam, the last light beam, or a light beam in the middle of the order and the reference time may be treated as the time difference of the pixel. Alternatively, the difference between the average of the emission times of the above plurality of light beams and the reference time may be treated as the time difference of the pixel.

(Step S1250)

The time determination unit 164 records data indicating the calculated time difference of each pixel to the recording medium 150. For example, as illustrated in Fig. 6D, data associating the pixels and the time difference values is recorded. After step S1250, the flow returns to step S1130.
The above operations from step S1110 to step S1120 are repeated until light projection is completed in all preset directions. When light projection is completed in all directions, the flow proceeds to step S1260.

(Step S1260)

The depth map generation unit 162 generates depth map data expressing the distance distribution for all pixels in an image format on the basis of the distance for each pixel recorded to the recording medium 150. Here, pixels with no distance information may be denoted as having a distance of 0 or infinity.

(Step S1270)

The point cloud data generation unit 163 generates point cloud data in a predetermined three-dimensional coordinate system on the basis of the distance for each pixel recorded to the recording medium 150. For pixels having a value other than 0 or infinity, the point cloud data generation unit 163 converts the coordinates on the basis of information about the position of the image sensor 120 and the direction of the image sensor 120. With this arrangement, the depth map data is converted to point cloud data. The point cloud data generation unit 163 treats the value of the time difference associated with each pixel as the time difference for the point corresponding to the pixel.

(Step S1280)

The output unit 200 generates output data including the reference time of the frame determined in step S1110, the point cloud data generated in step S1270, and the time difference associated with each point. As illustrated in Fig. 7A or 7B for example, the output data may include data indicating the reference time of the frame, the number of points, the position of each point, and the time difference of each point.

(Step S1290)

The output unit 200 outputs the data for a single frame generated in step S1280. The output data may be recorded to any recording medium such as the recording medium 150. The output data may also be transmitted to another information processing apparatus not illustrated over a network.
Through the operations from step S1110 to step S1290, the distance measurement apparatus 100 can generate and output point cloud data including precise time difference information for a single frame. The operations from step S1110 to step S1290 may be repeated at a predetermined frame rate (such as 30 fps) for example.
In the present embodiment, the point cloud data illustrated in Fig. 7A or 7B is outputted, but the depth map data illustrated in Fig. 7C or 7D may also be outputted in addition to, or instead of, the point cloud data. In the case where depth map data is outputted instead of point cloud data, step S1270 in Fig. 19 is not executed, and in step S1280, output data in which the time difference data is associated with each pixel of the depth map is outputted. In either case, the output data includes, for each frame, data indicating the reference time, data specifying the distance or the position of a plurality of points in the scene, and data indicating the time difference of each point.

[1-3. Effects]

As above, the distance measurement apparatus 100 according to the present embodiment is provided with the beam scanner 110 that emits light toward a scene, the image sensor 120 that detects reflected light from the scene produced by the emission of light, and the signal processing circuit 160 that generates and outputs, for each frame, output data including measurement data indicating the position or distance of a plurality of points in the scene on the basis of signals outputted from the image sensor 120. The output data includes reference time data indicating a reference time determined for each frame and time difference data determined for each point, the time difference data indicating the difference from the reference time. At a certain timing, a light beam is emitted only in a portion of the range prescribed by the angle of field of the image sensor 120. By successively changing the direction of the light beam and successively measuring the distance with each pixel, depth map data or point cloud data can be generated for the entire range of the scene in which light may be detected by the image sensor 120 as a whole. With regard to the depth map data or the point cloud data, the measurement time is different for each beam, even within the same frame.

Accordingly, the signal processing circuit 160 determines a reference time for each frame, and calculates and records a precise time difference for each point in the scene.

Outputting a precise time in units of microseconds for example for each point results in an enormous amount of data. In the present embodiment, by determining a reference time for each frame and outputting the differential time with respect to the reference time for each point, precise time information for each point can be recorded and communicated with a smaller data size.

The distance measurement apparatus 100 according to the present embodiment may be connected over a network to an information processing apparatus such as a server that manages traffic conditions, for example. The information processing apparatus can collect precise measurement times (in units of microseconds, for example) corresponding to the emission timings of the light beams within a frame rather than a measurement time for a single frame (in units of milliseconds, for example) from the distance measurement apparatus 100 with less data traffic, for example. Consequently, it is possible to integrate information accurately from a plurality of equipment provided with the distance measurement apparatus 100 according to the present embodiment with less data traffic, for example.

According to the present embodiment, four-dimensional spatiotemporal information including precise time information in addition to three-dimensional position information about an object can be generated. By outputting precise time information corresponding to the three-dimensional position information, the position, movement direction, and speed of a moving object in particular can be configured more accurately. Specifically, it is possible to reproduce details about traffic conditions such as the positional relationships of a plurality of moving bodies at the moment when an accident occurred. Precise time information can be communicated with a smaller data size, and therefore communication congestion can be alleviated.

[1-4. Example modifications]

Next, example modifications of the present embodiment will be described.

The output file is not limited to a file in the format illustrated in the examples of Figs. 7A to 7D. For example, the output file may also include auxiliary time information necessary to combine point clouds, such as a protocol used for time synchronization or information about a server used as a reference.

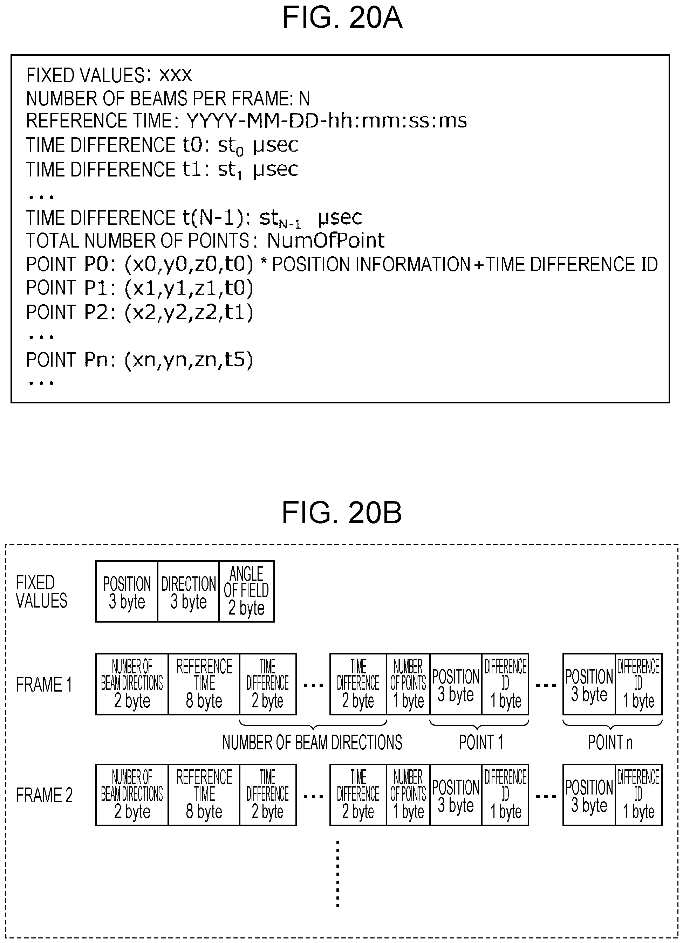

In addition, the point cloud data may also be outputted in an encoded or compressed form. In the case of encoding, a file format as illustrated in Figs. 20A and 20B may be used, for example. In the example of Figs. 20A and 20B, a time difference ID is added to the positional coordinates of each point, and the actual value of the time difference corresponding to each time difference ID is written in a separate region (for example, the upper part of a header). Note that in this example, the reference time also includes date information and is expressed in 8 bytes, for example. In this case, date information is not included in the data indicating fixed values shared among frames. The total number of time difference IDs matches the number of directions of the light beams emitted to measure distance in a single frame. In other words, the values of the time difference ID ranges from 0 to (number of light beam directions - 1). In this way, by adding the time difference ID as attribute information about each point, processing is easier from an encoding standpoint and the coding efficiency is raised easily. In other words, using the time difference ID reduces the amount of data during compression, even when considering redundant portions created by the addition of the ID. For example, in the case where the time difference has microsecond precision, the value of the time difference corresponding to the length between frames ranges from 0 to 33333, and the data size of the time difference is 16 bits. In the case where there are a plurality of points where the distance is measured by the same light beam, or in other words, in the case where the same time difference is associated with a plurality of points, the data size can be reduced by attaching the time difference ID to each point instead of the time difference itself as long as the number of light beams does not exceed the maximum value of the time difference. The number of bits needed to express the time difference ID depends on the number of light beams, but if there are 256 light beams for example, the number of bits is 8, which is fewer than 16.

In this way, using the time difference ID makes it possible to achieve a file format suitable for encoding while also keeping the data size small. In this example, the time difference ID corresponds to "time difference data" indicating the difference with respect to the reference time.

In Embodiment 1, the reference time is determined when starting the distance measurement operations for a frame, but the reference time does not need to be determined when starting the distance measurement operations for a frame. For example, the reference time and the time difference may also be determined after the distance calculations for a single frame are finished. Hereinafter, an example of operations by such an embodiment will be described.

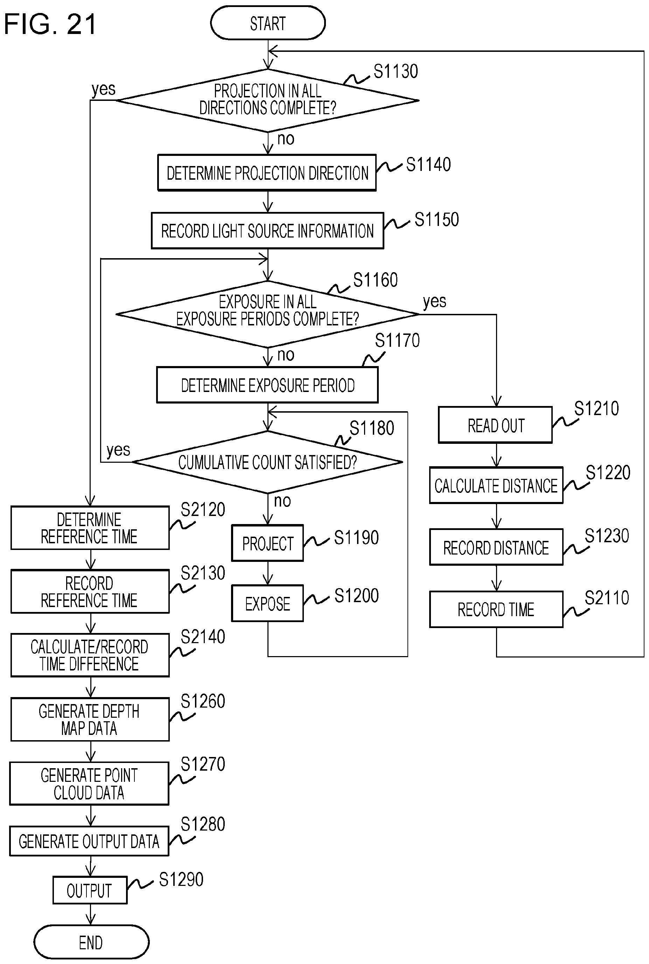

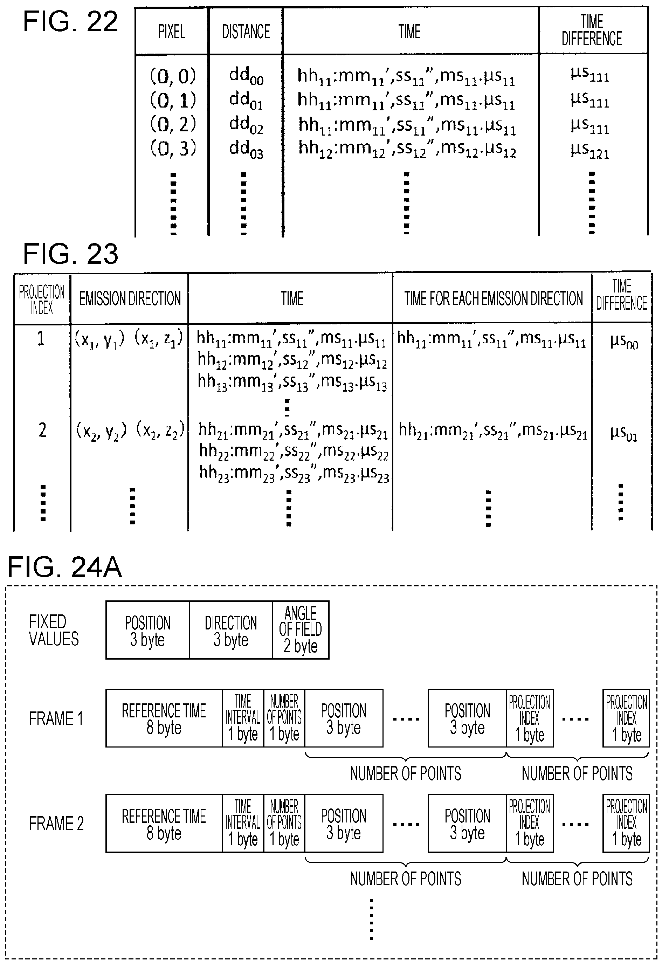

Fig. 21 is a flowchart illustrating an example of distance measurement operations for a single frame according to a modification of Embodiment 1. Fig. 22 is a diagram illustrating an example of data recorded to the recording medium 150 in the present modification. In the present modification, the data illustrated in Fig. 22 is recorded to the recording medium 150 instead of the data illustrated in Fig. 6D. The data illustrated in Figs. 6A to 6C is recorded similarly in the present modification, too.

In the flowchart of Fig. 21, steps S1130 to S1230 and steps S1260 to S1290 are the same as the operations of the corresponding steps illustrated in Fig. 19. Hereinafter, the points that differ from the operations illustrated in Fig. 19 will be described.

In the present modification, the operations from step S1130 to step S1230 are executed without determining the reference time. Thereafter, the operations in step S2110 are executed.

(Step S2110)

The time determination unit 164 determines a time corresponding to the direction of a light beam used to measure the distance of a pixel on the basis of the time information illustrated in Fig. 6B, and records the time to the table illustrated in Fig. 22. The emission time of the first light beam among a plurality of light beams emitted in the same direction may be selected as the above time, for example. Alternatively, the emission time of the last light beam or the average or median of all emission times may be used. For the pixels having a distance stored in step S1230, the time may be recorded in units of microseconds for example, as illustrated in Fig. 22. The loop that repeats from step S1130 to step S2110 corresponds to one light beam direction. The time of each light projection successively recorded to the recording medium 150 in step S1190 is removed after the time corresponding to the light projection direction is determined in step S2110. Consequently, in the table illustrated in Fig. 6B, only a single time remains for each light beam emission direction.

By repeating the operations from step S1130 to step S2110, times are recorded in the table illustrated in Fig. 22 for all pixels for which a distance is calculated. When light projection is completed in all directions in step S1130, the flow proceeds to step S2120.

(Step S2120)

The time determination unit 164 selects and determines the earliest time from among the times recorded in the table illustrated in Fig. 22 as the reference time of the frame. Besides the earliest time, the reference time may also be the latest time, a median time, or an average time.

(Step S2130)

The time determination unit 164 records the determined reference time to the recording medium 150. As illustrated in Fig. 6C, the reference time is recorded for each frame.

(Step S2140)

The time determination unit 164 calculates, for each pixel, the difference between the measurement time of each pixel recorded to the recording medium 150 and the reference time of the frame determined in step S2120. The time determination unit 164 records the calculated time differences to the recording medium 150 in association with the position and distance data for each pixel, as illustrated in Fig. 22.

The subsequent steps S1260 to S1290 are the same as the corresponding steps illustrated in Fig. 19. Through the operations from step S1260 to step S1290, data in which a precise measurement time is associated with each pixel or each point in a point cloud is outputted. Here, the precise measurement time is expressed by the time difference of each point in the scene with respect to the reference time of each frame.

In the above embodiment and modification, the reference time is determined for each frame, and the difference between the emission time of a light beam used to measure distance and the reference time is recorded as a time difference for each pixel for which the distance is measured. However, the configuration is not limited to the above, and the time difference may be expressed in any format.

Fig. 23 is a diagram illustrating another example of data recorded to the recording medium 150.

In this example, instead of the data illustrated in Fig. 6B, an order for each emission direction of a plurality of light beams (referred to as the "projection index"), the emission time of each light beam, a single representative time determined for each emission direction, and the time difference are recorded. The time difference recorded for a certain emission direction is set to the difference between the representative time recorded for the direction and the representative time recorded for the preceding different emission direction. In the example of Fig. 23, the representative time is set to the time when a light beam in the emission direction is first emitted, but may also be set to another time. A time difference associated with a light beam used to measure the distance of each pixel is adopted as the time difference of the pixel. In other words, the time difference for each pixel is the difference between the time of the corresponding light beam and the time of the preceding light beam. In this example, operations similar to the operations illustrated in Fig. 21 are performed, too. Among the data illustrated in Fig. 23, the projection index, the emission direction, and the time are recorded every time a light beam is emitted in step S1190. The representative time of each emission direction is recorded in step S2110. The time difference is recorded in step S2140. For the reference time, the emission time of the light beam emitted first in the frame, or in other words, the emission time of the first light beam from among the light beams with a projection index of 1 illustrated in Fig. 23 may be used, for example, but the reference time is not limited thereto. In the example of Fig. 23, the time difference data for each point in the scene indicates the difference between the emission time of a light beam emitted to acquire measurement data for the point and the emission time of a light beam emitted to acquire measurement data for another preceding point for which measurement data was acquired. In this way, the time difference may be expressed as the difference with respect to the emission time of a preceding light beam. In this case, an effect of reducing the data size likewise can be obtained, similarly to the example described above.

Next, another example of the formats of point cloud data and depth map data will be described with reference to Figs. 24A to 24D.

In the examples of Figs. 24A to 24D, the beam scanner 110 emits a plurality of light beams on a fixed time interval during the distance measurement operations for each frame. The reference time of each frame is set to the emission time of the light beam emitted first to acquire measurement data for the frame. The time difference data for each point in the frame includes data indicating the order of light beams emitted to acquire measurement data for the point and data indicating the time interval of the plurality of light beams.

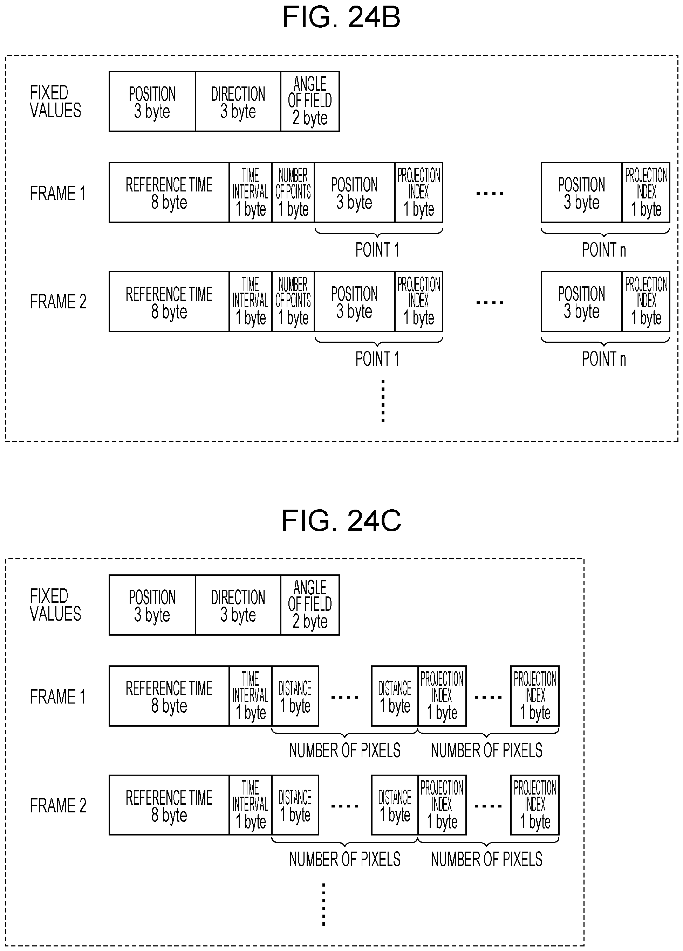

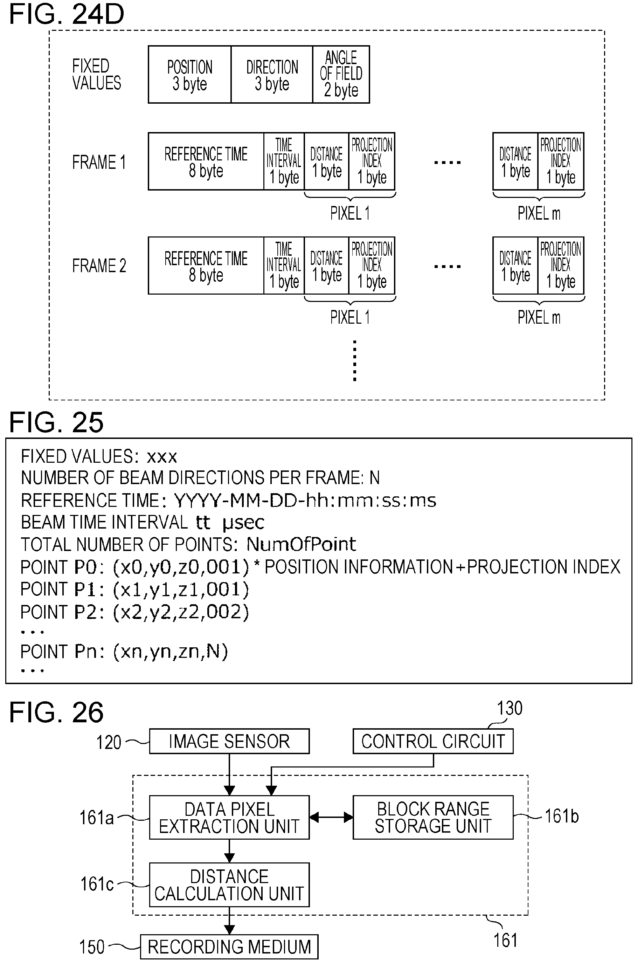

Figs. 24A and 24B illustrate modifications of the format of point cloud data. In the examples of Figs. 24A and 24B, the light beam emission direction changes on a fixed time interval within a frame. The data for each frame in the point cloud data includes the value of the time interval. Furthermore, the time difference is expressed by the projection index. The projection index indicates the order of the light beam emission directions. Provided that t0 is the reference time, Δt is the time interval, and ΔT is the time difference corresponding to the projection index k (where k = 1, 2, ...), the time difference can be calculated according to $\Delta T = t0 + (k - 1)\Delta t$. Note that in some cases, the emitted light beams may include a light beam for which reflected light is not detected by the image sensor 120. For this reason, the projection indices included in the output data are not necessarily consecutive, and there may be gaps. In the example of Fig. 24A, the data of each frame includes values indicating the reference time, the time interval of the light beams, and the number of points, followed by a value indicating positional coordinates a number of times equal to the number of points, and a value indicating the projection index a number of times equal to the number of points. On the other hand, in the example of Fig. 24B, the data of each frame includes values indicating the reference time, the time interval of the light beams, and the number of points, followed by pairs of a value indicating positional coordinates and a value indicating the projection index a number of times equal to the number of points. As one example, Fig. 25 illustrates an example of a file format corresponding to the example of Fig. 24B. In this example, the reference time includes date (that is, year, month, and day) information. The date information may also be included among the fixed values.

Figs. 24C and 24D illustrate modifications of depth map data. In the example of Fig. 24C, the data of each frame includes values indicating the reference time, the time interval of the light beams, and the number of points, followed by a value indicating the distance a number of times equal to the number of pixels, and a value indicating the projection index a number of times equal to the number of pixels. On the other hand, in the example of Fig. 24B, the data of each frame includes values indicating the reference time, the time interval of the light beams, and the number of points, followed by pairs of a value indicating the distance and a value indicating the projection index a number of times equal to the number of points. In the depth map, data for all pixels is outputted, and therefore the projection indices are consecutive in the data of each frame.

In the case where the light beam direction within a frame changes on a fixed time interval like in the examples of Figs. 24A to 24D, the time difference of each point can be expressed by the time interval and the projection index. Note that in the case where the "time interval" is a fixed value regardless of the frame, the "time interval" may also be recorded as a fixed value shared among the frames.

In the above embodiment, indirect ToF is used as the method of measuring distance, but direct ToF may also be used. In this case, the image sensor 120 is replaced by a sensor provided with a two-dimensional array of light-receiving elements including a timer/counter. In distance measurement by direct ToF, the exposure of the image sensor 120 is started at the same time as the emission of a light beam, and furthermore the operation of the timer/counter is also started at the same time. The operation of the timer/counter is stopped at the point in time when the light-receiving elements of the image sensor 120 receive a single photon. The exposure time is taken to be a duration equal to or greater than the duration corresponding to the maximum distance at which a light beam can reach and reflected light can be received, and in the case where light is not received within the exposure time, the distance is set to infinity. With direct ToF, because the time is measured by capturing a tiny amount of light, for actual distance measurement, a measurement value is determined according to a method of measuring the distance multiple times and taking a value such as the average of the obtained durations. In the case of measuring distance with a plurality of light projections, the projection time of the first light beam, the projection time of the last light beam, a median value of the projection time of all light beams in the same direction, or the like may be set as the measurement time.

The method of measuring distance is not limited to indirect ToF or direct ToF, and may be another method. For example, rather than projecting pulsed light beams, a frequency-modulated continuous wave (FMCW) method may be used. In this case, for light reception, a sensor including a two-dimensional array of light-receiving elements that detect beats of light generated by the frequency difference between the outputted continuous wave and the received reflected light may be used instead of an image sensor.

<Embodiment 2>

Next, a distance measurement apparatus according to Embodiment 2 will be described. In Embodiment 1, point cloud data indicating the three-dimensional positions of a plurality of points in a scene or depth map data indicating a distance distribution of a plurality of points in a scene includes reference time data for each frame and time difference data for each point in the scene. In contrast, in Embodiment 2, the data in each frame is divided into blocks demarcated as groups of pixels where the distance is measured by light beams emitted in the same direction, and individual time difference data is attached to each block. In other words, the output data includes the data of a plurality of blocks, each of which includes measurement data of a subset of points from among a plurality of points.

The individual time difference data for each block indicating the difference with respect to a reference time is recorded as the time difference data for each point in the block.

The distance measurement apparatus according to Embodiment 2 has the same configuration as the distance measurement apparatus according to the embodiment. The points that differ from Embodiment 1 are in the operations by the signal processing circuit 160.

Hereinafter, the points that differ from Embodiment 1 will be described mainly.

Fig. 26 is a block diagram illustrating a detailed functional configuration of the distance measurement unit 161 in the signal processing circuit 160. The distance measurement unit 161 is provided with a data pixel extraction unit 161a, a block range storage unit 161b, and a distance calculation unit 161c. Note that the data pixel extraction unit 161a and the distance calculation unit 161c may be achieved by causing the signal processing circuit 160 to execute a computer program.

The data pixel extraction unit 161a acquires a signal corresponding to the quantity of charge stored in each pixel for each exposure period from the image sensor 120. The data pixel extraction unit 161a also acquires information indicating the direction of an emitted light beam from the control circuit 130. The data pixel extraction unit 161a references the block range storage unit 161b to extract a range of pixels where reflected light of the light beam in the indicated direction may be received.

Furthermore, the data pixel extraction unit 161a extracts, from among the pixels of the image sensor 120, pixels which have a non-zero value in at least one of the two signals acquired for the two or more exposure periods, and which overlap with the above range of pixels. Pixels within the range of a predetermined number of pixels including the extracted pixels are determined as a block of pixels corresponding to the light beam. The predetermined number of pixels may be 100 included in a square region of 10 pixels in the x-axis direction and 10 pixels in the y-axis direction, for example.

The block range storage unit 161b is a recording medium such as memory. In the example of Fig. 26, the block range storage unit 161b is a separate element from the recording medium 150, but may also be included in the recording medium 150. In the block range storage unit 161b, each emission direction of a light beam is associated with a pixel range where reflected light of the light beam may be received. Furthermore, for each emission direction, a range of pixels that would receive reflected light from an object under the assumption that a sufficiently large object exists at a distance 100 m away for example is recorded as a "standard pixel range".

The standard pixel range is included in the pixel range.

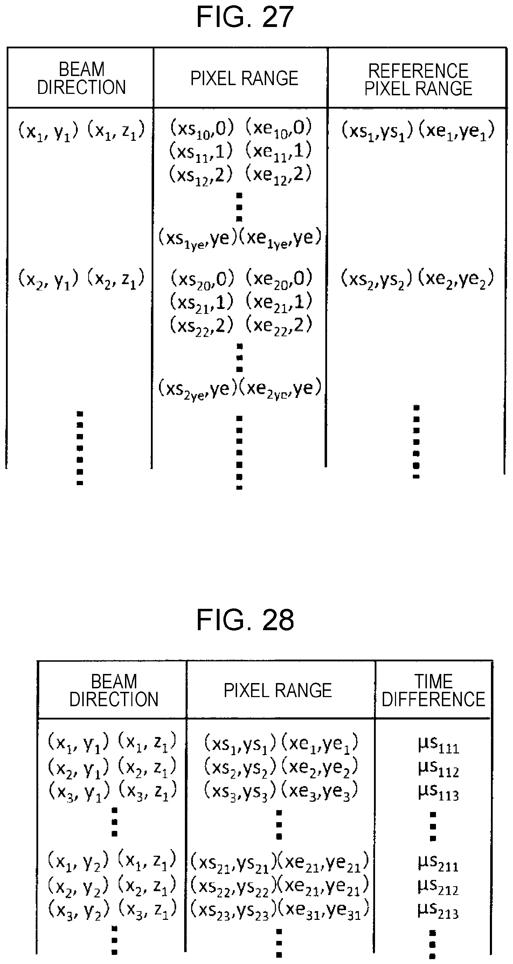

Fig. 27 illustrates an example of information recorded to the block range storage unit 161b. In this example, the emission direction of a light beam is recorded as a unit vector on the xy plane parallel to the light-receiving surface of the image sensor 120 and a unit vector on the xz plane. The pixel range may be specified as a range of pixels included in a rectangular region from among the pixels of the image sensor 120. For example, the pixel range may be expressed by the most upper-left pixel position and the most lower-right pixel position in the outputted image. Similarly, the standard pixel range may also be specified by the most upper-left pixel position and the most lower-right pixel position in the image.

The distance calculation unit 161c calculates the distance only for the pixel range determined by the data pixel extraction unit 161a. The distance refers to the distance from the light-receiving surface of the image sensor 120 to an object. The distance may be calculated according to the indirect ToF method or the direct ToF method described above, for example.

Fig. 28 is a diagram illustrating an example of information recorded to the recording medium 150 in the present embodiment. In the present embodiment, the data illustrated in Fig. 28 is recorded in addition to the data illustrated in Figs. 6A to 6D during operations. The data illustrated in Fig. 28 includes a beam direction, a pixel range indicating a block, and time difference information. In the present embodiment, a pixel group that receives the reflected light of a light beam in one direction emitted from the beam scanner 110 is treated as a single block. Even if the directions of the light beams are the same, the path of the reflected light will change depending on the position of an object, and therefore the positions and sizes of the blocks may be different every time light is projected. In the case where distance measurement using a light beam in one direction is performed once per frame, the blocks may be different for each frame.

As described above, in actual distance measurement, because the energy of the reflected light is small, not enough charge may be stored from a single projection and exposure in some cases. In such cases, sufficient charge may be stored by repeatedly projecting light in the same direction multiple times and repeating exposure for a single distance measurement. Note that an identifier (ID) for identifying a block may also be recorded instead of the information indicating the beam direction. The pixel range of a block may be specified by the coordinates of a first pixel (for example, the most upper-left pixel) and the coordinates of a last pixel (for example, the most lower-right pixel) among the plurality of pixels included in the block, for example. The specification of the pixel range of a block is not limited to coordinate values, and may also be specified by pixel IDs. The time difference is recorded in association with the beam direction and the pixel range of a block. The time difference may be recorded in units of microseconds or nanoseconds, for example. The measurement time is determined by the timing of the emission of a light beam or by the timing of receiving the reflected light of the light beam.

Consequently, the measurement time is shared within a block corresponding to light beams in one direction.

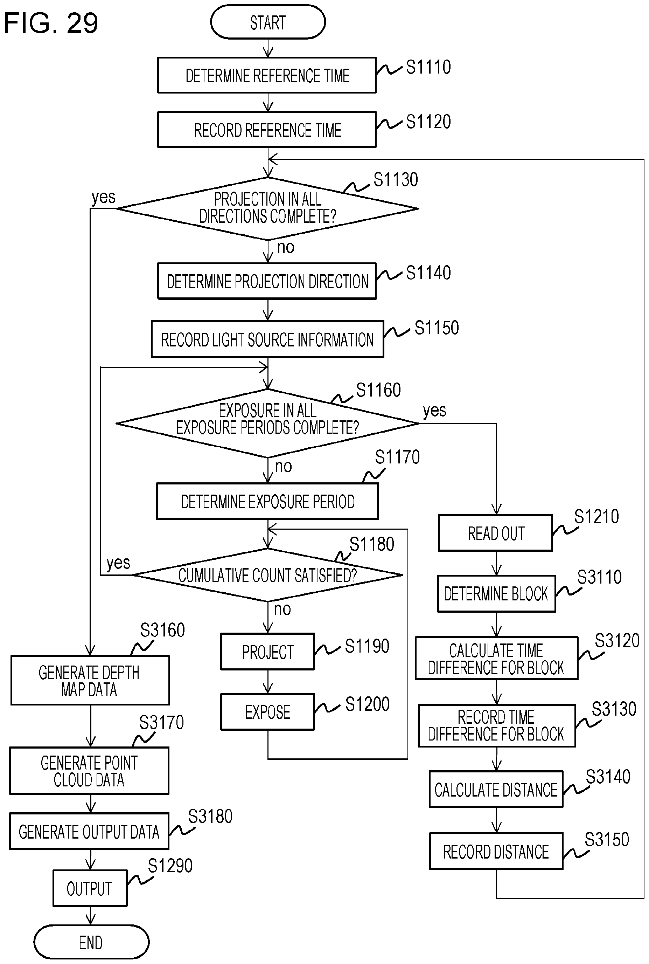

Fig. 29 is a flowchart illustrating an example of operations by the distance measurement apparatus according to Embodiment 2. In the flowchart, steps S1110 to S1210 and step S1290 are the same as the operations of the corresponding steps illustrated in Fig. 19. Hereinafter, the points that differ from the operations illustrated in Fig. 19 will be described mainly.

Through the operations from step S1130 to step S1210, time information for each light projection is recorded as illustrated in Fig. 6B. In step S1210, the distance measurement unit 161 acquires a signal corresponding to the quantity of charge stored in each exposure period for all pixels of the image sensor 120.

(Step S3110)

The distance measurement unit 161 of the signal processing circuit 160 determines a block of pixels that received reflected light of a light beam from among all pixels of the image sensor 120. Specifically, the data pixel extraction unit 161a of the distance measurement unit 161 references the block range storage unit 161b to determine a range of pixels where reflected light from an object may be received in correspondence with the direction of the light beam. Additionally, on the basis of quantities of charge stored in each exposure period, the data pixel extraction unit 161a detects pixels having a non-zero value in one of the exposure periods from among the range of pixels where reflected light from an object may be received. The detected pixels and surrounding pixels are determined as a block. The block may contain the pixels in a square region of 10 pixels in the x-axis direction and 10 pixels in the y-axis direction, for example. A range centered on one or more pixels having a non-zero value of the quantity of charge in one of the exposure periods is determined. In the case where the pixels having a non-zero value in one of the exposure periods are distributed over a plurality of regions, a range of predetermined size containing as many of the pixels as possible is determined. In the case where a pixel having a non-zero value in one of the exposure periods inside the range is not detected, a plurality of pixels included in a standard pixel range defined in advance for each emission direction is determined as the block. As described with reference to Fig. 27 for example, the standard pixel range may be the range of pixels where reflected light from an object is received in the case where a sufficiently large object exists at a position 100 m away from the light-receiving surface of the image sensor 120. Details of the operations in step S3110 will be described later.

(Step S3120)

The time determination unit 164 calculates the time difference for each block. On the basis of the precise time information for each light beam illustrated in Fig. 6B, the time determination unit 164 determines a single time (referred to as the "representative time") for an emission direction of interest. The representative time may be the emission time of the first light beam among the light beams emitted in the direction, for example. Alternatively, the representative time may be the emission time of the last light beam, a median value of the emission times of the plurality of light beams, or an average value of the emission times of all of the light beams. The time determination unit 164 treats the difference between the determined representative time and the already determined reference time as the time difference of the block corresponding to light beams in the direction.

(Step S3130)

The time determination unit 164 records the determined time difference to the recording medium 150 in association with information about the pixel range of the block. For example, data like the data illustrated in Fig. 28 is recorded. The beam direction, the start pixel and the end pixel of the pixel range included in the block corresponding to the beam direction, and the time difference corresponding to the beam direction and the block are recorded.

(Step S3140)

The distance calculation unit 161c calculates the distance for each pixel included in the block determined in step S3110. The method of calculating the distance is as described above.

(Step S3150)

The distance calculation unit 161c records the calculated distance for each pixel in the block to the recording medium 150. The distance of each pixel may be recorded in the format illustrated in Fig. 6D, for example. Note that in the example of Fig. 6D, information indicating the time difference is recorded for each pixel, but this information indicating the time difference may be omitted. As illustrated in Fig. 28, in the present embodiment, the time difference is recorded for each block, and consequently information indicating the time difference for each pixel does not have to be recorded. After step S3150, the flow returns to step S1130.

In step S1130, if it is determined that light projection has been completed in all preset directions, the flow proceeds to step S3160.

(Step S3160)

The depth map generation unit 162 generates depth map data expressing the distance distribution for all pixels in an image format on the basis of the distance for each pixel recorded to the recording medium 150. Here, pixels with no distance information may be denoted as having a distance of 0 or infinity.

(Step S3170)

The point cloud data generation unit 163 generates point cloud data in a predetermined three-dimensional coordinate system on the basis of the distance for each pixel recorded to the recording medium 150. For pixels having a value other than 0 or infinity, the point cloud data generation unit 163 converts the coordinates on the basis of information about the position of the image sensor 120 and the direction of the image sensor 120. With this arrangement, the depth map data is converted to point cloud data. The point cloud data generation unit 163 divides the plurality of points in the point cloud data into a plurality of blocks according to the information about the block containing the pixel acting as the source of each point in the point cloud data. The time difference calculated in step S3140 is attached to each block.

(Step S3180)

The output unit 200 generates output data including the reference time data for the frame determined in step S1110, the point cloud data generated in step S3170, and the time difference data associated with each block.

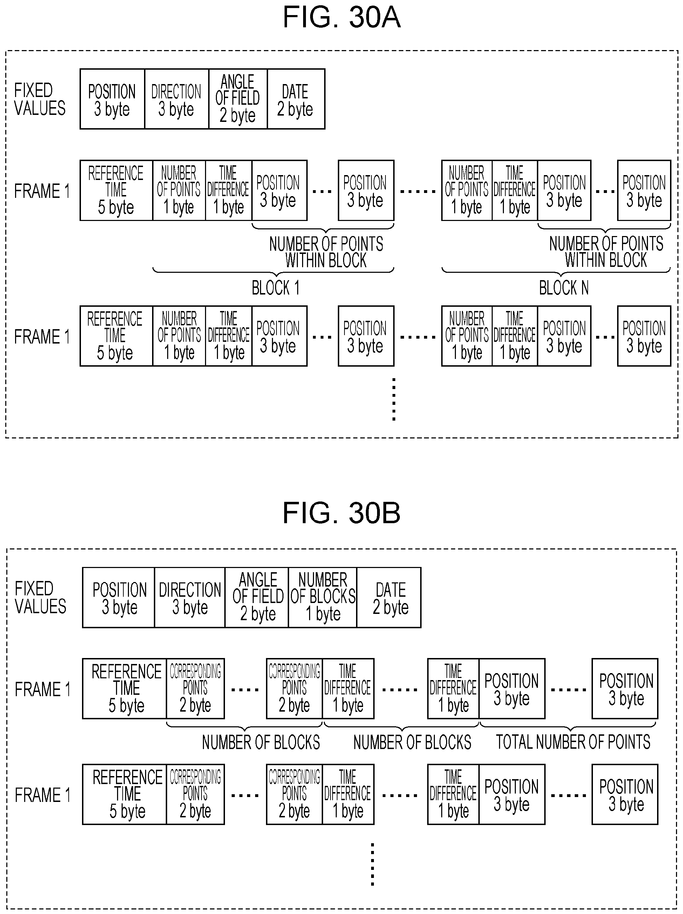

Fig. 30A is a diagram illustrating an example of an output data format according to the present embodiment. In this example, the output data for each frame includes a reference time and data for each block. The data for each block includes information about the number of points included in the block, the time difference of the block, and the position of each of the plurality of points included in the block. The number of points included in the block may be expressed in 1 byte, for example. By iterating data sets of the number of points in each block, the time, and the position of each point a number of iterations equal to the number of blocks, the outputting of the data for a single frame is completed. Note that in the example of Fig. 30A, the number of blocks is a known fixed value.

Fig. 30B illustrates another example of the output data format. In this example, ID numbers associating each point of point cloud data with each pixel in the depth map acting as the source from which the point cloud data is converted are assigned sequentially. The number of blocks, that is, the number of light beam directions within a single frame, is outputted as a fixed value shared among all frames. Moreover, data is outputted for each frame. For each frame, the plurality of points included in each block may be specified by the 2 bytes of the ID (1 byte, for example) of the first point and the ID (1 byte, for example) of the last point among the plurality of points included in each of the blocks. The data is outputted after the reference time data and is outputted a number of times equal to the number of blocks, and thereafter, the time difference for each block is outputted a number of times equal to the number of blocks. At this time, the data of the plurality of points corresponding to a block and the time difference data are outputted in an arrangement such that information about the same block is in the same order. After the data for each block, the position of each point of the point cloud in the three-dimensional coordinate system is outputted. The points in the point cloud at this time are arranged in order of the point cloud ID. The position is outputted in 3 bytes for each point for example, and is outputted consecutively a number of times equal to the number of points. Note that in the case where the number of blocks differs depending on the frame, information about the number of blocks may also be included in the information for each frame.

In the present embodiment, the point cloud data includes data of a plurality of blocks, and the data of each block includes time difference data associated with the block. This configuration is not limited to point cloud data, and data with a time difference attached to each block may also be outputted similarly for depth map data.

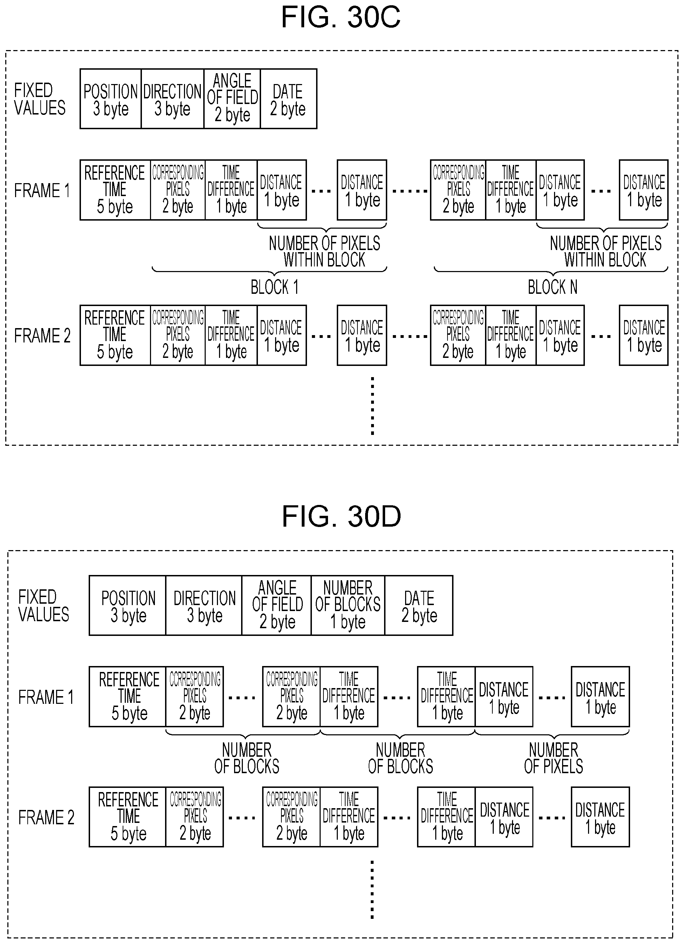

Fig. 30C is a diagram illustrating an example of a data format of depth map data with a time difference attached to each block. Like the above example, fixed values which are data shared among a plurality of frames and data that is different for each frame are outputted. In the example of Fig. 30C, the output data for each frame includes reference time data followed by data for each block indicating the range of corresponding pixels, the time difference, and the distance of each pixel. In this example, an ID is assigned to each pixel. For each frame, the range of the plurality of pixels included in each of the blocks, that is, the IDs of the pixels at the start point and the end point, may be expressed in 2 bytes, for example. The information about the number of pixels may also be included in the data indicating the corresponding pixels. By iterating data sets of the reference time together with the corresponding pixels for each block, the time difference for each block, and the distance for each pixel a number of iterations equal to the number of blocks, the outputting of the data for a single frame is completed. Note that in the example of Fig. 30C, the number of blocks is a known fixed value. The number of blocks may also be included among the fixed values.

Fig. 30D illustrates another example of the output data format. In this example, information indicating the number of blocks is included among the fixed values. The number of blocks may be expressed in 1 byte, for example. Each frame includes a reference time followed by the range of the plurality of pixels included in each of the blocks, that is, the IDs of the pixels at the start point and the end point, which may be expressed in 2 bytes for example. Next, the time difference corresponding to each block may be expressed in 1 byte, for example. Finally, the distance measured for each pixel may be expressed in 1 byte.

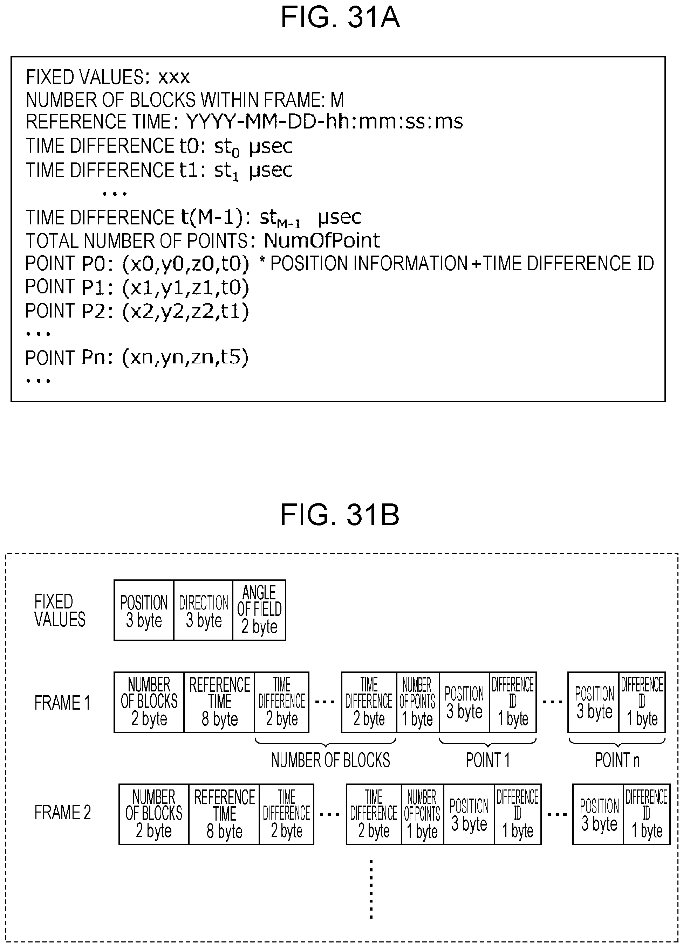

The signal processing circuit 160 may also output point cloud data or depth map data in an encoded or compressed form. In the case of encoding, a file format as illustrated in Figs. 31A and 31B may be used, for example. In the example of Figs. 31A and 31B, a time difference ID is added to the positional coordinates of each point in the point cloud data, and the actual value of the time difference corresponding to each time difference ID is written in a separate region (for example, the upper part of a header). In this example, the reference time also includes date information and is expressed in 8 bytes, for example. In this case, date information is not included in the data indicating fixed values shared among frames. The total number of time difference IDs matches the number of blocks. In other words, the values of the time difference ID range from 0 to (number of blocks - 1). In this way, by adding the time difference ID as attribute information about each point, processing is easier from an encoding standpoint and the coding efficiency is raised easily. In other words, using the time difference ID reduces the amount of data during compression, even when considering redundant portions created by the addition of the ID. For example, in the case where the time difference has microsecond precision, the value of the time difference corresponding to the length between frames ranges from 0 to 33333, and the data size of the time difference is 16 bits. If the same time difference is associated with a plurality of points, the amount of data can be reduced by attaching the time difference ID to each point instead of the time difference itself. The number of bits needed for the time difference ID depends on the number of blocks in a frame, but if there are 256 blocks for example, the number of bits is 8, which is fewer than 16.

In this way, using the time difference ID makes it possible to achieve a file format suitable for encoding while also keeping the data size small. Note that a similar file format may also be applied to depth map data.

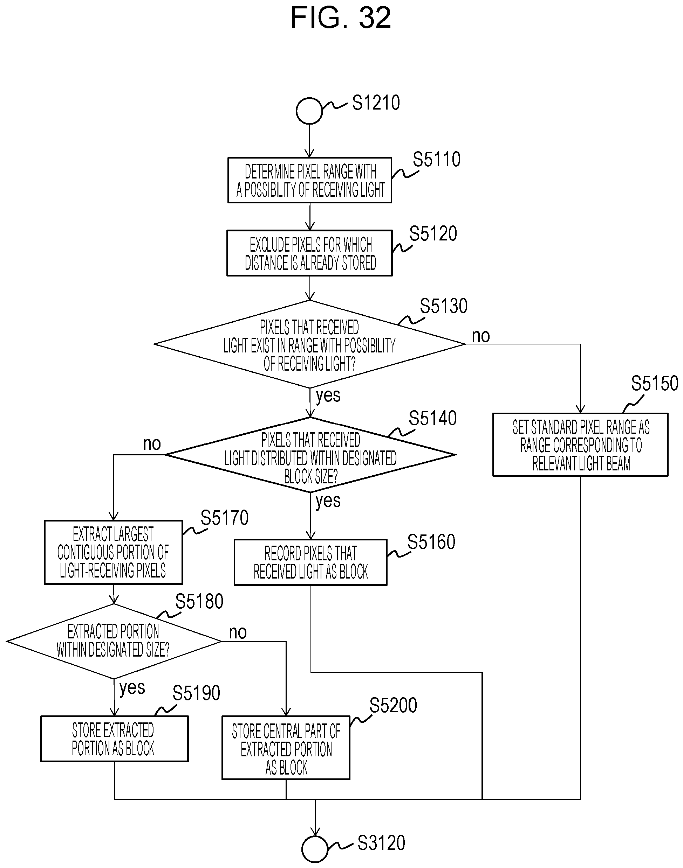

Next, details of the operations in step S3110 will be described. Fig. 32 is a flowchart illustrating details of the operations in step S3110. Step S3110 includes steps S5110 to S2110 illustrated in Fig. 32. Hereinafter, the operation in each step will be described.

(Step S5110)

The data pixel extraction unit 161a of the distance measurement unit 161 references the block range storage unit 161b to determine a range of pixels where reflected light from an object may be received in correspondence with the direction of the light beam. For example, in the example of Fig. 27, a "pixel range" corresponding to the light beam direction determined in step S1140 is extracted. If a light beam is emitted in a direction other than the direction orthogonal to the light-receiving surface of the image sensor 120, and light diffused from an object is condensed by an optical lens with no distortion, the condensed light is detected at a specific position on the light-receiving surface of the image sensor 120. The position lies on a straight-line projection of the light beam direction onto the light-receiving surface, and the position on the straight line where the light is incident changes depending on the distance between the object and the image sensor 120.

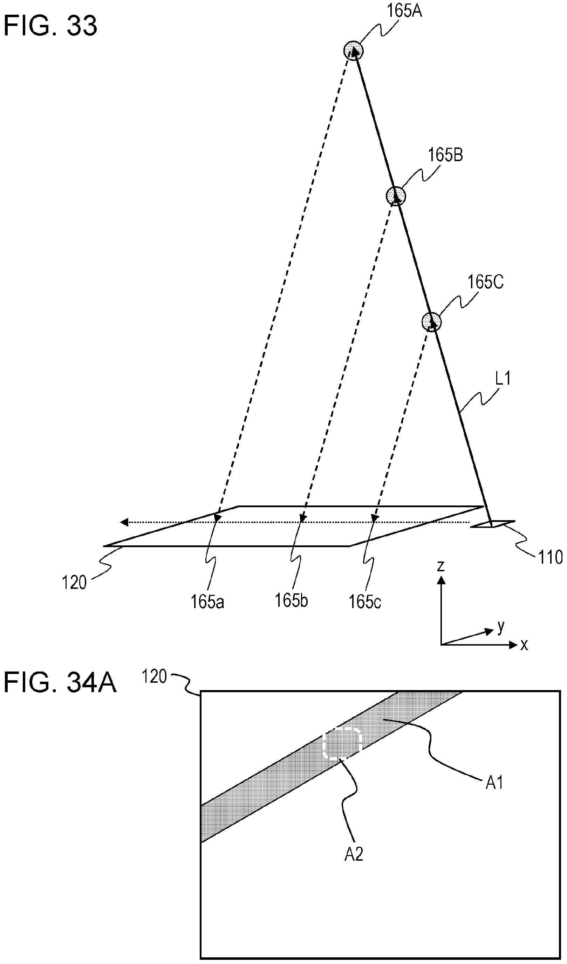

Fig. 33 is a schematic diagram illustrating the relationship between the direction of a light beam, the position of an object, and the incident position of reflected light from the object on the light-receiving surface of the image sensor 120. In Fig. 33, a light beam emitted from the beam scanner 110 is illustrated by a solid arrow L1. Reflected light produced in the case where an object exists at each of the positions 165A, 165B, and 165C is illustrated by dashed arrows. Reflected light from an object existing at the position 165A is incident on a position 165a on the light-receiving surface. Reflected light from an object existing at the position 165B is incident on a position 165b on the light-receiving surface. Reflected light from an object existing at the position 165C is incident on a position 165c on the light-receiving surface. The positions 165a, 165b, and 165c lie on a straight line obtained by projecting the path of the light beam L1 onto a plane including the light-receiving surface of the image sensor 120. The "pixel range" illustrated in Fig. 27 is set along this line, and is given a pixel width according to the spread of the light beam. The pixel range expresses the range where reflected light may be received on the image sensor 120. On the other hand, the "standard pixel range" illustrated in Fig. 27 expresses a range of pixels where reflected light may be received in the case of assuming that an object exists at a maximum distance (for example, 100 m) from which reflected light of the light beam may be detected.

(Step S5120)

In the case where a pixel for which a distance is already recorded in the recording medium 150 from among the pixels in the range where reflected light may be received that was determined in step S5110, the data pixel extraction unit 161a excludes the pixel from the range of pixels where reflected light may be received.

(Step S5130)

The data pixel extraction unit 161a determines whether or not pixels in the range determined in step S5110 and not excluded in step S5120 received light in one of the exposure periods. In the case of a "yes" determination, the flow proceeds to step S5140. In the case of a "no" determination, the flow proceeds to step S5150.

(Step S5140)

The data pixel extraction unit 161a determines whether or not the pixels that received light in one of the exposure periods that were specified in step S5130 are distributed in a range smaller than a predetermined block size. The predetermined block size may be 10 pixels each horizontally and vertically, for example. In the case of a "yes" determination in step S5140, the flow proceeds to step S5160. In the case of a "no" determination in step S5140, the flow proceeds to step S5170.

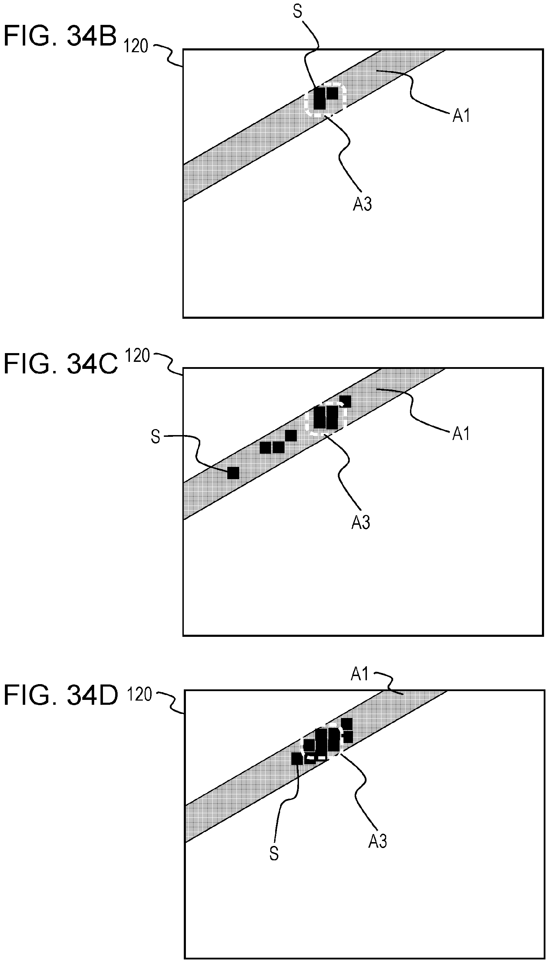

Fig. 34A is a diagram illustrating an example of a pixel range A1 where there is a possibility of receiving light and a standard pixel range A2 on the light-receiving surface of the image sensor 120. Fig. 34B is a diagram illustrating an example of a state in which pixels S that received light in one of the exposure periods are distributed inside a range A3 of predetermined size in the range where there is a possibility of receiving light. Figs. 34C and 34D are diagrams illustrating examples of a state in which pixels S that received light in one of the exposure periods are distributed beyond the range A3 of predetermined size in the range where there is a possibility of receiving light. In cases like the example in Fig. 34B, a "yes" determination is made in step S5140. On the other hand, in cases like the example in Fig. 34C or 34D, a "no" determination is made in step S5140.

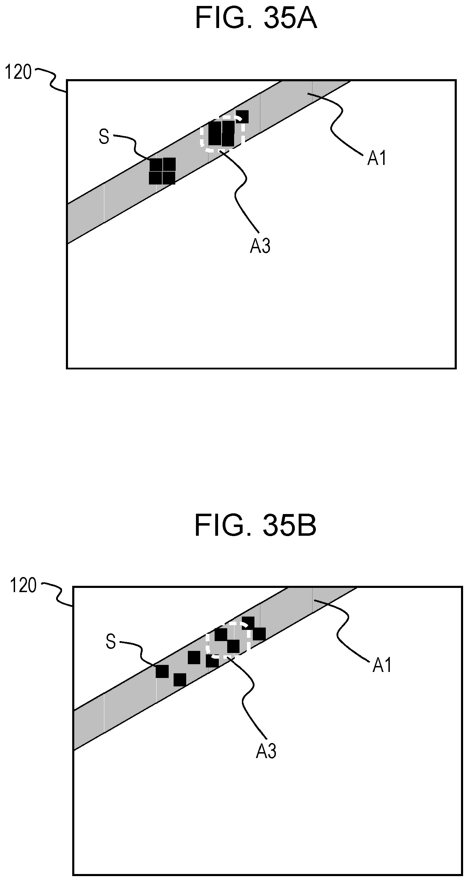

Note that as a special case, multiple ranges of contiguous light-receiving pixels S having the same size may be detected, like the example in Fig. 35A. Alternatively, the light-receiving pixels S may be distributed uniformly across the range A1 where there is a possibility of receiving light, like the example in Fig. 35B. To handle these exceptions, in the case of Fig. 35A, the range of contiguous light-receiving pixels S having more nearby pixels that received light, including pixels outside the range A1 where there is a possibility of receiving light, may be set as a block, for example. In the case of Fig. 35B, a region A3 with the block size positioned in the center of the range of the distribution of the light-receiving pixels S may be set as a block, for example.

(Step S5150)

The data pixel extraction unit 161a sets the standard pixel range stored in the block range storage unit 161b as a block. This step is executed in cases like the one illustrated in Fig. 34A, for example. After executing step S5150, the flow proceeds to step S3120.

(Step S5160)

The data pixel extraction unit 161a sets the contiguous pixels that received light inside the range where there is a possibility of receiving light that were extracted in step S5110 as a block. This step is executed in cases like the one illustrated in Fig. 34B, for example. After executing step S5160, the flow proceeds to step S3120.

(Step S5170)

The data pixel extraction unit 161a specifies regions of contiguous light-receiving pixels in which all adjacent pixels are light-receiving pixels. The largest of the specified regions of contiguous light-receiving pixels, that is, the region containing the greatest number of pixels, is extracted.

(Step S5180)

The data pixel extraction unit 161a determines whether or not the largest of the regions of contiguous light-receiving pixels that was extracted in step S5170 is a predetermined block size or less. In the case of a "yes" determination, the flow proceeds to step S5190. In the case of a "no" determination, the flow proceeds to step S5200.

(Step S5190)

The data pixel extraction unit 161a sets the region extracted in step S5170 as a block. This step is executed in cases like the one illustrated in Fig. 34C, for example. After executing step S5190, the flow proceeds to step S3120.

(Step S5200)

The data pixel extraction unit 161a sets a block centered on a central portion of the region extracted in step S5170, such as a center-of-gravity position of the coordinates of all light-receiving pixels included in the region, for example. The block may also be set such that a central position of the block overlaps the center of the region extracted in step S5170. This step is executed in cases like the one illustrated in Fig. 34D, for example. After executing step S5200, the flow proceeds to step S3120.

As above, the distance measurement apparatus according to Embodiment 2 divides depth map data and/or the data of a plurality of points in point cloud data converted from the depth map into blocks for each light beam direction. Moreover, the time difference is recorded for each block. Rather than outputting data with the time attached to all points in the depth map data or the point cloud data, data is outputted with the time attached to each block. Consequently, the data size can be reduced further.

<Embodiment 3>

Next, a vehicle control system according to Embodiment 3 will be described.

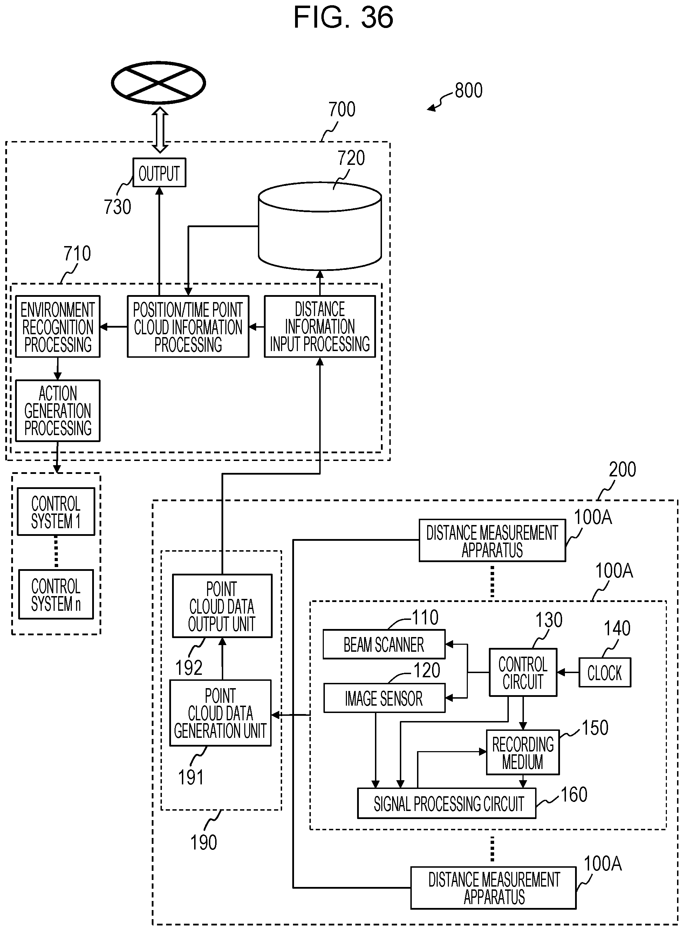

Fig. 36 is a block diagram illustrating a configuration of a vehicle control system 800 according to Embodiment 3. The vehicle control system 800 includes a point cloud data acquisition system 200 and a self-driving control system 700. The point cloud data acquisition system 200 is provided with a plurality of distance measurement apparatuses 100A and a processor 190. The self-driving control system 700 is provided with an information processing apparatus 710, a recording medium 720, and an output interface 730.

Each distance measurement apparatus 100A has a configuration similar to the distance measurement apparatus according to any of the embodiments described above. In Fig. 36, the configuration of only a single distance measurement apparatus 100A is illustrated. The plurality of distance measurement apparatuses 100A all include the same functions and are installed in different locations in a vehicle. The signal processing circuit 160 of each distance measurement apparatus 100A outputs depth map data. In the present embodiment, point cloud data is generated by a processing device, namely a processor 190, disposed outside the distance measurement apparatuses 100A. The processor 190 combines a plurality of depth map data respectively outputted from the plurality of distance measurement apparatuses 100A, and outputs a single set of point cloud data. The processor 190 is provided with a point cloud data generation unit 191 and a point cloud data output unit 192. The point cloud data generation unit 191 and the point cloud data output unit 192 each may be achieved as a special-purpose circuit. Alternatively, the processor 190 may function as the point cloud data generation unit 191 and the point cloud data output unit 192 by executing a computer program.

Each distance measurement apparatus 100A generates depth map data with a reference time attached to each frame and a time difference attached to each pixel or each block inside the frame by executing operations similar to the operations in any of the embodiments described above. For example, depth map data like the data illustrated in any of Figs. 7C, 7D, 24C, 24D, 30C, or 30D may be generated. The depth map data is sent to the point cloud data generation unit 191. Note that ID information that identifies each of the plurality of distance measurement apparatuses 100A may also be included in the depth map data as fixed values shared among the plurality of frames.

The point cloud data generation unit 191 generates point cloud data by combining the depth map data respectively acquired from the plurality of distance measurement apparatuses 100A. Specifically, the point cloud data generation unit 191 successively acquires the depth map data from the plurality of distance measurement apparatuses 100A, and calculates the measurement time of each pixel on the basis of the reference time and the time difference included in the data. Additionally, combined three-dimensional point cloud data is generated from the distance data of pixels with relatively close measurement times. In one example, the point cloud data generation unit 191 combines the depth maps for which the measurement time is within a fixed time range from among the acquired depth maps for a plurality of frames as a single "frame" in the point cloud data. In another example, the point cloud data generation unit 191 combines pixel groups for which the measurement time is within a fixed time range in the depth map for a single frame as a single "frame" in the point cloud data. In the latter example, the data in one depth map may be divided into a plurality of "frames" in the point cloud data. The fixed time range may be approximately 30 milliseconds, for example.

The point cloud data generation unit 191 also acquires data indicating the position and attitude of each image sensor 120 from each of the distance measurement apparatuses 100A. On the basis of the acquired data, the point cloud data generation unit 191 converts the distance data for pixels having a value other than 0 or infinity from among the pixels in each of the depth maps to three-dimensional coordinate data. With this arrangement, the point cloud data generation unit 191 can convert the depth map data to three-dimensional point cloud data. The three-dimensional coordinate system may take the center of the vehicle as the origin, for example. The point cloud data generation unit 191 generates the point cloud data by treating the associations between the pixels or blocks and the time differences in the depth map data from which the point cloud is converted as associations between the points or blocks and the time differences in the point cloud data.

The point cloud data generation unit 191 may also newly determine a reference time and a time difference for each point or block in the point cloud data. For example, one of the reference times or the average of the reference times attached to the depth map data outputted from the plurality of distance measurement apparatuses 100A may be treated as a new reference time. By recalculating the time difference of each point on the basis of the new reference time, the time difference for each point in the combined point cloud data can be determined.

The point cloud data output unit 192 outputs the generated point cloud data as an output data sequence for each fixed time above, for example. The output data sequences are sent to the information processing apparatus 710 in the self-driving control system 700.

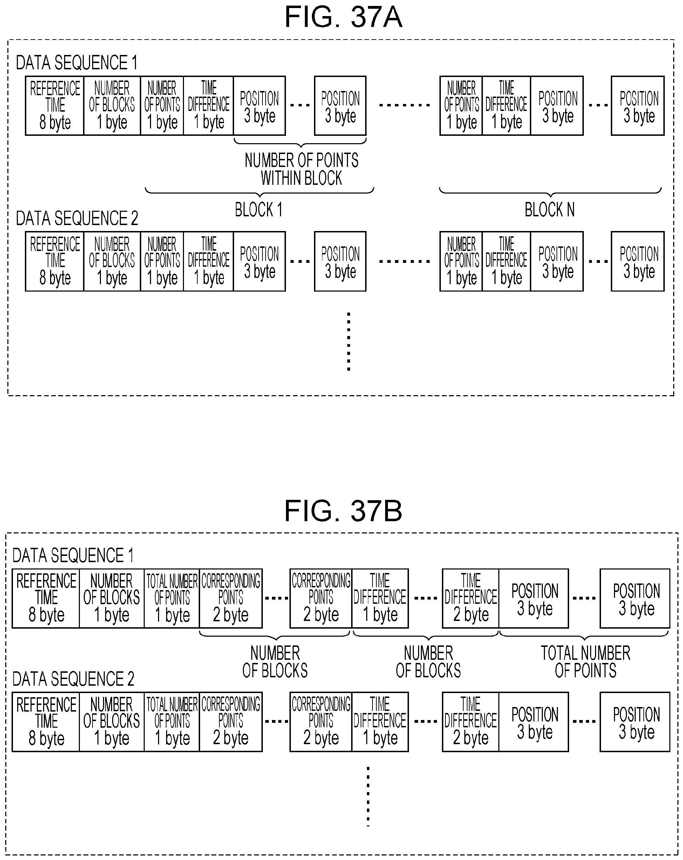

Fig. 37A illustrates an example of the data format of the output data sequence. In this example, the point cloud data is divided into blocks, and individual time information is attached to each block. In the example of Fig. 37A, for each data sequence, the reference time is outputted in 8 bytes and the number of blocks is outputted in 1 byte first, and thereafter for each block, the number of points included in the block is outputted in 1 byte, the time difference is outputted in 1 byte, and the three-dimensional position information for each point is outputted in 3 bytes.

Fig. 37B illustrates another example of the data format of the output data sequence. In this example, for each data sequence, the reference time is outputted in 8 bytes, the number of blocks is outputted in 1 byte, and the total number of points is outputted in 1 byte first, and thereafter, the number of corresponding points in each block is outputted in 2 bytes a number of times equal to the number of blocks, the time is outputted in 5 bytes a number of times equal to the number of blocks, and the three-dimensional position information for each point is outputted in 3 bytes a number of times equal to the total number of points.

Note that in Figs. 37A and 37B, an identifier (ID) may also be assigned to each data sequence. The identifier may be incremented by 1 for each data sequence, and may also be reset to 0 at a predetermined number. Additionally, acquired sensor information may also be included in the data sequences. For example, the number of sensor groups including an image sensor and fixed values for each sensor (such as the position, direction, and angle of field) may also be included in the data sequences. A sensor ID may also be assigned to each block as information indicating which of the plurality of sensors acquired each block.

In the present embodiment, the processor 190 combines the depth map data respectively outputted from the plurality of distance measurement apparatuses 100A, and generates a data sequence including data indicating the reference time and data indicating the time difference for each point or block. However, the present embodiment is not limited to such a configuration, and the processor 190 may also generate a data sequence including data indicating the measurement time of each point or each block instead of data indicating the reference time and data indicating the time difference for each point or each block. The measurement time of each point or each block can be calculated on the basis of the data indicating the reference time and the data indicating the time difference. In this case, the "reference time" data may be removed from the data sequence illustrated in Fig. 37A or 37B for example, and a data sequence including "measurement time" data instead of "time difference" data may be outputted.

The self-driving control system 700 controls the self-driving of the vehicle on the basis of the point cloud data successively acquired from the point cloud data acquisition system 200. The self-driving control system 700 is provided with an information processing apparatus 710, and a recording medium 720. Various data such as map data is recorded in the recording medium 720. Various data may also be acquired and updated as needed through communication. The information processing apparatus 710 transmits appropriate instructions to a plurality of control systems on the basis of the map data and the point cloud data successively acquired from the point cloud data acquisition system 200. The control systems include mechanisms such as an accelerator, brakes, and steering, for example. According to the present embodiment, because appropriately time-adjusted point cloud data is sent from the point cloud data acquisition system 200, the possibility of misrecognition caused by time errors can be reduced.

<Other embodiments>

The foregoing embodiments illustrate examples of the data format, but another data format may also be used. For example, the numbers of bytes in each type of data are not limited to the values described above and may be other fixed values, or may be variable. In the case of variable numbers of bytes, the byte lengths may be included in the data separately. Additionally, synchronization information or delimiters in a predetermined data format may also be used as information indicating the boundaries between blocks, frames, or the data from each of the sensors. When analyzing data, the analysis of the data is possible after acquiring the synchronization information. The boundaries between data may also be indicated by including information about data lengths or data counts in the data, or the boundaries between data may be indicated by a combination of synchronization information and data lengths or data counts. Each piece of data may also be handled in a packet format.

A packet may indicate the type and length of the packet, the data, and the like, and shared information about the data may be indicated in a packet header, for example.

In the embodiments described above, the beam shape and the beam diameter of the light beam are fixed, but the beam shape and the beam diameter may also be adjustable for each frame.

By reducing the beam diameter, the light beam reaches farther with the same energy of light. In the case of adjusting the distance range for each frame while maintaining the same energy of emitted light, it is effective to adjust the beam shape and the beam diameter for each frame. Pixels in the depth map may be grouped into blocks for each beam direction, and points in the point cloud data converted from the depth map may also be grouped into blocks.

In each embodiment described above, the beam diameter of the light beam is fixed during the distance calculation operations for a single frame. In contrast, the beam diameter may be adjustable even during the distance calculation operations for a single frame. Light projection may include flash projection, which can be used to irradiate the range of the entire angle of field of the image sensor 120 with light all at once. By making the beam shape and the beam diameter of the light beam variable, high-precision distance measurement can be achieved with fewer projections of light. Pixels in the depth map may be grouped into blocks for each beam type or direction, and points in the point cloud data converted from the depth map may also be grouped into blocks.

The beam scanner 110 may also be configured to emit a plurality of light beams at the same time. In this case, the control circuit 130 may adjust the direction of each light beam emitted from the beam scanner 110 such that the reflected light of the light beams is not received by the same pixels. A plurality of light beams may be emitted at the same time, and data about a plurality of pixel blocks having the same time difference data may be outputted. By emitting the plurality of light beams at the same time in different directions, and scanning a target scene while varying the combination of directions, the time taken to scan the entire scene can be shortened. Furthermore, by outputting a single piece of time information in association with a plurality of blocks, the size of the output data can be reduced.

In the above embodiments, the time of the emission of a light beam is mainly recorded as the precise time when distance measurement is performed. As another embodiment, a time associated with exposure period in which the image sensor 120 receives reflected light may also be recorded as the precise time of distance measurement.

<Supplement>

(1) The above embodiments describe an example of generating point cloud data by using distance data measured by a plurality of distance measurement apparatuses and time information attached to the distance data as an example of a process for combining the distance data measured by the distance measurement apparatuses. However, the signal processing using output data is not limited to a process for combining the above distance data. The signal processing using output data may be performed by the server 500 illustrated in Fig. 2 or by a signal processing circuit not illustrated which is provided in the moving body 300 or the stationary object 400. The signal processing using output data may also be processed by the signal processing circuit 160 provided in the distance measurement apparatus 100 or 100A.

(2) The above embodiments give an example of the case where measurement time information is attached to distance data or three-dimensional point cloud data measured by emitting a light beam. However, the distance data or three-dimensional point cloud data to which the measurement time information is attached may also be data measured by a distance measurement apparatus having a different configuration from the distance measurement apparatus described in the above embodiments. For example, the data may also be data measured by a distance measurement apparatus that measures distance by using radio waves such as millimeter waves, or data measured by a distance measurement apparatus that measures distance by using a two-dimensional image acquired by one or multiple cameras.

Also, with regard to data measured by a distance measurement apparatus that measures distance by using radio waves such as millimeter waves, a plurality of distance measurement data or three-dimensional point cloud data generated from a signal received by one or a plurality of receiving antennas on the basis of a radio-wave beam emitted from one or a plurality of transmitting antennas at the same time may be stored as a single block. In this case, measurement time information such as the emission time of the radio-wave beam or the reception time of a reflected beam may be attached to the data for each block.

In this way, the method and device for generating distance measurement data described in the embodiments of the present disclosure are applicable to any active distance measurement system that measures distance by emitting electromagnetic waves, such as light or radio waves for example. According to the present configuration, time information in smaller units of data is attached to the output data compared to the case of attaching singular measurement time information to distance measurement data or point cloud data for the entire region targeted for distance measurement. Consequently, in the case of using the output data to execute signal processing such as combining the output data with other data, effects such as simplifying the processing and improving the quality or reliability of the processing result can be obtained. In particular, rather than attaching precise time information to each point, time difference information with a smaller data size is attached to each point or each block. With this arrangement, the size of the output data can be reduced.

(3) Some of the multiple aspects included in the present disclosure are described below by way of example.

A data generation apparatus according to one aspect included in the present disclosure generates three-dimensional data, the three-dimensional data including first measurement data measured in a first period and second measurement data measured in a second period, the first measurement data including measurement data indicating the positions or distances of a plurality of points measured by emitting one or a plurality of beams, the data generation apparatus including a processor and a memory connected to the processor, wherein the processor generates time data indicating a reference time and a time difference for each of the plurality of points, and outputs the three-dimensional data containing the time data, the time data being determined on the basis of the emission time of a beam emitted to measure the plurality of points.

A data processing apparatus according to one aspect included in the present disclosure processes three-dimensional data, the three-dimensional data including first measurement data measured in a first period and second measurement data measured in a second period, the first measurement data including measurement data indicating the positions or distances of a plurality of points measured by emitting one or a plurality of beams, the data processing apparatus including a processor and a memory connected to the processor, wherein the processor reads out the three-dimensional data stored in the memory, the three-dimensional data includes time data indicating a reference time and a time difference for each of the plurality of points, and uses the time data to generate second three-dimensional data, the time data being determined on the basis of the emission time of a beam emitted to measure the plurality of points.

Industrial Applicability

The technology according to the present disclosure is broadly usable in apparatuses and systems that measure distance. For example, the technology according to the present disclosure may be used as a component of a light detection and ranging (LiDAR) system.

Reference Signs List

| 100 | distance measurement apparatus |
|---|---|
| 110 | beam scanner |
| 120 | image sensor |
| 130 | control circuit |
| 140 | clock |
| 150 | recording medium |
| 160 | signal processing circuit |
| 161 | distance measurement unit |
| 162 | depth map generation unit |
| 163 | point cloud data generation unit |
| 164 | time determination unit |
| 169 | output unit |
| 190 | processor |
| 200 | point cloud data acquisition system |
| 300 | moving body |
| 310 | distance measurement sensor |
| 320 | communication circuit |
| 400 | stationary object |
| 410 | distance measurement sensor |
| 420 | communication circuit |
| 500 | server |
| 520 | processor |
| 540 | recording medium |
| 600 | network |
| 700 | self-driving control system |
| 710 | information processing apparatus |
| 720 | recording medium |
| 800 | vehicle control system |

**Claims**

1.  A distance measurement apparatus comprising:

    a light emitter that emits a plurality of light beams toward a scene in different directions and at different timings;
    a light receiver that includes at least one light-receiving element and detects reflected light from the scene produced by the emission of each light beam with the at least one light-receiving element; and
    a signal processing circuit that generates and outputs, for each frame, output data including measurement data indicating positions or distances of a plurality of points in the scene on a basis of a signal outputted by the light receiver, wherein
    the output data includes

    reference time data indicating a reference time determined for each frame, and
    time difference data determined for each point, the time difference data indicating a difference from the reference time, and

    the number of light beams emitted in a period in which a single frame of output data is generated is different for each frame.

2.  The distance measurement apparatus according to Claim 1, wherein
    the time difference data for each point indicates a difference between the reference time and a time at which the light beam used to acquire the measurement data for the point was emitted or a time at which the light beam was detected.

3.  The distance measurement apparatus according to Claim 1 or 2, wherein
    the light receiver includes an array of a plurality of light-receiving elements arranged two-dimensionally, and detects reflected light from the scene produced by the emission of each light beam with the plurality of light-receiving elements.

**4.** The distance measurement apparatus according to Claim 3, wherein
the output data includes data of a plurality of blocks, each block including the measurement data for a subset of points from among the plurality of points, and individual time difference data indicating the difference from the reference time is recorded for each block as the time difference data for each point in the block.

**5.** The distance measurement apparatus according to Claim 3 or 4, wherein
the reference time of each frame is a time when a first light beam was emitted from among the plurality of light beams emitted to acquire the measurement data for the frame.

**6.** The distance measurement apparatus according to Claim 5, wherein
the time difference data for each point indicates a difference between an emission time of a light beam emitted to acquire measurement data for the point and an emission time of a light beam emitted to acquire the measurement data for another preceding point for which measurement data was acquired.

**7.** The distance measurement apparatus according to any of Claims 3 to 6, wherein

the light emitter emits the plurality of light beams on a fixed time interval during distance measurement operations for each frame,
the reference time of each frame is set to an emission time of the light beam emitted first to acquire the measurement data for the frame, and
the time difference data for each point in the frame includes data indicating an order of light beams emitted to acquire the measurement data for the point and data indicating the time interval of the plurality of light beams.

**8.** The distance measurement apparatus according to any of Claims 1 to 7, wherein
the signal processing circuit generates point cloud data including information about three-dimensional coordinates of the plurality of points as the output data.

**9.** The distance measurement apparatus according to any of Claims 1 to 7, wherein
the signal processing circuit generates depth map data expressing a distance distribution of the plurality of points as the output data.

**10.** The distance measurement apparatus according to any of Claims 1 to 9, wherein

the differential time data for each point is smaller in size than the reference time data for each frame, and
the reference time data expresses the time difference in units of microseconds or in units of nanoseconds.

**11.** The distance measurement apparatus according to Claim 3, wherein

each of the plurality of points corresponds to at least one of the plurality of light-receiving elements, and
the output data indicates a correspondence relationship between the time difference data and the plurality of light-receiving elements.

**12.** An information processing method comprising:

acquiring first output data and second output data, the first output data including first measurement data indicating positions or distances of a plurality of points in a scene and also including reference time data indicating a reference time determined for each frame and time difference data determined for each point, the time difference data indicating a difference from the reference time, and the second output data including second measurement data indicating positions or distances of another plurality of points in the scene, with time data attached to the second measurement data for each of the other plurality of points; and
generating three-dimensional point cloud data by respectively extracting, from the first output data and the second output data, the first measurement data for one or more points and the second measurement data for one or more points having time data included within a predetermined time range, and combining the extracted data into the same coordinate system.

**13.** An information processing apparatus comprising:
a processor configured to:

acquire first output data and second output data, the first output data including first measurement data indicating positions or distances of a plurality of points in a scene and also including reference time data indicating a reference time determined for each frame and time difference data determined for each point, the time difference data indicating a difference from the reference time, and the second output data including second measurement data indicating positions or distances of another plurality of points in the scene, with time data attached to the second measurement data for each of the other plurality of points; and

generate three-dimensional point cloud data by respectively extracting, from the first output data and the second output data, the first measurement data for one or more points and the second measurement data for one or more points having time data included within a predetermined time range, and combining the extracted data into the same coordinate system.

14. An information processing apparatus comprising:
a processor configured to:

acquire light reception data detected at different timings by a light receiver including at least one light-receiving element;

generate, for each frame, measurement data indicating positions or distances of a plurality of points in a scene on a basis of the light reception data; and

generate output data including the measurement data, reference time data indicating a reference time determined for each frame, and time difference data determined for each point, the time difference data indicating a difference from the reference time, wherein

a number of the time difference data included in the output data of a single frame is different for each frame.

# FIG. 1

# FIG. 2

# FIG. 3

| SERVER | MOVING BODY | STATIONARY OBJECT |
|---|---|---|
| RECEIVE ← | MEASURE DISTANCE TRANSMIT POSITION, TIME | |
| RECEIVE ← | | MEASURE DISTANCE TRANSMIT POSITION, TIME |
| CONVERT COORDINATES/ADJUST TIME | | |
| RECORD | | |
| RECEIVE ← | MEASURE DISTANCE TRANSMIT POSITION, TIME | |
| RECEIVE ← | | MEASURE DISTANCE TRANSMIT POSITION, TIME |
| CONVERT COORDINATES/ADJUST TIME | | |
| RECORD | | |
| ⋮ | ⋮ | ⋮ |
| ANALYSIS REQUEST → RECEIVE ANALYSIS REQUEST | | |
| EXTRACT SPATIOTEMPORAL REGION | | |
| ← OUTPUT DATA | | |

EP 4 020 015 A1

# FIG. 4

# FIG. 5

# FIG. 6A

| IMAGE SENSOR POSITION | IMAGE SENSOR NORMAL DIRECTION | IMAGE SENSOR ANGLE OF FIELD |
|---|---|---|
| $(x1, y1, z1)$ | $(X1, Y1, Z1)$ | $(w1, h1)$ |

41

FIG. 6B

| EMISSION DIRECTION | TIME |
|---|---|
| $(x_1, y_1)$ $(x_1, z_1)$ | $hh_{11}:mm_{11}',ss_{11}'',ms_{11}.\mu s_{11}$<br>$hh_{12}:mm_{12}',ss_{12}'',ms_{12}.\mu s_{12}$<br>$hh_{13}:mm_{13}',ss_{13}'',ms_{13}.\mu s_{13}$<br>⋮ |

FIG. 6C

| FRAME | REFERENCE TIME |
|---|---|
| 1<br>2<br>3<br>⋮ | $hh_1:mm_1',ss_1'',ms_1.\mu s_1$<br>$hh_2:mm_2',ss_2'',ms_2.\mu s_2$<br>$hh_3:mm_3',ss_3'',ms_3.\mu s_3$<br>⋮ |

FIG. 6D

| PIXEL | DISTANCE | TIME DIFFERENCE |
|---|---|---|
| $(0, 0)$ | $dd_{00}$ | $\mu s_{00}$ |
| $(0, 1)$ | $dd_{01}$ | $\mu s_{01}$ |
| $(0, 2)$ | $dd_{02}$ | $\mu s_{02}$ |
| $(0, 3)$ | $dd_{03}$ | $\mu s_{03}$ |
| ⋮ | ⋮ | ⋮ |

# FIG. 7A

| | | | | |
|---|---|---|---|---|
| FIXED VALUES | POSITION 3 byte | DIRECTION 3 byte | ANGLE OF FIELD 2 byte | DATE 2 byte |

FRAME 1 | REFERENCE TIME 5 byte | NUMBER OF POINTS 1 byte | POSITION 3 byte | . . . . | POSITION 3 byte | TIME DIFFERENCE 1 byte | . . . . | TIME DIFFERENCE 1 byte

NUMBER OF POINTS          NUMBER OF POINTS

FRAME 2 | REFERENCE TIME 5 byte | NUMBER OF POINTS 1 byte | POSITION 3 byte | . . . . | POSITION 3 byte | TIME DIFFERENCE 1 byte | . . . . | TTIME DIFFERENCE 1 byte

NUMBER OF POINTS          NUMBER OF POINTS

# FIG. 7B

| | | | | |
|---|---|---|---|---|
| FIXED VALUES | POSITION 3 byte | DIRECTION 3 byte | ANGLE OF FIELD 2 byte | DATE 2 byte |

FRAME 1 | REFERENCE TIME 5 byte | NUMBER OF POINTS 1 byte | POSITION 3 byte | TIME DIFFERENCE 1 byte | . . . . | POSITION 3 byte | TIME DIFFERENCE 1 byte

POINT 1                    POINT n

FRAME 2 | REFERENCE TIME 5 byte | NUMBER OF POINTS 1 byte | POSITION 3 byte | TIME DIFFERENCE 1 byte | . . . . | POSITION 3 byte | TIME DIFFERENCE 1 byte

POINT 1                    POINT n

# FIG. 7C

# FIG. 7D

FIG. 8

FIG. 9

# FIG. 10A

Z
↑
│
X ⊙ →Y

PHASE
SHIFT AMOUNT    0    0    0    0    0    0    0

10

# FIG. 10B

$\alpha_0$

Z
↑
│
X ⊙ →Y

PHASE
SHIFT AMOUNT    0    $\Delta\phi$    $2\Delta\phi$    $3\Delta\phi$    $4\Delta\phi$    $5\Delta\phi$    $6\Delta\phi$

10

p

# FIG. 11

# FIG. 12

# FIG. 13

# FIG. 14

## FIG. 15

## FIG. 16

# FIG. 17A

(a) PROJECTION

$T_0$

(b) REFLECTED LIGHT

$T_d$

(c) EXPOSURE PERIOD 1

$Q_1$

(d) EXPOSURE PERIOD 2

$Q_2$

$T_d$

# FIG. 17B

$T_0$　　　$T_0$

PROJECTION

$T_d$

REFLECTED LIGHT

EXPOSURE PERIOD

$Q_1$　　　$Q_2$

CHARGE OUTPUT

# FIG. 18A

(a)  PROJECTION

(b)  REFLECTED LIGHT

(c)  EXPOSURE PERIOD 1

(d)  EXPOSURE PERIOD 2

(e)  EXPOSURE PERIOD 3

(f)  SHUTTER OPEN PERIOD

(g)  CHARGE OUTPUT

UNIT PERIOD

# FIG. 18B

PROJECTION

REFLECTED LIGHT

EXPOSURE PERIOD

CHARGE OUTPUT

P1          P2          P3

UNIT PERIOD

**FIG. 19**

START

DETERMINE REFERENCE TIME — S1110

RECORD REFERENCE TIME — S1120

PROJECTION IN ALL DIRECTIONS COMPLETE? — S1130

yes →

no ↓

DETERMINE PROJECTION DIRECTION — S1140

RECORD LIGHT SOURCE INFORMATION — S1150

EXPOSURE IN ALL EXPOSURE PERIODS COMPLETE? — S1160

yes →

no ↓

DETERMINE EXPOSURE PERIOD — S1170

CUMULATIVE COUNT SATISFIED? — S1180

yes →

no ↓

PROJECT — S1190

EXPOSE — S1200

READ OUT — S1210

CALCULATE DISTANCE — S1220

RECORD DISTANCE — S1230

CALCULATE TIME DIFFERENCE — S1240

RECORD TIME DIFFERENCE — S1250

GENERATE DEPTH MAP DATA — S1260

GENERATE POINT CLOUD DATA — S1270

GENERATE OUTPUT DATA — S1280

OUTPUT — S1290

END

# FIG. 20A

FIXED VALUES: xxx
NUMBER OF BEAMS PER FRAME: N
REFERENCE TIME: YYYY-MM-DD-hh:mm:ss:ms
TIME DIFFERENCE t0: $st_0$ μsec
TIME DIFFERENCE t1: $st_1$ μsec
. . .
TIME DIFFERENCE t(N-1): $st_{N-1}$ μsec
TOTAL NUMBER OF POINTS: NumOfPoint
POINT P0: (x0,y0,z0,t0) * POSITION INFORMATION+TIME DIFFERENCE ID
POINT P1: (x1,y1,z1,t0)
POINT P2: (x2,y2,z2,t1)
. . .
POINT Pn: (xn,yn,zn,t5)
. . .

# FIG. 20B

FIG. 21

START

PROJECTION IN ALL
DIRECTIONS COMPLETE? — S1130

yes / no

DETERMINE PROJECTION DIRECTION — S1140

RECORD LIGHT SOURCE INFORMATION — S1150

EXPOSURE IN ALL
EXPOSURE PERIODS COMPLETE? — S1160

no / yes

DETERMINE EXPOSURE PERIOD — S1170

CUMULATIVE COUNT SATISFIED? — S1180

yes / no

DETERMINE
REFERENCE TIME — S2120

RECORD
REFERENCE TIME — S2130

CALCULATE/RECORD
TIME DIFFERENCE — S2140

GENERATE DEPTH
MAP DATA — S1260

GENERATE POINT
CLOUD DATA — S1270

GENERATE OUTPUT DATA — S1280

OUTPUT — S1290

END

PROJECT — S1190

EXPOSE — S1200

READ OUT — S1210

CALCULATE DISTANCE — S1220

RECORD DISTANCE — S1230

RECORD TIME — S2110

## FIG. 22

| PIXEL | DISTANCE | TIME | TIME DIFFERENCE |
|---|---|---|---|
| (0, 0) | $dd_{00}$ | $hh_{11}{:}mm_{11}',ss_{11}'',ms_{11}{\cdot}\mu s_{11}$ | $\mu s_{111}$ |
| (0, 1) | $dd_{01}$ | $hh_{11}{:}mm_{11}',ss_{11}'',ms_{11}{\cdot}\mu s_{11}$ | $\mu s_{111}$ |
| (0, 2) | $dd_{02}$ | $hh_{11}{:}mm_{11}',ss_{11}'',ms_{11}{\cdot}\mu s_{11}$ | $\mu s_{111}$ |
| (0, 3) | $dd_{03}$ | $hh_{12}{:}mm_{12}',ss_{12}'',ms_{12}{\cdot}\mu s_{12}$ | $\mu s_{121}$ |
| ⋮ | ⋮ | ⋮ | ⋮ |

## FIG. 23

| PROJECTION INDEX | EMISSION DIRECTION | TIME | TIME FOR EACH EMISSION DIRECTION | TIME DIFFERENCE |
|---|---|---|---|---|
| 1 | $(x_1, y_1)$ $(x_1, z_1)$ | $hh_{11}{:}mm_{11}',ss_{11}'',ms_{11}{\cdot}\mu s_{11}$ $hh_{12}{:}mm_{12}',ss_{12}'',ms_{12}{\cdot}\mu s_{12}$ $hh_{13}{:}mm_{13}',ss_{13}'',ms_{13}{\cdot}\mu s_{13}$ ⋮ | $hh_{11}{:}mm_{11}',ss_{11}'',ms_{11}{\cdot}\mu s_{11}$ | $\mu s_{00}$ |
| 2 | $(x_2, y_2)$ $(x_2, z_2)$ | $hh_{21}{:}mm_{21}',ss_{21}'',ms_{21}{\cdot}\mu s_{21}$ $hh_{22}{:}mm_{22}',ss_{22}'',ms_{22}{\cdot}\mu s_{22}$ $hh_{23}{:}mm_{23}',ss_{23}'',ms_{23}{\cdot}\mu s_{23}$ | $hh_{21}{:}mm_{21}',ss_{21}'',ms_{21}{\cdot}\mu s_{21}$ | $\mu s_{01}$ |
| ⋮ | ⋮ | ⋮ | ⋮ | ⋮ |

## FIG. 24A

FIXED VALUES

| POSITION 3 byte | DIRECTION 3 byte | ANGLE OF FIELD 2 byte |
|---|---|---|

FRAME 1

| REFERENCE TIME 8 byte | TIME INTERVAL 1 byte | NUMBER OF POINTS 1 byte | POSITION 3 byte | . . . . | POSITION 3 byte | PROJECTION INDEX 1 byte | . . . . | PROJECTION INDEX 1 byte |
|---|---|---|---|---|---|---|---|---|

NUMBER OF POINTS      NUMBER OF POINTS

FRAME 2

| REFERENCE TIME 8 byte | TIME INTERVAL 1 byte | NUMBER OF POINTS 1 byte | POSITION 3 byte | . . . . | POSITION 3 byte | PROJECTION INDEX 1 byte | . . . . | PROJECTION INDEX 1 byte |
|---|---|---|---|---|---|---|---|---|

NUMBER OF POINTS      NUMBER OF POINTS

⋮

# FIG. 24B

| FIXED VALUES | POSITION 3 byte | DIRECTION 3 byte | ANGLE OF FIELD 2 byte |
| --- | --- | --- | --- |

| FRAME 1 | REFERENCE TIME 8 byte | TIME INTERVAL 1 byte | NUMBER OF POINTS 1 byte | POSITION 3 byte | PROJECTION INDEX 1 byte | · · · · | POSITION 3 byte | PROJECTION INDEX 1 byte |
| --- | --- | --- | --- | --- | --- | --- | --- | --- |

POINT 1          POINT n

| FRAME 2 | REFERENCE TIME 8 byte | TIME INTERVAL 1 byte | NUMBER OF POINTS 1 byte | POSITION 3 byte | PROJECTION INDEX 1 byte | · · · · | POSITION 3 byte | PROJECTION INDEX 1 byte |
| --- | --- | --- | --- | --- | --- | --- | --- | --- |

POINT 1          POINT n

# FIG. 24C

| FIXED VALUES | POSITION 3 byte | DIRECTION 3 byte | ANGLE OF FIELD 2 byte |
| --- | --- | --- | --- |

| FRAME 1 | REFERENCE TIME 8 byte | TIME INTERVAL 1 byte | DISTANCE 1 byte | · · · · | DISTANCE 1 byte | PROJECTION INDEX 1 byte | · · · · | PROJECTION INDEX 1 byte |
| --- | --- | --- | --- | --- | --- | --- | --- | --- |

NUMBER OF PIXELS          NUMBER OF PIXELS

| FRAME 2 | REFERENCE TIME 8 byte | TIME INTERVAL 1 byte | DISTANCE 1 byte | · · · · | DISTANCE 1 byte | PROJECTION INDEX 1 byte | · · · · | PROJECTION INDEX 1 byte |
| --- | --- | --- | --- | --- | --- | --- | --- | --- |

NUMBER OF PIXELS          NUMBER OF PIXELS

# FIG. 24D

| FIXED VALUES | POSITION 3 byte | DIRECTION 3 byte | ANGLE OF FIELD 2 byte |
|---|---|---|---|

FRAME 1

| REFERENCE TIME 8 byte | TIME INTERVAL 1 byte | DISTANCE 1 byte | PROJECTION INDEX 1 byte | .... | DISTANCE 1 byte | PROJECTION INDEX 1 byte |
|---|---|---|---|---|---|---|

PIXEL 1      PIXEL m

FRAME 2

| REFERENCE TIME 8 byte | TIME INTERVAL 1 byte | DISTANCE 1 byte | PROJECTION INDEX 1 byte | .... | DISTANCE 1 byte | PROJECTION INDEX 1 byte |
|---|---|---|---|---|---|---|

PIXEL 1      PIXEL m

# FIG. 25

```
FIXED VALUES: xxx
NUMBER OF BEAM DIRECTIONS PER FRAME: N
REFERENCE TIME: YYYY-MM-DD-hh:mm:ss:ms
BEAM TIME INTERVAL tt μsec
TOTAL NUMBER OF POINTS: NumOfPoint
POINT P0: (x0,y0,z0,001) * POSITION INFORMATION + PROJECTION INDEX
POINT P1: (x1,y1,z1,001)
POINT P2: (x2,y2,z2,002)
...
POINT Pn: (xn,yn,zn,N)
...
```

# FIG. 26

130

120 — IMAGE SENSOR      CONTROL CIRCUIT

161a — DATA PIXEL EXTRACTION UNIT ⟷ BLOCK RANGE STORAGE UNIT — 161b

161c — DISTANCE CALCULATION UNIT

161

150 — RECORDING MEDIUM

## FIG. 27

| BEAM DIRECTION | PIXEL RANGE | REFERENCE PIXEL RANGE |
|---|---|---|
| $(x_1, y_1)$ $(x_1, z_1)$ | $(xs_{10}, 0)$ $(xe_{10}, 0)$<br>$(xs_{11}, 1)$ $(xe_{11}, 1)$<br>$(xs_{12}, 2)$ $(xe_{12}, 2)$<br>⋮<br>$(xs_{1ye}, ye)(xe_{1ye}, ye)$ | $(xs_1, ys_1)$ $(xe_1, ye_1)$ |
| $(x_2, y_1)$ $(x_2, z_1)$ | $(xs_{20}, 0)$ $(xe_{20}, 0)$<br>$(xs_{21}, 1)$ $(xe_{21}, 1)$<br>$(xs_{22}, 2)$ $(xe_{22}, 2)$<br>⋮<br>$(xs_{2ye}, ye)(xe_{2ye}, ye)$ | $(xs_2, ys_2)$ $(xe_2, ye_2)$ |
| ⋮ | ⋮ | ⋮ |

## FIG. 28

| BEAM DIRECTION | PIXEL RANGE | TIME DIFFERENCE |
|---|---|---|
| $(x_1, y_1)$ $(x_1, z_1)$ | $(xs_1, ys_1)$ $(xe_1, ye_1)$ | $\mu s_{111}$ |
| $(x_2, y_1)$ $(x_2, z_1)$ | $(xs_2, ys_2)$ $(xe_2, ye_2)$ | $\mu s_{112}$ |
| $(x_3, y_1)$ $(x_3, z_1)$ | $(xs_3, ys_3)$ $(xe_3, ye_3)$ | $\mu s_{113}$ |
| ⋮ | ⋮ | ⋮ |
| $(x_1, y_2)$ $(x_1, z_1)$ | $(xs_{21}, ys_{21})(xe_{21}, ye_{21})$ | $\mu s_{211}$ |
| $(x_2, y_2)$ $(x_2, z_1)$ | $(xs_{22}, ys_{22})(xe_{21}, ye_{21})$ | $\mu s_{212}$ |
| $(x_3, y_2)$ $(x_3, z_1)$ | $(xs_{23}, ys_{23})(xe_{31}, ye_{31})$ | $\mu s_{213}$ |
| ⋮ | ⋮ | ⋮ |

FIG. 29

START

DETERMINE REFERENCE TIME ~ S1110

RECORD REFERENCE TIME ~ S1120

S1130
PROJECTION IN ALL DIRECTIONS COMPLETE? — yes / no

DETERMINE PROJECTION DIRECTION ~ S1140

RECORD LIGHT SOURCE INFORMATION ~ S1150

S1160
EXPOSURE IN ALL EXPOSURE PERIODS COMPLETE? — yes / no

DETERMINE EXPOSURE PERIOD ~ S1170

S1180
CUMULATIVE COUNT SATISFIED? — yes / no

PROJECT ~ S1190

EXPOSE ~ S1200

READ OUT ~ S1210

DETERMINE BLOCK ~ S3110

CALCULATE TIME DIFFERENCE FOR BLOCK ~ S3120

RECORD TIME DIFFERENCE FOR BLOCK ~ S3130

CALCULATE DISTANCE ~ S3140

RECORD DISTANCE ~ S3150

GENERATE DEPTH MAP DATA ~ S3160

GENERATE POINT CLOUD DATA ~ S3170

GENERATE OUTPUT DATA ~ S3180

OUTPUT ~ S1290

END

# FIG. 30A

| FIXED VALUES | POSITION 3 byte | DIRECTION 3 byte | ANGLE OF FIELD 2 byte | DATE 2 byte |
|---|---|---|---|---|

| FRAME 1 | REFERENCE TIME 5 byte | NUMBER OF POINTS 1 byte | TIME DIFFERENCE 1 byte | POSITION 3 byte | ... | POSITION 3 byte | ..... | NUMBER OF POINTS 1 byte | TIME DIFFERENCE 1 byte | POSITION 3 byte | ... | POSITION 3 byte |

NUMBER OF POINTS WITHIN BLOCK          NUMBER OF POINTS WITHIN BLOCK

BLOCK 1                                BLOCK N

| FRAME 1 | REFERENCE TIME 5 byte | NUMBER OF POINTS 1 byte | TIME DIFFERENCE 1 byte | POSITION 3 byte | ... | POSITION 3 byte | ..... | NUMBER OF POINTS 1 byte | TIME DIFFERENCE 1 byte | POSITION 3 byte | ... | POSITION 3 byte |

# FIG. 30B

| FIXED VALUES | POSITION 3 byte | DIRECTION 3 byte | ANGLE OF FIELD 2 byte | NUMBER OF BLOCKS 1 byte | DATE 2 byte |
|---|---|---|---|---|---|

| FRAME 1 | REFERENCE TIME 5 byte | CORRESPONDING POINTS 2 byte | .... | CORRESPONDING POINTS 2 byte | TIME DIFFERENCE 1 byte | ..... | TIME DIFFERENCE 1 byte | POSITION 3 byte | ..... | POSITION 3 byte |

NUMBER OF BLOCKS          NUMBER OF BLOCKS          TOTAL NUMBER OF POINTS

| FRAME 1 | REFERENCE TIME 5 byte | CORRESPONDING POINTS 2 byte | .... | CORRESPONDING POINTS 2 byte | TIME DIFFERENCE 1 byte | ..... | TIME DIFFERENCE 1 byte | POSITION 3 byte | ..... | POSITION 3 byte |

# FIG. 30C

# FIG. 30D

# FIG. 31A

```
FIXED VALUES: xxx
NUMBER OF BLOCKS WITHIN FRAME: M
REFERENCE TIME: YYYY-MM-DD-hh:mm:ss:ms
TIME DIFFERENCE t0: st_0 μsec
TIME DIFFERENCE t1: st_1 μsec
        ...
TIME DIFFERENCE t(M-1): st_{M-1} μsec
TOTAL NUMBER OF POINTS: NumOfPoint
POINT P0: (x0,y0,z0,t0) * POSITION INFORMATION+TIME DIFFERENCE ID
POINT P1: (x1,y1,z1,t0)
POINT P2: (x2,y2,z2,t1)
...
POINT Pn: (xn,yn,zn,t5)
...
```

# FIG. 31B

# FIG. 32

○ ～ S1210

DETERMINE PIXEL RANGE WITH
A POSSIBILITY OF RECEIVING LIGHT ～ S5110

EXCLUDE PIXELS FOR WHICH
DISTANCE IS ALREADY STORED ～ S5120

PIXELS THAT RECEIVED
LIGHT EXIST IN RANGE WITH POSSIBILITY
OF RECEIVING LIGHT? ～ S5130 → no

yes

PIXELS THAT RECEIVED
LIGHT DISTRIBUTED WITHIN DESIGNATED
BLOCK SIZE? ～ S5140 → no

yes

SET STANDARD PIXEL RANGE AS
RANGE CORRESPONDING TO
RELEVANT LIGHT BEAM ～ S5150

EXTRACT LARGEST
CONTIGUOUS PORTION OF
LIGHT-RECEIVING PIXELS ～ S5170

RECORD PIXELS THAT
RECEIVED LIGHT AS BLOCK ～ S5160

EXTRACTED PORTION
WITHIN DESIGNATED SIZE? ～ S5180 → no

yes ～ S5190

STORE EXTRACTED
PORTION AS BLOCK

STORE CENTRAL PART OF
EXTRACTED PORTION
AS BLOCK ～ S5200

○ ～ S3120

65

FIG. 33

FIG. 34A

FIG. 34B

FIG. 34C

FIG. 34D

# FIG. 35A

# FIG. 35B

# FIG. 36

# FIG. 37A

DATA SEQUENCE 1

| REFERENCE TIME 8 byte | NUMBER OF BLOCKS 1 byte | NUMBER OF POINTS 1 byte | TIME DIFFERENCE 1 byte | POSITION 3 byte | ... | POSITION 3 byte | ........ | NUMBER OF POINTS 1 byte | TIME DIFFERENCE 1 byte | POSITION 3 byte | ... | POSITION 3 byte |

NUMBER OF POINTS WITHIN BLOCK

BLOCK 1                                    BLOCK N

DATA SEQUENCE 2

| REFERENCE TIME 8 byte | NUMBER OF BLOCKS 1 byte | NUMBER OF POINTS 1 byte | TIME DIFFERENCE 1 byte | POSITION 3 byte | ... | POSITION 3 byte | ........ | NUMBER OF POINTS 1 byte | TIME DIFFERENCE 1 byte | POSITION 3 byte | ... | POSITION 3 byte |

# FIG. 37B

DATA SEQUENCE 1

| REFERENCE TIME 8 byte | NUMBER OF BLOCKS 1 byte | TOTAL NUMBER OF POINTS 1 byte | CORRESPONDING POINTS 2 byte | .... | CORRESPONDING POINTS 2 byte | TIME DIFFERENCE 1 byte | .... | TIME DIFFERENCE 2 byte | POSITION 3 byte | .... | POSITION 3 byte |

NUMBER OF BLOCKS          NUMBER OF BLOCKS          TOTAL NUMBER OF POINTS

DATA SEQUENCE 2

| REFERENCE TIME 8 byte | NUMBER OF BLOCKS 1 byte | TOTAL NUMBER OF POINTS 1 byte | CORRESPONDING POINTS 2 byte | .... | CORRESPONDING POINTS 2 byte | TIME DIFFERENCE 1 byte | .... | TIME DIFFERENCE 2 byte | POSITION 3 byte | .... | POSITION 3 byte |

**EP 4 020 015 A1**

<table>
<tr><td colspan="2" align="center">**INTERNATIONAL SEARCH REPORT**</td><td>International application No.<br>PCT/JP2020/028181</td></tr>
</table>

**A. CLASSIFICATION OF SUBJECT MATTER**
Int.Cl. G01S17/89(2020.01)i, G01S17/87(2020.01)i, G01C3/06(2006.01)i,
G06T7/00(2017.01)i
FI: G01S17/89, G01S17/87, G01C3/06120Q, G01C3/06140, G06T7/00650B
According to International Patent Classification (IPC) or to both national classification and IPC

**B. FIELDS SEARCHED**

Minimum documentation searched (classification system followed by classification symbols)
Int.Cl. G01S7/00-7/64, G01S13/00-17/95, G01C3/06, G06T1/00, G06T7/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-32291 A (FUJITSU LIMITED) 28.02.2019 (2019-02-28), paragraphs [0011]-[0054], fig. 1-6 | 1-14 |
| A | US 2015/0160332 A1 (DIGITAL SIGNAL CORPORATION) 11.06.2015 (2015-06-11), paragraphs [0083]-[0095], fig. 9, 10 | 1-14 |
| A | JP 2011-170599 A (MITSUBISHI ELECTRIC CORPORATION) 01.09.2011 (2011-09-01), paragraphs [0024]-[0027], fig. 5 | 1-14 |
| A | WO 2016/181618 A1 (PANASONIC INTELLECTUAL PROPERTY MANAGEMENT CO., LTD.) 17.11.2016 (2016-11-17), paragraphs [0041]-[0076], fig. 6, 7 | 1-14 |
| A | JP 2018-77071 A (RICOH CO., LTD.) 17.05.2018 (2018-05-17), paragraphs [0069]-[0118], fig. 13-20 | 1-14 |
| A | JP 2019-101000 A (KONICA MINOLTA, INC.) 24.06.2019 (2019-06-24), paragraphs [0024]-[0045], fig. 1-3 | 1-14 |

☐ Further documents are listed in the continuation of Box C.    ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18.08.2020 | Date of mailing of the international search report<br>01.09.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

71

| INTERNATIONAL SEARCH REPORT | International application No. |
| Information on patent family members | PCT/JP2020/028181 |

```
JP 2019-32291 A    28.02.2019    (Family: none)

US 2015/0160332 A1 11.06.2015    (Family: none)

JP 2011-170599 A   01.09.2011    (Family: none)

WO 2016/181618 A1  17.11.2016    US 2018/0137760 A1
                                 paragraphs [0050]-[0081],
                                 fig. 6, 7
                                 EP 3296762 A1

JP 2018-77071 A    17.05.2018    (Family: none)

JP 2019-101000 A   24.06.2019    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011170599 A
- JP 2009294128 A
- JP 2016224062 A
- US 20180217258 A